(19) Europäisches Patentamt
European Patent Office
Office européen des brevets

(11) EP 4 304 180 A1

(12) # EUROPEAN PATENT APPLICATION
published in accordance with Art. 153(4) EPC

(43) Date of publication:
**10.01.2024 Bulletin 2024/02**

(21) Application number: **22763656.0**

(22) Date of filing: **07.03.2022**

(51) International Patent Classification (IPC):
***H04N 19/597*** *(2014.01)* ***H04N 19/513*** *(2014.01)*
***H04N 19/139*** *(2014.01)* ***H04N 19/96*** *(2014.01)*
***G06T 9/40*** *(2006.01)*

(52) Cooperative Patent Classification (CPC):
**G06T 9/40; H04N 19/139; H04N 19/513; H04N 19/597; H04N 19/96**

(86) International application number:
**PCT/KR2022/003206**

(87) International publication number:
**WO 2022/186675 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.03.2021 KR 20210029535**

(71) Applicant: **LG Electronics Inc.**
**Yeongdeungpo-gu**
**Seoul 07336 (KR)**

(72) Inventors:
- **OH, Hyunmook**
  **Seoul 06772 (KR)**
- **HUR, Hyejung**
  **Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57) A point cloud data transmission method according to embodiments may comprise the steps of: encoding point cloud data into geometry data; encoding attribute data of the point cloud data on the basis of the geometry data; and transmitting the encoded geometry data, the encoded attribute data, and signaling information.

FIG. 17

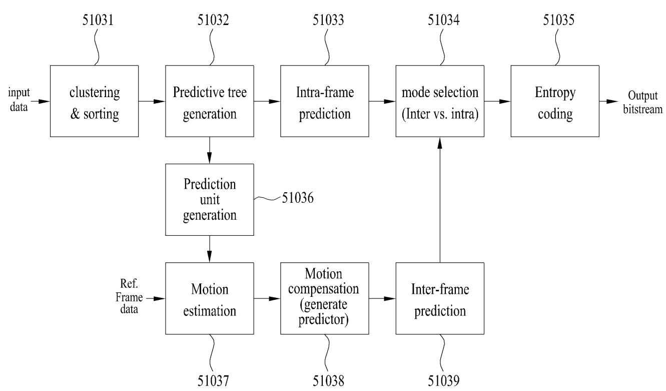




Processed by Luminess, 75001 PARIS (FR)

## Description

## TECHNICAL FIELD

Embodiments relate to a method and apparatus for processing point cloud content.

## BACKGROUND

Point cloud content is content represented by a point cloud, which is a set of points belonging to a coordinate system representing a three-dimensional space(or volume). The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

## DISCLOSURE

## TECHNICAL PROBLEM

An object of the present disclosure devised to solve the above-described problems is to provide a point cloud data transmission device, a point cloud data transmission method, a point cloud data reception device, and a point cloud data reception method for efficiently transmitting and receiving a point cloud.

Another object of the present disclosure is to provide a point cloud data transmission device, a point cloud data transmission method, a point cloud data reception device, and a point cloud data reception method for addressing latency and encoding/decoding complexity.

Another object of the present disclosure is to provide a point cloud data transmission device, a point cloud data transmission method, a point cloud data reception device, and a point cloud data reception method for efficiently transmitting and receiving a geometry-point cloud compression (G-PCC) bitstream.

Another object of the present disclosure is to provide a point cloud data transmission device, a point cloud data transmission method, a point cloud data reception device, and a point cloud data reception method for performing transmission/reception of point cloud data through compression by applying a predication-based coding method so as to efficiently compress the point cloud data.

Another object of the present disclosure is to provide a point cloud data transmission device and transmission method, and a point cloud data reception device and reception method for increasing a compression efficiency by removing redundant information based on an inter-frame correlation when point cloud data is compressed by applying a prediction-based coding method.

The technical scope of the embodiments is not limited to the aforementioned technical objects, and may be extended to other technical objects that may be inferred by those skilled in the art based on the entire contents disclosed herein.

## TECHNICAL SOLUTION

To achieve these objects and other advantages and in accordance with the purpose of the disclosure, as embodied and broadly described herein, a point cloud data transmission method includes encoding geometry data of point cloud data, encoding attribute data of the point cloud data based on the geometry data, and transmitting the encoded geometry data, the encoded attribute data, and signaling information.

The encoding of the geometry data includes generating a predictive tree based on the geometry data, dividing the predictive tree into a plurality of prediction units, generating a predictor as a set of points having characteristics similar to points of a current prediction unit within the reference frame by performing motion estimation and motion compensation on a reference frame, for each prediction unit, generating a predictive tree in the predictor, and acquiring residual information by performing inter-frame prediction based on the predictive tree of the predictor and inter-prediction mode information.

The performing of the inter-frame prediction further includes performing the inter-frame prediction by selecting a point similar to a point to be encoded of the current prediction unit from the predictor.

The encoding of the geometry data further includes acquiring residual information by performing intra-frame prediction based on the predictive tree and intra prediction mode information.

The encoding of the geometry data includes selecting final prediction mode information by comparing inter-prediction mode information applied to the inter-frame prediction with intra prediction mode information applied to the intra-frame prediction, and entropy-coding residual information acquired based on information for identifying the selected prediction mode information and the selected prediction mode information and transmitting the entropy-coded information.

The signaling information includes prediction-based geometry compression information, and the prediction-based geometry compression information includes at least one of information for identifying the reference frame, motion vector (MV) information acquired through the motion estimation, bounding box size information of the predictor, information for identifying the point selected from the predictor, or the inter-prediction mode information.

According to embodiments, a point cloud data transmission device includes a geometry encoder configured to encode geometry data of point cloud data, an attribute encoder configured to encode attribute data of the point cloud data based on the geometry data, and a transmitter configured to transmit the encoded geometry data, the encoded attribute data, and signaling information.

The the geometry encoder includes a first predictive tree generation unit configured to generate a predictive tree based on the geometry data, a prediction unit generation unit configured to divide the predictive tree into a plurality of prediction units, a predictor generation unit configured to generate a predictor as a set of points having characteristics similar to points of a current prediction unit within the reference frame by performing motion estimation and motion compensation on a reference frame, for each prediction unit, a second predictive tree generation unit configured to generate a predictive tree in the predictor, and an inter-frame prediction unit configured to acquire residual information by performing inter-frame prediction based on the predictive tree of the predictor and inter-prediction mode information.

The inter-frame prediction unit performs the inter-frame prediction by selecting a point similar to a point to be encoded of the current prediction unit from the predictor.

The geometry encoder further includes an intra-frame prediction unit configured to acquire residual information by performing intra-frame prediction based on a point to be encoded of the predictive tree and intra prediction mode information.

The geometry encoder further includes a mode selection unit configured to select final prediction mode information by comparing inter-prediction mode information applied to the inter-frame prediction with intra prediction mode information applied to the intra-frame prediction, and an entropy coder configured to entropy-code residual information acquired based on information for identifying the selected prediction mode information and the selected prediction mode information and transmitting the entropy-coded information.

The signaling information includes prediction-based geometry compression information, and the prediction-based geometry compression information includes at least one of information for identifying the reference frame, motion vector (MV) information acquired through the motion estimation, bounding box size information of the predictor, information for identifying the point selected from the predictor, or the inter-prediction mode information.

According to embodiments, a point cloud data reception method includes receiving geometry data, attribute data, and signaling information, decoding the geometry data based on the signaling information, decoding the attribute data based on the signaling information and the decoded geometry data, and rendering point cloud data restored from the decoded geometry data and the decoded attribute data based on the signaling information.

The decoding of the geometry data includes generating a predictor within the reference frame by performing motion compensation on a reference frame based on the signaling information, generating a predictive tree from the predictor based on the signaling information, generating prediction information by performing inter-frame prediction based on prediction mode information included in the signaling information and the predictive tree of the predictor, and restoring the geometry data based on the prediction information and the received and decoded residual information.

The performing of the inter-frame prediction further includes selecting a point to be used in the inter-frame prediction from the predictor based on the signaling information.

The decoding of the geometry data further includes determining whether the prediction mode information included in the signaling information is inter-prediction mode information or intra prediction mode information.

The signaling information includes prediction-based geometry compression information, and the prediction-based geometry compression information includes at least one of information for identifying the reference frame, motion vector (MV) information for the motion compensation, bounding box size information of the predictor, information for selecting a point from the predictor, or the inter-prediction mode information.

The decoding of the geometry data further includes, based on coordinate conversion being performed by a transmitting side, correcting a prediction error of the geometry data based on first residual information included in the signaling information and correcting an error occurring during a process of the coordinate conversion by applying second residual information included in the signaling information to the corrected geometry data.

## ADVANTAGEOUS EFFECTS

A point cloud data transmission method, a point cloud data transmission device, a point cloud data reception method, and a point cloud data reception device according to embodiments may provide a good-quality point cloud service.

A point cloud data transmission method, a point cloud data transmission device, a point cloud data reception method, and a point cloud data reception device according to embodiments may achieve various video codec methods.

A point cloud data transmission method, a point cloud data transmission device, a point cloud data reception method, and a point cloud data reception device according to embodiments may provide universal point cloud content such as a self-driving service (or an autonomous driving service).

A point cloud data transmission method, a point cloud data transmission device, a point cloud data reception method, and a point cloud data reception device according to embodiments may perform space-adaptive partition of point cloud data for independent encoding and decoding of the point cloud data, thereby improving parallel processing and providing scalability.

A point cloud data transmission method, a point cloud data transmission device, a point cloud data reception method, and a point cloud data reception device according to embodiments may perform encoding and decoding by partitioning the point cloud data in units of tiles and/or slices, and signal necessary data therefore, thereby improving encoding and decoding performance of the point cloud.

A point cloud data transmission method, a point cloud data transmission device, a point cloud data reception method, and a point cloud data reception device according to embodiments may provide fast encoding and decoding in an environment requiring low delay or low latency by using a prediction-based point cloud compression method.

A point cloud data transmission method and transmission device, and an encoder according to embodiments efficiently compress point cloud data by additionally considering inter-frame prediction as well as intra-frame prediction.

A point cloud data reception method and reception device, and a decoder according to embodiments efficiently restore point cloud data by receiving a bitstream including point cloud data and performing inter-frame prediction based on signaling information in a bitstream.

A point cloud data transmission method and transmission device according to embodiments increase a compression efficiency of point cloud data by removing redundant information based on an inter-frame correlation when there is similarity of adjacent inter-frame point distribution if the point cloud data includes consecutive frames.

## BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 illustrates an exemplary point cloud content providing system according to embodiments.
FIG. 2 is a block diagram illustrating a point cloud content providing operation according to embodiments.
FIG. 3 illustrates an exemplary process of capturing a point cloud video according to embodiments.
FIG. 4 illustrates an exemplary block diagram of point cloud video encoder according to embodiments.
FIG. 5 illustrates an example of voxels in a 3D space according to embodiments.
FIG. 6 illustrates an example of octree and occupancy code according to embodiments.
FIG. 7 illustrates an example of a neighbor node pattern according to embodiments.
FIG. 8 illustrates an example of point configuration of a point cloud content for each LOD according to embodiments.
FIG. 9 illustrates an example of point configuration of a point cloud content for each LOD according to embodiments.
FIG. 10 illustrates an example of a block diagram of a point cloud video decoder according to embodiments.
FIG. 11 illustrates an example of a point cloud video decoder according to embodiments.
FIG. 12 illustrates a configuration for point cloud video encoding of a transmission device according to embodiments.
FIG. 13 illustrates a configuration for point cloud video decoding of a reception device according to embodiments.
FIG. 14 illustrates an exemplary structure operatively connectable with a method/device for transmitting and receiving point cloud data according to embodiments.
FIG. 15 is a diagram illustrating an example of a predictive tree structure according to embodiments
FIG. 16 is a diagram illustrating another example of a point cloud transmission device according to embodiments.
FIG. 17 is a diagram showing an example of a detailed block diagram of a geometry encoder according to embodiments.
FIG. 18 is a diagram showing an example of a relationship between a current frame and a previous frame according to embodiments.
FIG. 19 is a diagram showing an example of generating a predictor to which motion is applied according to embodiments.
FIGS. 20(a) and 20(b) are diagrams showing an example of generating a predictive tree of a tree according to embodiments.
FIG. 21 is a diagram simultaneously expressing a predictor and a PU for which a difference by a motion vector (MV) is compensated according to embodiments.

FIG. 22 is a diagram showing an example of an inter-frame correlation relationship between points belonging to a PU and points belonging to a predictor.

FIG. 23 is a flowchart showing an example of a geometry encoding process for performing prediction-based compression according to embodiments.

FIG. 24 shows an example of a bitstream structure of point cloud data for transmission/reception according to embodiments.

FIG. 25 is a diagram showing an example of a syntax structure of a geometry data unit (geometry_data_unit()) according to embodiments.

FIG. 26 is a diagram showing an example of a syntax structure of a geometry data unit header(geometry_data_unit_header()) according to embodiments.

FIG. 27 is a diagram showing an example of a syntax structure of geometry predictive tree data (geometry_predtree_data()) according to embodiments.

FIG. 28 is a diagram showing an example of a syntax structure of geometry_predtree_node(PtnNodeIdx) according to embodiments.

FIG. 29 is a diagram showing an example of a syntax structure of predtree_inter_prediction () according to embodiments.

FIG. 30 is a diagram showing another example of a point cloud data reception device according to embodiments.

FIG. 31 is a detailed block diagram showing an example of the geometry decoder 61003 according to embodiments.

FIG. 32 is a flowchart showing an example of a geometry decoding method for restoring compressed geometry based on prediction according to embodiments.

FIG. 33 is a flowchart of a point cloud data transmission method according to embodiments.

FIG. 34 is a flowchart of a point cloud data reception method according to embodiments.

**BEST MODE**

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. It should be noted that the following examples are only for embodying the present disclosure and do not limit the scope of the present disclosure. What can be easily inferred by an expert in the technical field to which the present disclosure belongs from the detailed description and examples of the present disclosure is to be interpreted as being within the scope of the present disclosure.

The detailed description in this present specification should be construed in all aspects as illustrative and not restrictive. The scope of the disclosure should be determined by the appended claims and their legal equivalents, and all changes coming within the meaning and equivalency range of the appended claims are intended to be embraced therein.

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in this specification have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings. In addition, the following drawings and detailed description should not be construed as being limited to the specifically described embodiments, but should be construed as including equivalents or substitutes of the embodiments described in the drawings and detailed description.

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (for example, a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (for example, a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component or module) separate from the receiver 10005.

The point cloud video decoder 10006 decodes the bitstream containing the point cloud video data. The point cloud video decoder 10006 may decode the point cloud video data according to the method by which the point cloud video data is encoded (for example, in a reverse process of the operation of the point cloud video encoder 10002). Accordingly, the point cloud video decoder 10006 may decode the point cloud video data by performing point cloud decompression coding, which is the inverse process of the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like).

The dotted lines in FIG. 1 represent a process of transmitting the feedback information secured by the renderer 10007. The point cloud content providing system may process (encode/decode) point cloud data based on the feedback information. Accordingly, the point cloud video decoder 10006 may perform a decoding operation based on the feedback information. The reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmitting device, a transmitter, a transmission system, or the like, and the reception device 10004 may be called a decoder, a receiving device, a receiver, a reception system, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (for example, the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (for example, values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, or the like, and the attribute may be called attributes, attribute information, attribute data, or the like. The point cloud content providing system (for example, the point cloud transmission device 10000 or the point cloud video acquisition unit 10001) may secure point cloud data from information (e.g., depth information, color information, etc.) related to the acquisition process of the point cloud video.

The point cloud content providing system (for example, the transmission device 10000 or the point cloud video encoder 10002) according to the embodiments may encode the point cloud data (20001). The point cloud content providing system may encode the point cloud data based on point cloud compression coding. As described above, the point cloud data may include the geometry and attributes of a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (for example, the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (for example, signaling information related to the geometry encoding and the attribute encoding). The point cloud content providing system may encapsulate a bitstream that carries the encoded point cloud data and transmit the same in the form of a file or segment.

The point cloud content providing system (for example, the reception device 10004 or the receiver 10005) according to the embodiments may receive the bitstream containing the encoded point cloud data. In addition, the point cloud content providing system (for example, the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (for example, the reception device 10004 or the point cloud video decoder 10005) may decode the point cloud video data based on the signaling information related to encoding of the point cloud video data contained in the bitstream. The point cloud content providing system (for example, the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (for example, the reception device 10004 or the point cloud video decoder 10005) may reconstruct the point cloud video based on the positions according to the reconstructed geometry and the decoded attributes.

The point cloud content providing system according to the embodiments (for example, the reception device 10004 or the renderer 10007) may render the decoded point cloud data (20004). The point cloud content providing system (for example, the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (for example, the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in FIG. 3, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform postprocessing on the captured image and/or video. In other words, the point cloud content providing system may remove an unwanted area (for example, a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

FIG. 4 illustrates an exemplary point cloud video encoder according to embodiments.

FIG. 4 shows an example of the point cloud video encoder 10002 of FIG. 1. The point cloud video encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 to 2, the point cloud video encoder may perform geometry encoding and attribute encoding. The geometry encoding is performed before the attribute encoding.

The point cloud video encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometric reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (for example, a three-dimensional space represented by an XYZ coordinate system). The position information in the three-dimensional space according to the embodiments may be referred to as geometry information.

The quantizer 40001 according to the embodiments quantizes the geometry information. For example, the quantizer 40001 may quantize the points based on a minimum position value of all points (for example, a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. The voxelization means a minimum unit representing position information in 3D spacePoints of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center point of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD). The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud video encoder of FIG. 4 may be implemented by hardware including one or more processors or integrated circuits configured to communicate with one or more memories included in the point cloud content providing apparatus, software, firmware, or a combination thereof. The one or more processors may perform at least one of the operations and/or functions of the elements of the point cloud video encoder of FIG. 4 described above. Additionally, the one or more processors may operate or execute a set of software programs and/or instructions for performing the operations and/or functions of the elements of the point cloud video encoder of FIG. 4. The one or more memories according to the embodiments may include a high speed random access memory, or include a non-volatile memory (e.g., one or more magnetic disk storage devices, flash memory devices, or other non-volatile solidstate memory devices).

FIG. 5 shows an example of voxels according to embodiments.

FIG.5 shows voxels positioned in a 3D space represented by a coordinate system composed of three axes, which are the X-axis, the Y-axis, and the Z-axis. As described with reference to FIG. 4, the point cloud video encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and ($2^d$, $2^d$, $2^d$) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

FIG. 6 shows an example of an octree and occupancy code according to embodiments.

As described with reference to FIGS. 1 to 4, the point cloud content providing system (point cloud video encoder 10002) or the octree analyzer 40002 of the point cloud video encoder performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and ($2^d$, $2^d$, $2^d$). Here, $2^d$ may be set to a value constituting the smallest bounding box surrounding all points of the point cloud content (or point cloud video). Here, d denotes the depth of the octree. The value of d is determined in Equation 1. In Equation 1, ($x^{int}_n$, $y^{int}_n$, $z^{int}_n$) denotes the positions (or position values) of quantized points.

Equation 1

$$d = Ceil\left(Log2\left(Max\left(x_n^{int}, y_n^{int}, z_n^{int}, n = 1, \ldots, N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud video encoder (for example, the arithmetic encoder 40004) according to the embodiments may perform entropy encoding on the occupancy codes. In order to increase the compression efficiency, the point cloud video encoder may perform intra/inter-coding on the occupancy codes. The reception device (for example, the reception device 10004 or the point cloud video decoder 10006) according to the embodiments reconstructs the octree based on the occupancy codes.

The point cloud video encoder (for example, the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud video encoder according to the embodiments may skip voxelization and perform direct coding to directly code the positions of points included in the specific region. The coordinates of a direct coding point according to the embodiments are referred to as direct coding mode (DCM). The point cloud video encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud video decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud video encoder (or the arithmetic encoder 40004) according to the embodiments may perform entropy coding on the positions (or position values) of the points.

The point cloud video encoder (for example, the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud video encoder according to the embodiments may specify a level at which trisoup geometry encoding is to be applied. For example, when the specific level is equal to the depth of the octree, the point cloud video encoder does not operate in the trisoup mode. In other words, the point cloud video encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud video encoder according to the embodiments may perform entropy encoding on the starting point (x, y, z) of the edge, the direction vector ($\Delta x$, $\Delta y$, $\Delta z$) of the edge, and the vertex position value (relative position value within the edge). When the trisoup geometry encoding is applied, the point cloud video encoder according to the embodiments (for example, the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed according to Equation 2 by: i) calculating the centroid value of each vertex, ii) subtracting the center value from each vertex value, and iii) estimating the sum of the squares of the values obtained by the subtraction.

Equation 2

$$① \begin{bmatrix} \mu_x \\ \mu_y \\ \mu_z \end{bmatrix} = \frac{1}{n}\sum_{i=1}^{n} \begin{bmatrix} x_i \\ y_i \\ z_i \end{bmatrix} \quad ② \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad ③ \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

Then, the minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table 1 below shows a combination of vertices for creating a triangle according to the number of the vertices. The vertices are ordered from 1 to n. The table 1 below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

[Table 1] Triangles formed from vertices ordered 1,...,n

[Table 1]

| ***n*** | **Triangles** |
|---|---|
| **3** | (1,2,3) |
| **4** | (1,2,3), (3,4,1) |
| **5** | (1,2,3), (3,4,5), (5,1,3) |
| **6** | (1,2,3), (3,4,5), (5,6,1), (1,3,5) |
| **7** | (1,2,3), (3,4,5), (5,6,7), (7,1,3), (3,5,7) |
| **8** | (1,2,3), (3,4,5), (5,6,7), (7,8,1), (1,3,5), (5,7,1) |
| **9** | (1,2,3), (3,4,5), (5,6,7), (7,8,9), (9,1,3), (3,5,7), (7,9,3) |
| **10** | (1,2,3), (3,4,5), (5,6,7), (7,8,9), (9,10,1), (1,3,5), (5,7,9), (9,1,5) |
| **11** | (1,2,3), (3,4,5), (5,6,7), (7,8,9), (9,10,11), (11,1,3), (3,5,7), (7,9,11), (11,3,7) |
| **12** | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud video encoder according to the embodiments may voxelize the refined vertices. In addition, the point cloud video encoder may perform attribute encoding based on the voxelized positions (or position values).

FIG. 7 shows an example of a neighbor node pattern according to embodiments.

In order to increase the compression efficiency of the point cloud video, the point cloud video encoder according to the embodiments may perform entropy coding based on context adaptive arithmetic coding.

As described with reference to FIGS. 1 to 6, the point cloud content providing system or the point cloud video encoder 10002 of FIG. 1, or the point cloud video encoder or arithmetic encoder 40004 of FIG. 4 may perform entropy coding on the occupancy code immediately. In addition, the point cloud content providing system or the point cloud video encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud video encoder according to the embodiments determines occupancy of neighbor nodes of each node of the octree and obtains a value of a neighbor pattern. The neighbor node pattern is used to infer the occupancy pattern of the node. The up part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The down part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud video encoder may perform coding according to the neighbor node pattern value (for example, when the neighbor node pattern value is 63, 64 kinds of coding may be performed). According to embodiments, the point cloud video encoder may reduce coding complexity by changing a neighbor node pattern value (for example, based on a table by which 64 is changed to 10 or 6).

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud video encoder (for example, the LOD generator 40009) may classify (reorganize or group) points by LOD. FIG. 8 shows the point cloud content corresponding to LODs. The leftmost picture in FIG. 8 represents original point cloud content. The second picture from the left of FIG. 8 represents distribution of the points in the lowest LOD, and the rightmost picture in FIG. 8 represents distribution of the points in the highest LOD. That is, the points in the lowest LOD are sparsely distributed, and the points in the highest LOD are densely distributed. That is, as the LOD rises in the direction pointed by the arrow indicated at the bottom of FIG. 8, the space (or distance) between points is narrowed.

FIG. 9 illustrates an example of point configuration for each LOD according to embodiments.

As described with reference to FIGS. 1 to 8, the point cloud content providing system, or the point cloud video encoder (for example, the point cloud video encoder 10002 of FIG. 1, the point cloud video encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud video encoder, but also by the point cloud video decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud video encoder according to the embodiments may perform prediction transform coding based on LOD, lifting transform coding based on LOD, and RAHT transform coding selectively or in combination.

The point cloud video encoder according to the embodiments may generate a predictor for points to perform prediction transform coding based on LOD for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud video encoder according to the embodiments (for example, the coefficient quantizer 40011) may quantize and inversely quantize the residual of each point (which may be called residual attribute, residual attribute value, attribute prediction residual value or prediction error attribute value and so on) obtained by subtracting a predicted attribute (or attribute value) each point from the attribute (i.e., original attribute value) of each point. The quantization process performed for a residual attribute value in a transmission device is configured as shown in table 2. The inverse quantization process performed for a residual attribute value in a reception device is configured as shown in table 3.

[Table 2]

| |
|---|
| int PCCQuantization(int value, int quantStep) { |
| if( value >=0) { |
| return floor(value / quantStep + 1.0 / 3.0); |
| } else { |
| return -floor(-value / quantStep + 1.0 / 3.0); |
| } |
| } |

Table 3

| |
|---|
| int PCCInverseQuantization(int value, int quantStep) { |
| if( quantStep ==0) { |
| return value; |
| } else { |
| return value * quantStep; |
| } |
| } |

When the predictor of each point has neighbor points, the point cloud video encoder (e.g., the arithmetic encoder 40012) according to the embodiments may perform entropy coding on the quantized and inversely quantized residual attribute values as described above. When the predictor of each point has no neighbor point, the point cloud video encoder according to the embodiments (for example, the arithmetic encoder 40012) may perform entropy coding on the attributes of the corresponding point without performing the above-described operation.

The point cloud video encoder according to the embodiments (for example, the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.
2) Lift prediction process: Subtract the value obtained by multiplying the attribute value of the point by the weight from the existing attribute value to calculate a predicted attribute value.
3) Create temporary arrays called updateweight and update and initialize the temporary arrays to zero.
4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.
5) Lift update process: Divide the attribute values of the update array for all predictors by the weight value of the updateweight array of the predictor index, and add the existing attribute value to the values obtained by the division.
6) Calculate predicted attributes by multiplying the attribute values updated through the lift update process by the weight updated through the lift prediction process (stored in the QW) for all predictors. The point cloud video encoder (e.g., coefficient quantizer 40011) according to the embodiments quantizes the predicted attribute values. In addition, the point cloud video encoder (e.g., the arithmetic encoder 40012) performs entropy coding on the quantized attribute values.

The point cloud video encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud video encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

Equation 3 below represents a RAHT transformation matrix. In Equation 3, $g_{l_{x,y,z}}$ denotes the average attribute value of voxels at level *l*. $g_{l\,x,y,z}$ may be calculated based on $g_{l+1\ 2x,y,z}$ and $g_{l+1_{2x+1,y,z}}$. The weights for $g_{l_{2x,y,z}}$ and $g_{l_{2x+1,y,z}}$ are $w1 = w_{l_{2x,y,z}}$ and $w2 = w_{l_{2x+1,y,z}}$.

Equation 3

$$\begin{bmatrix} g_{l-1\ x,y,z} \\ h_{l-1_{x,y,z}} \end{bmatrix} = T_{w1\,w2} \begin{bmatrix} g_{l\ 2x,y,z} \\ g_{l_{2x+1,y,z}} \end{bmatrix} \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1_{x,y,z}}$ is a low-pass value and is used in the merging process at the next higher level. $h_{l-1_{x,y,z}}$ denotes high-pass coefficients. The high-pass coefficients at each step are quantized and subjected to entropy coding (for example, encoding by the arithmetic encoder 40012). The weights are calculated as $w_{l-1\ x,y,z} = w_{l_{2x,y,z}} + w_{l_{2x+1,y,z}}$. The root node is created through the $g_{1_{0,0,1}}$ and $g_{1\ 0,0,1}$ as Equation 4.

Equation 4

$$\begin{bmatrix} gDC \\ h_{0_{0,0,0}} \end{bmatrix} = T_{w1000\ w1001} \begin{bmatrix} g_{1\ 0,0,0z} \\ g_{1_{0,0,1}} \end{bmatrix}$$

The value of gDC is also quantized and subjected to entropy coding like the high-pass coefficients.

FIG. 10 illustrates a point cloud video decoder according to embodiments.

The point cloud video decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud video decoder may receive a geometry bitstream and an attribute bitstream contained in one or more bitstreams. The point cloud video decoder includes a geometry decoder and an attribute decoder. The geometry decoder performs geometry decoding on the geometry bitstream and outputs decoded geometry. The attribute decoder performs attribute decoding on the attribute bitstream based on the decoded geometry, and outputs decoded attributes. The decoded geometry and decoded attributes are used to reconstruct point cloud content (a decoded point cloud).

FIG. 11 illustrates a point cloud video decoder according to embodiments.

The point cloud video decoder illustrated in FIG. 11 is an example of the point cloud video decoder illustrated in FIG. 10, and may perform a decoding operation, which is an inverse process of the encoding operation of the point cloud video encoder illustrated in FIGS. 1 to 9.

As described with reference to FIGS. 1 and 10, the point cloud video decoder may perform geometry decoding and attribute decoding. The geometry decoding is performed before the attribute decoding.

The point cloud video decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct decoding and trisoup geometry decoding. The direct decoding and trisoup geometry decoding are selectively applied. The geometry decoding is not limited to the above-described example, and is performed as an inverse process of the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the inverse process of the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud video encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud video encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud video encoder.

Although not shown in the figure, the elements of the point cloud video decoder of FIG. 11 may be implemented by hardware including one or more processors or integrated circuits configured to communicate with one or more memories included in the point cloud content providing apparatus, software, firmware, or a combination thereof. The one or more processors may perform at least one or more of the operations and/or functions of the elements of the point cloud video decoder of FIG. 11 described above. Additionally, the one or more processors may operate or execute a set of software programs and/or instructions for performing the operations and/or functions of the elements of the point cloud video decoder of FIG. 11.

FIG. 12 illustrates a transmission device according to embodiments.

The transmission device shown in FIG. 12 is an example of the transmission device 10000 of FIG. 1 (or the point cloud video encoder of FIG. 4). The transmission device illustrated in FIG. 12 may perform one or more of the operations and methods the same as or similar to those of the point cloud video encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquisition unit 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 12002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud video encoder (or the octree analyzer 40002) described with reference to FIGS. 4 and 6. Details are the same as those described with reference to FIGS. 1 to 9.

The surface model processor 12004 according to the embodiments may perform trigsoup geometry encoding based on a surface model to reconstruct the positions of points in a specific region (or node) on a voxel basis. The surface model processor 12004 may perform an operation and/or method the same as or similar to the operation and/or method of the point cloud video encoder (for example, the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. The detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. The detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 40012.

The transmission processor 12012 according to the embodiments may transmit each bitstream containing encoded geometry and/or encoded attributes and metadata, or transmit one bitstream configured with the encoded geometry and/or the encoded attributes and the metadata. When the encoded geometry and/or the encoded attributes and the metadata according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS or tile inventory) for signaling of a tile level, and slice data. The slice data may include information about one or more slices. One slice according to embodiments may include one geometry bitstream $Geom0^0$ and one or more attribute bitstreams $Attr0^0$ and $Attr1^0$.

The slice is a series of a syntax element representing in whole or in part of the coded point cloud frame.

The TPS according to the embodiments may include information about each tile (for example, coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

FIG. 13 illustrates a reception device according to embodiments.

The reception device illustrated in FIG. 13 is an example of the reception device 10004 of FIG. 1 (or the point cloud video decoder of FIGS. 10 and 11). The reception device illustrated in FIG. 13 may perform one or more of the operations and methods the same as or similar to those of the point cloud video decoder described with reference to FIGS. 1 to 11.

The reception device according to the embodiment includes a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction /lifting/RAHT inverse transform processor 13009, a color inverse transform processor 13010, and/or a renderer 13011. Each element for decoding according to the embodiments may perform an inverse process of the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 1302 according to the embodiments may perform trisoup geometry decoding and related geometry reconstruction (for example, triangle reconstruction, up-sampling, voxelization) based on the surface model method. The surface model processor 1302 performs an operation the same as or similar to that of the surface approximation synthesizer 11002 and/or the geometry reconstructor 11003.

The inverse quantization processor 1305 according to the embodiments may inversely quantize the decoded geometry.

The metadata parser 1306 according to the embodiments may parse metadata contained in the received point cloud data, for example, a set value. The metadata parser 1306 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transformer 13009 according to the embodiments may process the reconstructed geometry and the inversely quantized attributes. The prediction/lifting/RAHT inverse transform processor 1301 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

FIG. 14 shows an exemplary structure operatively connectable with a method/device for transmitting and receiving point cloud data according to embodiments.

The structure of FIG. 14 represents a configuration in which at least one of a server 17600, a robot 17100, a self-driving vehicle 17200, an XR device 17300, a smartphone 17400, a home appliance 17500, and/or a head-mount display (HMD) 17700 is connected to a cloud network 17100. The robot 17100, the self-driving vehicle 17200, the XR device 17300, the smartphone 17400, or the home appliance 17500 is referred to as a device. In addition, the XR device 17300 may correspond to a point cloud compressed data (PCC) device according to embodiments or may be operatively connected to the PCC device.

The cloud network 17000 may represent a network that constitutes part of the cloud computing infrastructure or is present in the cloud computing infrastructure. Here, the cloud network 17000 may be configured using a 3G network, 4G or Long Term Evolution (LTE) network, or a 5G network.

The server 17600 may be connected to at least one of the robot 17100, the self-driving vehicle 17200, the XR device 17300, the smartphone 17400, the home appliance 17500, and/or the HMD 17700 over the cloud network 17000 and may assist in at least a part of the processing of the connected devices 17100 to 17700.

The HMD 17700 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 17100 to 17500 to which the above-described technology is applied will be described. The devices 17100 to 17500 illustrated in FIG. 14 may be operatively connected/coupled to a point cloud data transmission device and reception according to the above-described embodiments.

<PCC+XR>

The XR/PCC device 17300 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 17300 may analyze 3D point cloud data or image data acquired through various sensors or from an external device and generate position data and attribute data about 3D points. Thereby, the XR/PCC device 17300 may acquire information about the surrounding space or a real object, and render and output an XR object. For example, the XR/PCC device 17300 may match an XR object including auxiliary information about a recognized object with the recognized object and output the matched XR object.

<PCC+Self-driving+XR>

The self-driving vehicle 17200 may be implemented as a mobile robot, a vehicle, an unmanned aerial vehicle, or the like by applying the PCC technology and the XR technology.

The self-driving vehicle 17200 to which the XR/PCC technology is applied may represent a self-driving vehicle provided with means for providing an XR image, or a self-driving vehicle that is a target of control/interaction in the XR image. In particular, the self-driving vehicle 17200 which is a target of control/interaction in the XR image may be distinguished from the XR device 17300 and may be operatively connected thereto.

The self-driving vehicle 17200 having means for providing an XR/PCC image may acquire sensor information from sensors including a camera, and output the generated XR/PCC image based on the acquired sensor information. For example, the self-driving vehicle 17200 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 17200 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud compression data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described with reference to FIGS. 1 to 14, the point cloud data may include a set of points, and each point may have a geometry (referred to also as geometry information) and an attribute (referred to as attribute information). The geometry information represents three-dimensional (3D) position information (xyz) of each point. That is, the position of each point is represented by parameters in a coordinate system representing a 3D space (e.g., parameters (x, y, z) of three axes, X, Y, and Z axes, representing a space). The attribute information represents color (RGB, YUV, etc.), reflectance, normal vectors, transparency, etc. of the point.

According to embodiments, a point cloud data encoding process includes compressing geometry information based on an octree, a trisoup, or prediction and compressing attribute information based on geometry information reconstructed (or decoded) with position information changed through compression. A point cloud data decoding process includes receiving an encoded geometry bitstream and an encoded attribute bitstream, decoding geometry information based on an octree, a trisoup, or prediction, and decoding attribute information based on geometry information reconstructed through a decoding operation.

Since octree-based or trisoup-based geometry information compression according to the embodiments has been described in detail with reference to FIGS. 4 to 13, a description thereof is omitted herein.

Hereinafter, in an embodiment of the present disclosure, prediction-based geometry information compression will be described. Prediction-based geometry information compression according to the embodiments is performed by defining a prediction structure for point cloud data. This structure is represented as a predictive tree having a vertex associated with each point of the point cloud data. The predictive tree may include a root vertex (referred to as a root point) and a leaf vertex (referred to as a leaf point). Points below the root point may have at least one child, and depth increases in the direction of the leaf point. Each point may be predicted from parent nodes in the predictive tree. According to embodiments, each point may be predicted by applying one of various prediction modes (e.g., no prediction, delta prediction, linear prediction, and parallelogram prediction) based on the point positions of a parent, a grandparent, and a great-grandparent of the corresponding point.

At this time, the root node (i.e., initial value) is not predicted, that is, position information of a point (i.e., x, y, z coordinates of the root node) is transmitted to a receiving side without compression. This is because each point in the predictive tree is predicted based on at least one parent node, but the root node does not have a parent node.

That is, the prediction-based geometry compression method may be used to reduce the amount of information transmitted based on the location similarity of consecutive points. At this time, each point may be predicted by applying various prediction modes, and among them, the initial value (e.g., root node) may have not have a point to refer to (i.e., parent point), and thus an actual value (i.e., x, y, z coordinate values) are transmitted to the receiving side without prediction.

FIG. 15 is a diagram illustrating an example of a predictive tree structure according to embodiments.

That is, a final predictive tree may be a process of defining a point to be compressed (as in FIG. 15, a specific point among point cloud sets having relationships such as a parent, a grandparent, and a great-grandparent) as a child and a point to be predicted as a parent and searching for a parent-child relationship and may be constructed as a series of parents and children. For example, if it is assumed that a point 50013 is a point to be compressed, a point 50012 becomes a parent, a point 50011 becomes a grandparent, and a point 50010 becomes a great-grandparent.

According to embodiments, when constructing the predictive tree, a point at which compression starts for the first time is configured as a root vertex (or root node). The point 50011 becomes a child having the root vertex (i.e., the root point) 50010 as a parent. According to embodiments, it may be assumed that the point 50011 has the highest similarity to the root point 50010 based on geometry. According to embodiments, the predictive tree may have a point (or vertex) having a plurality of children. According to embodiments, the number of children may be limited to a certain number (e.g., 3) or may be unlimited. For example, as illustrated, a point (or vertex) 50014 has three children and a point (or vertex) 50015 has two children.

According to embodiments, when the predictive tree is generated as illustrated in FIG. 15, prediction of points may be performed using a prediction mode.

For example, when V(p) is defined as a point to be compressed on the predictive tree, i.e., as a p-th point, V(p-1) is defined as a parent point (or vertex) of the p-th point, V(p-2) is defined as a grandparent point of the p-th point, V(p-3) is defined as a great-grandparent point of the p-th point, and V(p-4) is defined as a great-great grandparent point of the p-th point, a prediction error E for each prediction mode may be defined as indicated in Equation 5 below. For example, 7 prediction error values E may be calculated by applying each of prediction modes of Equation 5 below to the point V(p), and a prediction mode having the smallest prediction error value among the calculated 7 prediction error values may be configured as a prediction mode of the point V(p). For example, when a prediction error value (E = { [ V(p)-V(p-1) ] - a * [ V(p-1) - V(p-2) - b}) obtained by applying the second equation is the smallest value (i.e., a value that minimizes an error) among the 7 prediction error values, the prediction mode of the point (V(p)) may be configured (or selected) as prediction mode 2 (mode 2). In addition, configured (selected) prediction mode information (pred_mode) and coefficient information (e.g., a, b, etc.) of the configured prediction mode may be signaled in signaling information and/or a slice and then transmitted to a reception device. The signaling information may include parameter sets (e.g., an SPS, a GPS, an APS, and a TPS (also referred to as a tile inventory)), a header of a slice carrying corresponding residual information (also referred to as a prediction error), and the like. The prediction mode information is also referred to as intra mode information or an intra prediction mode.

[Equation 5]

$$\text{mode 1: } E = [V(p) - a * V(p-1) - b]$$

$$\text{mode 2: } E = \{ [ V(p)-V(p-1) ] - a * [ V(p-1) - V(p-2) ] - b\}$$

$$\text{mode 3: } E = \{[ V(p) + V(p-1) ]/2 - a * [ V(p-1) + V(p-2) ]/2 - b\}$$

$$\text{mode 4: } E = \{ [ V(p)-V(p-1) ] - a * [ V(p-2) - V(p-3) ] - b\}$$

$$\text{mode 5: } E = \{[ V(p)+V(p-1) +V(p-2)]/3 - a * [ V(p-1) + V(p-2) + V(p-3) ]/3 - b\},$$

$$\text{mode 6: } E = \{[ V(p)+V(p-1) +V(p-2)]/3 - a' * [ V(p-2) + V(p-3) + V(p-4)]/3 - b'\}$$

$$\text{mode 7: } E = \{[ V(p) - 2V(p-1) + V(p-2)] - a * [ V(p-1) - 2V(p-2) + V(p-3) ] - b\}$$

Equation 6 below indicates examples of an equation of calculating prediction information for each prediction mode. For example, if a prediction mode of the point V(p) selected by applying Equation 5 is prediction mode 2 (mode 2), prediction information V'(p) corresponding to prediction mode 2 may be obtained by applying the second equation (V'(p) = (a+1) * V(p-1) - a * V(p-2) + b) of Equation 6. That is, V'(p) that minimizes an error for Equation 5 may be predicted as indicated in Equation 6 below.

[Equation 6]

$$\text{mode 1: } V'(p) = a * V(p-1) + b$$

$$\text{mode 2: } V'(p) = (a+1) * V(p-1) - a * V(p-2) + b$$

$$\text{mode 3: } V'(p) = (a-1) * V(p-1) + a * V(p-2) + 2b$$

$$\text{mode 4: } V'(p) = V(p-1) + a * V(p-2) - a * V(p-3) + b$$

$$\text{mode 5: } V'(p) = (a-1) * V(p-1) + (a-1) * V(p-2) + a * V(p-3) + 3b$$

$$\text{mode 6: } V'(p) = V(p-1) + (a-1) * V(p-2) + a * V(p-3) + a * V(p-4) + 3b$$

$$\text{mode 7: } V'(p) = (a+2) * V(p-1) - (2a + 1) * V(p-2) + a * V(p-3) + b$$

According to embodiments, mode 1 may be referred to as delta prediction, mode 2 or mode 3 may be referred to as linear prediction, and mode 4, mode 5, mode 6, or mode 7 may be referred to as parallelogram predictor or parallelogram prediction.

In the case of nodes (i.e., points) other than a root node, a transmitting side may transmit an intra prediction mode for each point and the difference (this is referred to as residual information or a prediction error) between the position of the point and a predicted position to the receiving side.

In addition, the present disclosure may use and signal a predesignated method for the above-mentioned various prediction methods in a certain unit (e.g., a slice unit, a coding block unit, a frame unit, or N units) or signal a method of minimizing an error for each point. Further, even for prediction coefficients a and b, a predetermined value may be used and signaled, or a method of minimizing an error for each point may be signaled.

At this time, in the case of the root node 50010, conventionally, a separate prediction mode is signaled without prediction, and position information is directly transmitted to the receiving side.

According to embodiments, in prediction-based compression, the accuracy of prediction increases as similar points exist adjacently. Considering this, prediction target points may be rearranged such that similar points are adjacent to each other. Rearrangement may be performed on an entire point cloud, or on a slice-by-slice basis, or both methods may be used.

The prediction-based compression described above is a method for reducing the similarity between points within the current frame.

When point cloud data includes consecutive frames, a correlation between adjacent frames is high. In this specification, a higher coding efficiency (i.e., compression efficiency) may be obtained by removing redundant information based on inter-frame correlation using this feature.

This specification discloses a method for increasing a compression efficiency prediction-based geometry (i.e., position) information when point cloud data includes consecutive frames.

That is, this specification discloses a technology for increasing a compression efficiency of prediction-based coding in compressing geometry information, and in particular, describes a method for increasing a compression efficiency based on information similarity between different frames. In other words, when point cloud data exists on consecutive frames, there may be similarity in point distribution between adjacent frames. In this case, a point cloud data compression efficiency may be increased by removing similarity between frames.

The method proposed in the present disclosure may be generally used in compression of point cloud data, and may also be used in scalable compression of the point cloud data. The prediction-based geometry compression method described in the present disclosure may also be used in prediction-based attribute compression.

According to embodiments, an encoding process of point cloud data may be performed by the point cloud video encoder 10002 of FIG. 1, the encoding 20001 of FIG. 2, the point cloud video encoder of FIG. 4, the point cloud video encoder of FIG. 12, the geometry encoder 51003 of FIG. 16, the geometry encoder of FIG. 17, or the geometry encoding process of FIG. 23. A decoding process of point cloud data according to embodiments may be performed by the point cloud video decoder 10006 of FIG. 1, the decoding 20003 of FIG. 2, the point cloud video decoder of FIG. 11, the point cloud video decoder of FIG. 13, a geometry decoder 61003 of FIG. 30, a geometry decoder of FIG. 31, or a geometry decoding process of FIG. 32. Detailed descriptions of FIGS. 30 to 32 will be given below.

FIG. 16 is a diagram illustrating another example of a point cloud transmission device according to embodiments. Elements of the point cloud transmission device illustrated in FIG. 16 may be implemented by hardware, software, a processor, and/or a combination thereof.

According to embodiments, the point cloud transmission device may include a data input unit 51001, a signaling processor 51002, a geometry encoder 51003, an attribute encoder 51004, and a transmission processor 51005.

FIG. 16 is a diagram illustrating another example of a point cloud transmission device according to embodiments. Elements of the point cloud transmission device illustrated in FIG. 16 may be implemented by hardware, software, a processor, and/or a combination thereof.

According to embodiments, the point cloud transmission device may include a data input unit 51001, a signaling processor 51002, a geometry encoder 51003, an attribute encoder 51004, and a transmission processor 51005.

The geometry encoder 51003 and the attribute encoder 51004 may perform some or all of the operations described in the point cloud video encoder 10002 of FIG. 1, the encoding 20001 of FIG. 2, the point cloud video encoder of FIG. 4, and the point cloud video encoder of FIG. 12.

The data input unit 51001 according to embodiments receives or acquires point cloud data. The data input unit 51001 may perform some or all of operations of the point cloud video acquisition unit 10001 in FIG. 1 or some or all of the operations of the data input unit 12000 in FIG. 12.

The data input unit 51001 outputs positions of points of point cloud data to the geometry encoder 51003, and outputs attributes of points of point cloud data to the attribute encoder 51004. Parameters are output to the signaling processor 51002. In some embodiments, the parameters may be provided to the geometry encoder 51003 and the attribute encoder 51004.

The geometry encoder 51003 configures a predictive tree using the positions of input points and performs geometry compression based on the predictive tree. In this case, prediction for geometry compression may be performed within a frame or between frames. In the present disclosure, the former may be referred to as intra-frame prediction and the latter may be referred to as inter-frame prediction. The geometry encoder 51003 performs entropy encoding on the compressed geometry information and outputs the information to the transmission processor 51005 in the form of a geometry bitstream.

The geometry encoder 51003 reconfigures the geometry information based on positions changed through compression, and outputs the reconfigured (or decoded) geometry information to the attribute encoder 51004.

The attribute encoder 51004 compresses attribute information based on positions at which geometry encoding is not performed and/or reconfigured geometry information. According to an embodiment, the attribute information may be coded using any one or a combination of one or more of RAHT coding, LOD-based predictive transform coding, and lifting transform coding. The attribute encoder 51004 performs entropy encoding on the compressed attribute information and outputs the information to the transmission processor 51005 in the form of an attribute bitstream.

The signaling processor 51002 may generate and/or processes signaling information necessary for encoding/decoding/rendering of the geometry information and attribute information and provide the generated and/or processed signaling information to the geometry encoder 51003, the attribute encoder 51004, and/or the transmission processor 51005. Alternatively, the signaling processor 51002 may be provided with the signaling information generated by the geometry encoder 51003, the attribute encoder 51004, and/or the transmission processor 51005. The signaling processor 51002 may provide information fed back from the reception device (e.g., head orientation information and/or viewport information) to the geometry encoder 51003, the attribute encoder 51004, and/or the transmission processor 51005.

In the present disclosure, the signaling information may be signaled and transmitted in units of a parameter set (an SPS, a GPS, an APS, and a TPS (also referred to as a tile inventory)). In addition, the signaling information may be signaled and transmitted in units of a coding unit (or a compression unit or a prediction unit) of each image, such as a slice or a tile.

The transmission processor 51005 may perform the same or similar operation and/or transmission method as or to the operation and/or transmission method of the transmission processor 12012 of FIG. 12 and perform the same or similar operation and/or transmission method as or to the transmitter 1003 of FIG. 1. For a detailed description, refer to the description of FIG. 1 or FIG. 12 and the detailed description will be omitted herein.

The transmission processor 51005 may multiplex the geometry bitstream output from the geometry encoder 51003, the attribute bitstream output from the attribute encoder 51004, and the signaling bitstream output from the signaling processor 51002 into one bitstream. The multiplexed bitstream may be transmitted without change or transmitted by being encapsulated in a file or a segment. In an embodiment of the present disclosure, the file is in an ISOBMFF file format.

According to embodiments, the file or the segment may be transmitted to the reception device or stored in a digital storage medium (e.g., a USB drive, SD, CD, DVD, Blu-ray disc, HDD, SSD, etc.). The transmission processor 51005 according to the embodiments may communicate with the reception device through wired/wireless communication through a network such as 4G, 5G, or 6G. In addition, the transmission processor 51005 may perform a necessary data processing operation depending on a network system (e.g., a 4G, 5G, or 6G communication network system). The transmission processor 51005 may transmit encapsulated data according to an on-demand scheme.

According to embodiments, information related to geometry prediction is included in GPS and/or TPS and/or geometry data unit (also referred to as a geometry slice bitstream) by at least one of the signaling processor 51002, the geometry encoder 51003, and the transmission processor 51005 and may be transmitted.

FIG. 17 is a diagram showing an example of a detailed block diagram of the geometry encoder 51003 according to embodiments. Elements of a geometry encoder shown in FIG. 17 may be implemented as hardware, software, processor, and/or a combination thereof.

According to embodiments, the geometry encoder 51003 may include a clustering and sorting unit 51031, a predictive tree generation unit 51032, an intra-frame prediction unit 51033, a mode selection unit 51034, an entropy coding unit 51035, a prediction unit generation unit 51036, a motion estimation unit 51037, a motion compensation unit 51038, and an inter-frame prediction unit 51039.

The clustering and sorting unit 51031 may be divided into a clustering unit and a sorting unit. The clustering unit may be referred to as a divider. The execution order of each block may be changed, some blocks may be omitted, and some blocks may be newly added.

According to an embodiment, the clustering and sorting unit 51031 may sort points belonging to the same frame. In this case, position information of the points may be sorted to increase a compression efficiency.

According to another embodiment, the clustering and sorting unit 51031 divides the points of the point cloud data clustered and input based on the position information of the points of the input point cloud data into a plurality of clusters (e.g., slices). In addition, for each cluster, the points of the point cloud data are sorted by considering the geometry information of each point within a cluster.

At this time, the points in each cluster may be sorted to increase a compression efficiency. For example, when data is acquired radially from a rotational axis, such as LiDAR, the coordinate system may be converted into a vertical position, rotational angle, and a distance from an central axis of a laser to perform sorting. In this case, a correlation between points may be increased by determining a direction of sorting to be zigzag.

The predictive tree generation unit 51032 may configure a predictive tree within a frame or each cluster after the clustering and sorting unit 51031 sorts points of point cloud data within a frame or each cluster.

When a predictive tree is generated in the predictive tree generation unit 51032, the intra-frame prediction unit 51033 determines an intra prediction mode of each point by configuring a parent-child relationship for points in the predictive tree, obtains residual information of each point based on the determined intra prediction mode, and then outputs the intra prediction mode information and the residual information to the mode selection unit 51034. According to an embodiment, the intra-frame prediction unit 51033 applies Equations 5 and 6 to each point to determine an intra prediction mode that provides an optimal compression ratio. According to an embodiment, the intra prediction mode of each point may be one of Mode 1 to Mode 7.

The prediction unit generation unit 51036 divides the predictive tree (or points within the predictive tree) generated in the predictive tree generation unit 51032 into a plurality of prediction units (PUs) when inter-frame prediction is allowed. In the present disclosure, a PU is defined as a concept of a subset belonging to a predictive tree.

According to embodiments, in defining a PU, nodes belonging to the PU may have a parent-child relationship with each other, which may follow the parent-child relationship defined in the predictive tree.

In the present disclosure, various methods may be used for defining a PU. For example, a method of classifying a PU as a set of points adjacent to each other in terms of a distance within the predictive tree may be used. As another example, a method of distinguishing PUs according to a certain number when points in the predictive tree are listed in order may be used. In this case, each point may be a one-to-one match with one of the PUs.

According to embodiments, motion existing between frames may be defined in a three-dimensional space such as x, y, and z, and motion between frames may be defined as a global motion vector. Unlike this, it is possible to have regionally different motions within a frame, which may be defined as a local motion vector.

According to embodiments, a motion estimation technology for transferring a motion vector (MV) from the outside (e.g., when data is acquired by a LiDAR mounted on a vehicle, a global motion vector may be obtained through GPS information or the like of the vehicle) or estimating a motion vector (MV) between frames may be used. In addition, the obtained MV may be used to estimate information of the current frame based on information of a previous frame.

That is, motion estimation (ME) may be performed within a search window, which is a range for finding a motion vector (MV) on a reference frame (also referred to as a previous frame) for each PU.

Hereinafter, the motion estimation unit 51037 for estimating a motion vector (MV) will be described.

When a PU is generated in the prediction unit generation unit 51036, the motion estimation unit 51037 performs motion estimation in units of a prediction unit (PU). That is, motion estimation may be performed for each PU.

FIG. 18 is a diagram showing an example of a relationship between a current frame and a previous frame according to embodiments. In FIG. 18, frame n (i.e., the n-th frame) represents a current frame, and frame n-1 represents a previous frame. In particular, FIG. 18 illustrates definition of a k-th PU in a m-th predictive tree belonging to the n-th frame and shows a relationship with the previous frame. FIG. 18 shows an example of a case in which the number of points belonging to a PU is defined as 8. Here, 8 is an example to help those skilled in the art understand, and the number of points belonging to a PU is not limited to 8.

According to embodiments, motion information may be estimated by selecting a part having a similar point distribution within a reference frame (i.e., previous frame) for the k-th PU (i.e., PU k) of the current frame. In this case, the reference frame may be all or part of the coded frame. According to embodiments, a point cloud transmission device or a geometry encoder may include a buffer (not shown) to store a reference frame in which coding is completed. In addition, the buffer may store a plurality of reference frames, and the motion estimation unit 51037 may select one or more of the plurality of reference frames stored in the buffer for motion estimation.

FIG. 18 shows an example of obtaining a set of pints having similar characteristics to PU k within a range (i.e., search window) for finding a motion vector (MV) in the reference frame assuming that the frame n-1 is a selected reference frame. At this time, the search window may be defined as all or part of the reference frame, and may be defined in a 3D space. According to embodiments, a set of points with the most similar characteristics within a search range may be defined as a predictor. The size of a bounding box of the predictor may be the same as or a scaled value of the size of the bounding box of the PU.

According to embodiments, to find the optimal predictor for estimating the PU, a method of minimizing an error among candidates of the size of the PU bounding box within the search window may be used. At this time, the error may be defined as an error for an entire block, and the search window, which is the range for estimating the block error, may be defined as all or part of the frame n-1. The case in which a PU bounding box, a predictor bounding box, a search range, and the like are defined in a 3-dimensional space may be considered, and the PU bounding box, the predictor bounding box, the search range, and the like may have a rectangular prism with a search range in each axis direction.

Equation 7 below is an equation for obtaining a block error.

[Equation 7]

$$\text{block error} = \text{distortion} + \lambda\ \text{rate}$$

In Equation 7, distortion represents a position difference, an attribute difference, or a position and attribute difference between each point in the PU and a point in the nearest predictor. Rate indicates a bitstream size prediction value required when a motion vector (MV) is used. Lambda represents a variable that controls a weight of distortion and rate.

When the motion estimation unit 51037 performs motion estimation, the motion compensation unit 51038 may perform motion compensation based on a motion vector (MV) acquired as a result of motion estimation to generate one predictor having similarity to a PU within a reference frame.

Hereinafter, motion compensation will be described.

According to embodiments, a predictor of a PU to be coded may be estimated in a reference frame based on a motion vector (MV) obtained through motion estimation. At this time, since a receiver is not capable of estimating a PU bounding box, the predictor may be generated using bounding box information, a motion vector (MV), and a reference frame index (ref_frame_id) of the separately delivered predictor.

FIG. 19 is a diagram showing an example of generating a predictor to which motion is applied according to embodiments. FIG. 19 illustrates a case where ref_frame_id = n-1 and predictor bounding box = PU bounding box.

According to embodiments, the position and size of the predictor may be defined based on the motion vector (MV) and the size of the bounding box of the predictor for a reference frame referred to as ref_frame_id. In addition, a predictor to which motion is applied may be generated by applying a motion vector (MV) to points belonging to the predictor.

When the predictor to which motion is applied is generated in the motion compensation unit 51038, the inter-frame prediction unit 51039 performs inter-frame prediction for selecting an inter-frame prediction mode using the predictor. That is, the inter-frame prediction unit 51039 may find a point similar to a compression target point of the current PU within the predictor generated by the motion compensation unit 51038 and perform inter-frame prediction based on this.

Hereinafter, inter-frame prediction mode selection will be described.

Inter-frame prediction mode selection

In the present disclosure, a compression efficiency of points in the current frame may be increased using a predictor estimated based on motion vector (MV). A prediction-based compression method according to embodiments is a method of estimating a current point based on information of an already coded point. At this time, to increase the accuracy of estimation, it is important to use a point most similar to the current point among already coded points. Therefore, when prediction is made based on an inter-frame correlation (e.g., inter-frame prediction), a higher compression efficiency may be obtained than a prediction method based on an intra-frame correlation by using a point similar to the current point in the frame to be compressed (i.e., reference frame) (e.g., intra-frame prediction). In particular, when point information is compressed as it is without using adjacent point information, such as a root of a predictive tree, a compression efficiency may be increased using point information of an adjacent frame (i.e., a reference frame).

1) Configuration of predictive tree of predictor

According to embodiments, the inter-frame prediction unit 51039 may configure a predictive tree between points for a predictor having a minimum MV in a reference frame. At this time, the configuration method may use the existing predictive tree configuration method. For example, the predictive tree of the predictor may be configured according to an order of the Morton code, or may be configured via sequential sorting around one axis at a time according to the priority of the axis, such as the x-axis direction, y-axis direction, and z-axis direction. That is, the predictive tree of the predictor may be generated via sorting in ascending order for z after fixing the xy plane, sorting in ascending order for y after fixing the xz plane, or sorting in ascending order for x after fixing the yz plane. In the present disclosure, the predictive tree generation method may be separately signaled (e.g., predictor_pred_tree_generation_type).

When coordinate conversion is required, sorting may be separately signaled after coordinate conversion (e.g., predictor_coordinate_type). For example, when separate coordinates are used, the predictive tree of the predictor may be configured via sorting according to the priority of the r axis, phi axis, and laser id axis notified through a predefined or separate signal after coordinate conversion for the reference frame. When there is no separate signaling, this may indicate that coordinates used in predictive coding are used without change. In some cases, it may be necessary to transform the reference frame into a coordinate space such as predictive coding coordinates.

FIGS. 20(a) and 20(b) are diagrams showing an example of generating a predictive tree of a tree according to embodiments. In FIGS. 20(a) and 20(b), reference numeral 51040 (i.e., square denoted by solid line) represents a 3D bounding box of a predictor (e.g., predictor k) in a reference frame, and circles represent points belonging to the predictor among points belonging to the reference frame. In FIG. 20(b), a solid line between circles represents a parent-child relationship by the predictive tree generated by the method described above.

2) Inter-frame correlation

According to embodiments, when the predictive tree of the predictor is generated as shown in FIG. 20(b), the inter-frame prediction unit 51039 may assign a relationship with the current point to the points in the predictor. In the present disclosure, as an example, a distance between points is used in defining a relationship between the predictor and the points belonging to the PU.

FIG. 21 is a diagram simultaneously expressing a predictor and a PU for which a difference by a motion vector (MV) is compensated according to embodiments. In FIG. 21, circles without hatching represent points belonging to a k-th PU of a current frame, and circles with hatching represent points belonging to the predictor of the reference frame (i.e., a set of points most similar to the k-th PU). A solid line between circles represents a parent-child relationship by the predictive tree, and a square represents a 3D bounding box of the PU and the predictor. That is, this is an example of the case in which the size of the bounding box of the PU and the size of the bounding box of the predictor are the same. At this time, the predictive tree of the predictor may use a method obtained in a previous step, and the predictive tree of the PU may configure the predictive tree based on a relationship between PU points.

As shown in FIG. 21, when compression is performed using a predictor, which is a set of points most similar to the k-th PU, a node position of the current frame may be estimated as a node position of a reference frame (i.e., previous frame) with a small error.

That is, for points belonging to the PU and points belonging to the predictor, a distance (also referred to as dist) from the point of the PU to the point of the predictor may be defined as in Equation 8 below.

[Equation 8]

$$\mathrm{dist}\,(\mathrm{n},\mathrm{k}) = |\mathrm{p}_{PU}(\mathrm{n}) - \mathrm{p}_{predictor}(m)|$$

In Equation 8, $p_{PU}$ (n) may represent the n-th point belonging to the PU, and $P_{predictor}$ (m) may represent the position/attribute/position and attribute of the m-th point belonging to the predictor. Based on the dist defined above, the dist between each point included in the PU and the point belonging to the predictor may be obtained, and the point of the predictor in which the dist is minimized may be defined as a point with a high correlation with the point of the PU, which may be referred to as an inter-frame correlated point (inter-frame correlated point).

At this time, one-to-one matching between points may not be made according to the predictor. For example, one point in the predictor may have a relationship with multiple points of the PU. Conversely, multiple points in the predictor may have a relationship with one point of the PU.

FIG. 22 is a diagram showing an example of an inter-frame correlation relationship between points belonging to the k-th PU and points belonging to a predictor after motion compensation according to embodiments. FIG. 22 shows an example of a case in which the number of points belonging to a PU is smaller than the number of points belonging to a predictor. In FIG. 22, each point of the predictor connected by a dotted line to each point of the PU represents an inter-frame correlated point.

According to embodiments, a point cloud transmitting device may transfer information about an inter-frame correlated point related to each point (e.g., correlated_point_index). In the present disclosure, various methods may be used to transfer the position of an inter-frame correlated point. For example, the position of each point may be directly transmitted. As another example, when a position on a reference frame may be directly transmitted, a difference value of each point position based on a motion vector (MV) may be delivered to reduce required bits. As another example, a difference between a previous correlated point and a current correlated point may be transferred according to a coding order of the PU points based on the similarity of the position of each point between consecutive correlated points. As another example, based on the predictive tree configuration for the predictor, a point index (or a difference value from the preceding point index) may be transmitted (e.g., correlated_point_index). According to embodiments, in the case of the method of transmitting a point index, the amount of information to be transferred may be the smallest, but a part that needs to generate the predictive tree of the predictor in the point cloud data reception device may be a burden. For example, correlated_point_index may inform an index as a method to specify the point related to the current point for the predictor defined in the reference frame.

As another method, information on an inter-frame correlated point may be inferred. For example, when the n-th point p(n) is coded, inter-frame correlated points c(0) to c(n-1) are calculated for the coded PU points p(0) to p(n-1) within the predictor. In this case, based on parent-child similarity and PU-predictor similarity, a child of c(n-1), which is a correlated point of p(n-1), may be assumed as a correlated point c(n) for p(n). In this case, there is an advantage that information on the correlated point does not need to be transmitted separately, but when the correlation between p(n) and c(n) is not high, the size of residual information (also referred to as residual) may increase.

3) Optimal inter-prediction mode selection

According to embodiments, when the inter-frame correlated point is determined as shown in FIG. 22, the inter-frame prediction unit 51039 may select an optimal inter-prediction mode in which a prediction error (also referred to as residual information) is minimized.

That is, predictor k for the k-th PU may be used to predict each point of the PU. The prediction-based compression method may increase a compression efficiency when a target point (e.g., point of predictor) used in prediction and a point (e.g., point of PU) as a compression target have high similarity in that the current point is predicted based on coded point information. In an embodiment of the present disclosure, as a method for selecting a prediction target point that has a high similarity to a compression target point, a predictor having a minimum block error is selected from a reference frame through motion estimation, and a point (which is called an inter-frame correlated point) having the minimum distance within the predictor (i.e., a distance from the compression target point of the PU) is selected. Therefore, points with high inter-point similarity (inter-frame correlation) existing in different frames may be used for prediction.

At this time, in predicting the n-th point p(n) of the PU, when a point having a correlation (i.e., correlated point) on the reference frame is defined as c(n), a parent of the correlated point is defined as c (n-1), a child of the correlated point is defined as c(n+1), and a parent of the current point p(n) in the PU is defined as p(n-1), inter-frame prediction may be performed through a weighted average according to Equation 9 below.

Equation 9 below is an embodiment for predicting based on inter-frame correlation. In the present disclosure, a wider range (e.g., grandparent or grandchild) or combinations may be used, or as a more general case, a combination (e.g., weighted mean) for a predictor neighbor point with a high correlation may also be used in terms of the distance/attribute/distance and attribute from p(n).

[Equation 9]

InterMode 0: p′(n) = w0*c(n)

: When prediction is performed using an inter-frame correlated point

InterMode 1: p′(n) = w1*c(n) + w2*p(n-1)

: When a prediction value (parent) of a current frame and a prediction value of a reference frame are used

InterMode 2: p′(n) = w3*c(n) + w4*c(n-1)

: When a prediction value of a reference frame and a parent node thereof are used

InterMode 3: p′(n) = w5*c(n) + w6*c(n-1) + w7*c(n+1)

: When a prediction value of a reference frame, a parent node thereof, and/or a child node of the parent node are used

In Equation 9, p'(n) represents a prediction value for p(n), and InterMode 0 to InterMode3 are referred to as inter-prediction mode 0 to inter-prediction mode 3. w0,... ,w7 represents a weight, and may be defined as a function of a scale value, an arbitrary constant, or a reciprocal of a distance between points, and a predetermined value may be used or an arbitrary value may be signaled. For example, in interMode 1, when it is assumed that the prediction value of the current frame has higher accuracy than the prediction value of the reference frame, weights such as w1 = 5/8 and w2 = 3/8 may be used.

According to embodiments, 4 prediction error values may be calculated by applying the inter prediction modes (i.e., InterMode 0 to InterMode3) of Equation 9 to the n-th point p(n) of the PU, respectively, and the inter-prediction mode having the smallest prediction error value among four prediction error values may be configured as the optimal inter-prediction mode of the n-th point p(n) of the PU.

That is, the point cloud transmitting device may select the optimal inter-prediction mode in terms of entropy for the case of using each inter-prediction mode, and transfer information for identifying the selected inter-prediction mode or inter-prediction mode (e.g., interMode) to the point cloud data reception device. For example, interMode may indicate a selected inter-prediction mode when inter-framebased prediction is used. As necessary, weights w0...w7 according to interMode may be transferred through a prediction coefficient coeff.

The point cloud data reception device according to embodiment may select target points (e.g., c(n), c(n-1), c(n+1), and p(n-1)) for predicting a point based on the information for identifying the inter-prediction mode or the inter-prediction mode received from the point cloud transmitting device from the current frame or the reference frame.

In this case, when the optimal inter-prediction mode is selected as described above, the inter-frame prediction unit 51039 may generate a prediction point p'(n) for the current point p(n) based on the selected inter-prediction mode, define a residual for prediction (also referred to as residual information) r(n) according to Equation 10 below, and transfer the information to the point cloud data reception device.

[Equation 10]

Residual r(n) = p(n) − p′(n)

The inter-prediction mode information selected by the inter-frame prediction unit 51039 and the residual information obtained based on the selected inter-prediction mode information may be output to the mode selection unit 51034.

The mode selection unit 51034 selects one of the intra prediction mode information and residual information output from the intra-frame prediction unit 51033 and the inter-prediction mode information and residual information output from the inter-frame prediction unit 51039 and outputs the selected information to the entropy coding unit 51035. In the present disclosure, the intra prediction mode information output from the intra-frame prediction unit 51033 is referred to as the optimal intra prediction mode, bestIntraMode, and the inter-prediction mode information output from the inter-frame prediction unit 51039 is referred to as the optimal inter-prediction mode, bestInterMode.

The mode selection unit 51034 may proactively select inter-prediction mode information and residual information or intra prediction mode information and residual information in units of point/PU/slice/predictive tree/data unit/frame. That is, after intra-frame prediction and inter-frame prediction are performed on a compression target, the mode selection unit 51034 may select one of an intra prediction mode and an inter-prediction mode for optimal prediction. In this case, the unit for selecting the prediction mode may be one of a frame, a data unit, a predictive tree, a slice, a PU, or a point.

According to embodiments, the mode selection unit 51034 may obtain a cost caused when the intra prediction mode is used and when the inter-prediction mode is used as shown in Equation 11 below.

[Equation 11]

$$Cost(mode) = distortion\ (mode) + \lambda * rate\ (mode)$$

In Equation 11, distortion(mode) represents a cost caused due to a difference caused when a mode is used. Rate(mode) represents a bitstream size used due to use of the mode. That is, it indicates a required bitstream size when the mode is used. Lambda represents a variable that controls a weight of distortion and rate.

In this case, the mode may be one of bestInterMode or bestIntraMode, and inter prediction or intra prediction may be selectively determined in units of point/PU/slice/predictive tree/data unit/frame by comparing the costs.

For example, as follows, when the cost in the intra prediction mode is smaller than the cost in the inter-prediction mode, the intra prediction mode may be selected, and if not, the inter-prediction mode may be selected.

If cost (bestIntraMode) < cost (bestInterMode) intra-prediction

Else inter-prediction

When a prediction mode that provides an optimal compression ratio for each node (or point) is determined in the mode selection unit 51034, the determined prediction mode, residual information obtained based on the determined prediction mode (i.e., residual by prediction error), and information such as a motion vector (MV) and a bounding box size are entropy-encoded by the entropy coding unit 51035 and output in the form of a bitstream (also referred to as a geometry bitstream).

FIG. 23 is a flowchart showing an example of a geometry encoding process for performing prediction-based compression according to embodiments.

First, points of point cloud data are sorted and then a predictive tree is generated to configure a parent-child relationship (operation 51051).

For inter-frame prediction, the predictive tree (i.e., points in predictive tree) is divided into a plurality of prediction units (PUs) to generate the Pus (operation 51052).

For each PU, a reference frame for inter-frame prediction is selected (operation 51053), and a motion estimation process of finding a motion vector (MV) with the smallest error in units of predictor size within a search window as a selection range of the motion vector (MV) is performed (operation 51054). In operation 51054, the search window and the size of the predictor may be received for motion estimation.

The motion compensation process may be performed based on the motion vector (MV) selected through the motion estimation, and one predictor having similarity to the current PU is generated based on a reference frame (operation 51055). A predictive tree between points is configured for the generated predictor (operation 51056). In operation 51056, a predictive tree generating method may be received for generating the predictive tree of the predictor.

Within the predictive tree of the predictor, a point most similar to the compression target point of the current PU (which is called an inter-frame correlated point) is found (operation 51057). That is, after specifying each point in the predictive tree of the predictor as an index, the point closest to the compression target point of the current PU is selected in the predictor using a method such as a nearest neighbor search. In the present disclosure, the selected point is referred to as a correlated point or an inter-frame correlated point.

Based on the correlated point found in operation 51057, inter-frame prediction is performed to select an optimal inter-prediction mode, bsetInterMode, and residual information is generated based on the selected inter-prediction mode (operations 51058 to 51060). Here, the residual information is obtained as a difference between a position value of a compression target point (i.e., a point of the current PU) and a position value of the prediction target point (i.e., the correlated point of the predictor). According to embodiments, an inter-prediction mode with the minimum cost may be selected as an optimal inter-prediction mode, bsetInterMode, by comparing costs based on rate distortion for each inter-prediction mode (e.g., InterMode 0 to InterMode 3).

When the predictive tree is generated in operation 51051, intra-frame prediction is performed to select the optimal intra prediction mode and residual information is generated based on the selected intra prediction mode (operations 51062 to 51064). In some embodiments, an intra prediction mode with the minimum cost may be selected as an optimal intra prediction mode (bsetIntraMode) with the minimum cost by comparing costs based on rate distortion for each intra prediction mode (e.g., mode 1 to mode 7).

A mode that generates a low prediction error with a small bit size may be selected as a final prediction mode by comparing the optimal inter-prediction mode and the optimal intra prediction mode (operation 51061). Alternatively, when the cost in the optimal intra prediction mode is smaller than the cost in the optimal inter-prediction mode, the optimal intra prediction mode may be selected, otherwise the optimal inter-prediction mode may be selected.

This process may be performed for all points, and selection of intra-frame prediction or inter-frame prediction may be performed in units of frame/data unit/slice/predictive tree/prediction unit/point.

For parts not described or omitted in FIG. 23, refer to the descriptions of FIGS. 15 to 22.

FIG. 24 shows an example of a bitstream structure of point cloud data for transmission/reception according to embodiments. According to embodiments, a bitstream output from the point cloud video encoder of one of FIGS. 1, 2, 4, 12, and 16 may be in the form of FIG. 24.

According to embodiments, the bitstream of point cloud data provides a tile or a slice to divide and process point cloud data by region. Each region of a bitstream according to embodiments may have different importance. Therefore, when point cloud data is divided into tiles, different filters (encoding methods) and different filter units may be applied to each tile. When point cloud data is divided into slices, different filters and different filter units may be applied to each slice.

The transmitting device according to the embodiments may transmit point cloud data according to the bitstream structure as shown in FIG. 24, and thus provided may be provided a method of applying different encoding operations according to importance and using an encoding method with good quality in an important area. In addition, efficient encoding and transmission according to the characteristics of point cloud data may be supporte4d and an attribute value according to user requirements may be provided.

The receiving device according to embodiments receives point cloud data according to the bitstream structure as shown in FIG. 24, and thus different filtering methods (decoding methods) may be applied for each region (region divided into tiles or slices) instead of using a complicated decoding (filtering) method for entire point cloud data according to the processing capacity of the receiving device. Accordingly, a better image quality in an important region to a user and appropriate latency on a system may be ensured.

When a geometry bitstream, an attribute bitstream, and/or a signaling bitstream (or signaling information) according to embodiments constitute one bitstream (or G-PCC bitstream) as shown in FIG. 24, the bitstream may include one or more sub bitstreams. A bitstream according to embodiments may include a sequence parameter set (SPS) for signaling of a sequence level, a geometry parameter set (GPS) for signaling of geometry information coding,one or more attribute parameter sets ($APS_0$ and $APS_1$)) for signaling of attribute information coding, a tile inventory for signaling at a tile level (also referred to as a TPS), and one or more slices (slice 0 to slice n). That is, a bitstream of point cloud data according to embodiments may include one or more tiles, and each tile may be a group of slices including one or more slices (slice 0 to slice n). A tile inventory (i.e., TPS) according to embodiments may include information about each tile (e.g., coordinate value information and height/size information of a tile bounding box) for one or more tiles. Each slice may include one geometry bitstream (Geom0) and/or one or more attribute bitstreams (Attr0 and Attr1). For example, slice 0 may include one geometry bitstream ($Geom0^0$) and one or more attribute bitstreams ($Attr0^0$ and $Attr1^0$).

The geometry bitstream in each slice may include a geometry slice header (geom_slice_header) and geometry slice data (geom_slice_data). According to embodiments, the geometry bitstream within each slice is also referred to as a geometry data unit, the geometry slice header is referred to as a geometry data unit header, and the geometry slice data is referred to as geometry data unit data. A geometry slice header (or geometry data unit header) according to embodiments may include information (geomBoxOrigin, geom_box_log2 scale, geom_max_node_size_log2, geom_num_points) and the like about data included in identification information (geom_parameter set_id), a tile identifier (geom_tile_id), a slice identifier (geom_slice_id), and geometry slice data (geom_slice_data) of a parameter set included in a geometry parameter set (GPS). geomBoxOrigin is geometry box origin information indicating the box origin of the corresponding geometry slice data, geom_box_log2_scale is information indicating a log scale of the corresponding geometry slice data, geom_max_node_size_log2 is information indicating the size of the root geometry octree node, and geom_num_points is information related to information related to the number of points of the corresponding geometry slice data. Geometry slice data (or geometry data unit data) according to embodiments may include geometry information (or geometry data) of point cloud data within a corresponding slice.

Each attribute bitstream in each slice may include attribute slice header (attr slice_header) and attribute slice data (attr_slice_data). According to embodiments, an attribute bitstream within each slice is also referred to as an attribute data unit, an attribute slice header is referred to as an attribute data unit header, and attribute slice data is referred to as attribute data unit data. An attribute slice header (or attribute data unit header) according to embodiments may include information about the corresponding attribute slice data (or corresponding attribute data unit), and the attribute slice data may include attribute information (also referred to as attribute data or attribute value) of point cloud data in the corresponding slice. When there are a plurality of attribute bitstreams in one slice, each attribute bitstream may include different attribute information. For example, one attribute bitstream may include attribute information corresponding to color, and another attribute stream may include attribute information corresponding to reflectance.

According to embodiments, parameters required for encoding and/or decoding of point cloud data may be defined in parameter sets of point cloud data (e.g., SPS, GPS, APS, and TPS (also referred to as a tile inventory)) and/or a header of the corresponding slice. For example, during encoding and/or decoding of geometry information, the parameters may be added to a geometry parameter set (GPS), and during tile-based encoding and/or decoding, the parameters may be added to a tile and/or a slice header.

According to embodiments, prediction-based geometry compression information may be signaled to at least one of a geometry parameter set, a geometry slice header (also referred to as a geometry data unit header), or geometry slice data (also referred to as geometry data unit data).

According to embodiments, prediction-based geometry compression information may be signaled to an attribute parameter set and/or an attribute slice header (also referred to as an attribute data unit header) in connection with an attribute coding method or applied to attribute coding.

According to embodiments, the prediction-based geometry compression information may be signaled to a sequence parameter set and/or a tile parameter set.

According to embodiments, the prediction-based geometry compression information may be signaled to geometry predictive tree data (geometry_predtree data()). The geometry predictive tree data (geometry_predtree data()) may be included in a geometry slice (also referred to as a geometry data unit).

According to embodiments, when a syntax element defined below is to be applied to a plurality of point cloud data streams as well as the current point cloud data stream, the prediction-based geometry compression information may be transferred through a parameter set of a higher concept, and the like.

According to embodiments, the prediction-based geometry compression information may be defined in a corresponding position or a separate position depending on the application or system, and an application range, an application method, and the like may be used differently. A field, a term used in syntaxes of the present specification described below, may have the same meaning as a parameter or a syntax element.

According to embodiments, parameters (which may be variously called metadata, signaling information, and the like) including the prediction-based geometry compression information may be generated by a metadata processor (or metadata generator) or a signaling processor of a transmitting device, and may be transferred to a receiving device to be used in a decoding/reconstruction process. For example, a parameter generated and transmitted by a transmitting device may be obtained from a metadata parser of the receiving device.

According to embodiments, compression through a reference relationship between slices may be applied to refer to nodes in other slices for any node as well as a start node (i.e., root node) of a slice. In addition, compression may be extensively applied to a reference relationship between predictive trees.

As described above, the geometry slice bitstream may include a geometry slice header and geometry slice data. In the present disclosure, for convenience of description, a geometry slice bitstream is referred to as a geometry data unit, a geometry slice header is referred to as a geometry data unit header, and geometry slice data is referred to as geometry data unit data.

A geometry parameter set according to embodiments may include geom_tree_type field. The geom_tree_type field may indicate whether position information (i.e., geometry information) is encoded using an octree or is encoded using a predictive tree. For example, when a value of the geom_tree_type field is 0, this indicates that the position information (i.e., geometry information) is encoded using an octree, and when the value is 1, this indicates that the position information (i.e., geometry information) is encoded using a predictive tree.

FIG. 25 is a diagram showing an example of a syntax structure of a geometry data unit (geometry_data_unit()) according to embodiments.

The geometry data unit (geometry_data_unit()) according to embodiments includes a geometry data unit header (geometry_data_unit_header( )), byte_alignment(), and geometry_data_unit_footer().

The geometry data unit (geometry_data_unit()) according to embodiments further includes geometry octree data (geometry_octree()) when a value of a geom_tree_type field included in the geometry parameter set is 0, and further includes geometry predictive tree data (geometry_predtree data()) when the value is 1.

FIG. 26 is a diagram showing an example of a syntax structure of a geometry data unit header(geometry_data_unit_header()) according to embodiments.

In FIG. 26, a gsh_geometry_parameter set_id field represents a value of the gps_geom_parameter_set_id of an active GPS.

A gsh_tile_id field represents an identifier of a corresponding tile referenced by the corresponding geometry data unit header.

A gsh_slice_id field represents an identifier of a corresponding slice for reference by other syntax elements.

A slice_tag field may be used to identify one or more slices having a specific value of slice_tag.

A frame_ctr_lsb field represents least significant bits (LSB) of a notional frame number counter.

A geometry data unit header according to embodiments further includes a gsh entropy_continuation flag field when a value of an entropy_continuation_enabled_flag field is false, and further includes a gsh_prev_slice_id field when a value of the gsh entropy_continuation flag field is true.

The entropy_continuation_enabled_flag field may be included in a SPS. When a value of the entropy_continuation_enabled_flag field is value 1 (i.e., true), this indicates that an initial entropy context state of a slice depends upon a final entropy context state of a preceding slice. When a value of the entropy_continuation_enabled_flag field is 0 (i.e., false), this indicates that the initial entropy context state of each slice is independent.

The gsh_prev_slice_id field represents a value of a slice identifier (i.e., gsh slice_id field) of a previous geometry data unit in bitstream order.

A geometry data unit header according to embodiments may include a gsh_box_log2_scale field when a value of a gps_gsh_box_log2 scale_present flag field is true

The gps_gsh_box_log2 scale_present flag field may be included in the GPS. When a value of the gps_gsh_box_log2 scale_present flag field is 1, this indicates that the gsh_box_log2 scale field is signaled to each geometry data unit that references the current GPS. When a value of the gps_gsh_box_log2_scale_present_flag field is 0, this indicates that a gsh_box_log2 scale field is not signaled to each geometry data unit and that a common scale for all slices is signaled to a gps_gsh_box_log2 scale field of the current GPS.

The gsh_box_log2_scale field indicates a scaling factor of a corresponding slice origin.

A geometry data unit header according to embodiments may include a gsh_box_origin_bits_minus1 field.

The length of the gsh_box origin_>cyz[k] field positioned next is indicated in bits by adding 1 to a value of the gsh_box_origin_bits_minus1 field.

The gsh_box origin_>cyz[k] field indicates a k-th component of the quantized (x,y,z) coordinates of the corresponding slice origin.

The geometry data unit header according to embodiments may include a gsh_angular_origin_bits_minus1 field and a gsh_angular_origin_xyz[k] field when a value of the geom slice angular origin_present flag field is true.

The geom slice angular origin_present flag field may be included in a GPS. When a value of the geom slice angular origin_present flag field is 1, this indicates that a slice relative angular origin is present in the corresponding geometry data unit header. When a value of the geom_slice_angular_origin_present_flag field is 0, this indicates that the angular origin is not present in the corresponding geometry data unit header.

The length of the gsh_angular_origin_xyz[ k ] field positioned next is indicated in bits by adding 1 to the gsh_angular_origin_bits_minus1 field.

The gsh_angular_origin_xyz[k] field indicates a k-th component of the (x, y, z) coordinates of the origin used in processing of an angular coding mode.

When a value of the geom_tree_type field is 0 (i.e., octree-based coding), a geometry data unit header according to embodiments may include a geom_tree_depth_minus1 field and a gsh_entropy_stream_cnt_minus1 field.

The number of geometry tree levels present in the data unit is indicated by adding 1 to the geom_tree_depth_minus1 field.

The maximum number of entropy streams used to convey geometry tree data by adding 1 to the gsh_entropy_stream_cnt_minus1 field.

The geometry data unit header according to embodiments may include a repetitive statement repeated as many times as a value of the geom_tree_depth_minus1 field when a value of the geom_tree_type field is 0 (i.e., octree-based coding) and a value of the geom tree coded axis_list_present flag field is true. The repetition statement may include a geom_tree_coded_axis_flag[ lvl ][ k ] field.

The geom tree coded axis_list_present flag field may be included in a GPS. When a value of the geom tree coded axis_list_present flag field is 1, this indicates that each geometry data unit includes a geom_tree_coded_axis_flag field used to derive a size of a geometry root node. When a value of the geom tree coded axis_list_present flag field is 0, this indicates that the geom_tree_coded_axis_flag field is not present in the corresponding geometry data unit and a coded geometry tree indicates a cubic volume.

The geom_tree_coded_axis_flag[ lvl ][ k ] field indicates whether a k-th axis is coded at a v-th level (i.e., a given depth) of a geometry tree. The geom_tree_coded_axis_flag[ lvl ][ k ] field may be used to determine a size of a root node.

The geometry data unit header according to embodiments may include a geom slice_qp offset field when a value of a geom_scaling enabled flag field is true, and may further include a geom_qp offset_intvl_log2 delta field when a value of the geom_tree_type field is 1 (i.e., predictive tree-based coding).

The geom_scaling_enabled_flag field may be included in a GPS. When a value of the geom_scaling_enabled_flag field is 1, this indicates that a scaling process for geometry positions is invoked during a geometry decoding process. When a value of the geom_scaling_enabled_flag field is 0, this indicates that geometry positions do not require scaling.

The geometry data unit header according to embodiments may include a ptn_residual abs_log2_bits[ k ] field when a value of the geom_tree_type field is 1 (i.e., predictive tree-based coding), and may further include a ptn_radius_min_value field when a value of the geometry_angular_enabled_flag field is true.

The ptn_residual abs_log2_bits[ k ] field indicates the number of bins used to code a k-th component of the ptn_residual abs_log2 field. The description of the ptn_residual abs_log2 field will be given later.

The geometry_angular_enabled_flag field may be included in a GPS. When a value of the geometry_angular_enabled_flag field is 1, this indicates that an angular coding mode is active. When a value of the geometry_angular_enabled_flag field is 0, this indicates that an angular coding mode is not active.

The ptn_radius_min_value field represents the minimum value of radius.

FIG. 27 is a diagram showing an example of a syntax structure of geometry predictive tree data (geometry_predtree data()) according to embodiments.

According to embodiments, the geometry predictive tree data (geometry_predtree data()) of FIG. 27 may be included in the geometry data unit of FIG. 25. The geometry predictive tree data (geometry_predtree data()) may be referred to as geometry slice data or geometry data unit data.

The geometry predictive tree data (geometry_predtree data()) includes a repetitive statement that starts with a variable PtnNodeIdx=0 and ends when a value of the gpt_end_of_trees_flag field is false. This repetitive statement includes geometry_predtree_node(PtnNodeIdx) and a gpt_end_of_trees_flag field.

A variable PtnNodeIdx is a counter used to iterate over parsed predictive tree nodes in a depth-first order. The variable PtnNodeIdx is initialized to 0 at start of a decoding process and incremented during recusrive traversal of the tree.

When a value of the gpt_end_of_trees_flag field is 0, this indicates that another predictive tree complies with the data unit. When a value of the gpt_end_of_trees_flag field is 1, this indictes that there are no predictive trees present in the data unit.

FIG. 28 is a diagram showing an example of a syntax structure of geometry_predtree_node(PtnNodeIdx) according to embodiments.

That is, according to an embodiment, the geometry_predtree_node(PtnNodeIdx) of FIG. 28 signals prediction-based geometry compression information.

To this end, the geometry_predtree_node(PtnNodeIdx) may include at least one of a ptn_qp offset abs_gt0 flag field, a ptn_qp offset sign flag field, a ptn_qp_offset_abs_minus1 field, a ptn_point_cnt_gt1_flag field, a ptn_point_cnt_minus2 field, a ptn_child_cnt[ nodeIdx ] field, an inter_prediction_enabled_flag field, predtree_inter_prediction (), ptn_pred_mode[ nodeIdx ], a ptn_phi_mult abs_gt0 flag field, a ptn_phi_mult sign flag field, a ptn_phi_mult_abs_gt1_flag field, a ptn_phi_mult abs_minus2 field, a ptn_phi_mult abs_minus9 field, a ptn_residual_abs_gt0_flag[ k ] field, a ptn_residual_sign_flag[ k ] field, a ptn_residual_abs_log2[ k ] field, a ptn_residual_abs_remaining[ k ] field, a ptn_sec_residual_abs_gt0_flag[ k ] field, a ptn_sec_residual_sign_flag[ k ] field, a ptn_sec_residual_abs_gtl_flag[ k ] field, a ptn_sec_residual_abs_minus2[ k ] field, or a geometry_predtree_node(++PtnNodeIdx ) field.

According to embodiments, when a value of the geom_scaling_enabled_flag field is 1 and a value of nodeIdx % PtnQpInterval is 0, the geometry_predtree_node(PtnNodeIdx) may include the ptn_qp offset abs_gt0 flag field, and when a value of the ptn_qp offset abs_gt0 flag field is 1, the geometry_predtree_node(PtnNodeIdx) may include the ptn_qp offset sign flag field and the ptn_qp_offset_abs_minus1 field.

The geom_scaling_enabled_flag field may be included in a GPS. When a value of the geom_scaling_enabled_flag field is 1, this indicates that a scaling process for geometry positions is invoked during a geometry decoding process. When a value of the geom_scaling enabled flag field is 0, this indicates that geometry positions do not require scaling.

The ptn_qp offset abs_gt0 flag field, the ptn_qp offset_sign flag field, and the ptn_qp_offset_abs_minus1 field together indicate an offset of the slice geometry quantisation parameter.

According to embodiments, when a value of a duplicate_points enabled flag field is 1, the geometry_predtree_node(PtnNodeIdx) may include the ptn_point_cnt_gt1_flag field, and when a value of the ptn_point_cnt_gt1_flag field is 1, the geometry_predtree_node(PtnNodeIdx) may include the ptn_point cnt_minus2 field.

The duplicate_points enabled flag field may be included in a GPS. When a value of the duplicate_points_enabled_flag field is 0, this indicates that all output points have unique positions within a slice in all slices that refer to the current GPS. When a value of the duplicate_points enabled flag field is 1, this indicates that two or more of output points have the same position in one slice in all slices that refer to the current GPS.

The ptn_point_cnt_gt1_flag field and the ptn_point_cnt_minus2 field together indicate the number of points represented by the current predictive tree node.

According to embodiments, the number of points represented by the current predictive tree (PtnPointCount[nodeIdx]) may be obtained as follows.

$$\text{PtnPointCount[nodeIdx]} = 1 + \text{ptn_point_cnt_gt1_flag field} + \text{ptn_point_cnt_minus2 field}$$

The ptn_child_cnt[ nodeIdx ] field indicates the number of direct child nodes of the current predictive tree nod present in the geometry predictive tree.

According to embodiments, when a value of the inter_prediction enabled flag field is 1, geometry_predtree_node(PtnNodeIdx) may include predtree_inter_prediction (), and when the value is 0, the geometry_predtree_node(PtnNodeIdx) may include ptn_pred_mode[ nodeIdx ].

The inter_prediction_enabled_flag field indicates whether a geometry_predtree_node(PtnNodeIdx) includes predtree_inter_prediction () or ptn_pred_mode[ nodeIdx ].

According to an embodiment, predtree_inter_prediction () signals information related to inter-frame prediction included in prediction-based geometry compression information.

A detailed description of the fields included in predtree_inter_prediction () will be given in FIG. 29.

ptn_pred_mode[ nodeIdx ] indicates a mode used to predict a position related to the current node.

When a value of the geometry_angular_enabled_flag field is 1, this indicates that the ptn_phi_mult abs_gt0 flag field, the ptn_phi_mult_sign_flag field, the ptn_phi_mult_abs_gt1_flag field, the ptn_phi_mult abs_minus2 field, and the ptn_phi_mult abs_minus9 field included in the geometry_predtree_node(PtnNodeIdx) together may represent a multiplicative factor used in delta angular prediction. When a value of the ptn_phi_mult sign flag field is 1, a sign of the factor is positive, and when the value is 0, the sign of the factor is negative.

According to embodiments, a phi factor ( PtnPhiMult[nodeIdx] ) for the current tree node may be extracted as follows.

$$\text{PtnPhiMult[nodeIdx]} = (2 \times \text{ptn_phi_mult_sign_flag} - 1) \times (\text{ptn_phi_mult_abs_gt0_flag} + \text{ptn_phi_mult_abs_gt1_flag} + \text{ptn_phi_mult_abs_minus2} + \text{ptn_phi_mult_abs_minus9})$$

According to embodiments, numComp in the geometry_predtree_node(PtnNodeIdx) may be obtained as follows.

numComp = geometry_angular_enabled_flag && !number_lasers_minus1 ? 2 : 3

According to embodiments, geometry_predtree_node(PtnNodeIdx) may include a repetitive statement repeated as many times as a value of the numComp. The ptn_residual_abs_gt0_flag[ k ] field, the ptn_residual_sign_flag[ k ] field, the ptn_residual_abs_log2[ k ] field, and the ptn_residual_abs_remaining[ k ] field included in the repetitive statement together represent first prediction residual information of a k-th geometry position component. For example, when a value of the ptn_residual_sign_flag[ k ] field is 1, a sign of a residual component indicates positive, and when the value is 0, the sign of the residual component is negative.

According to embodiments, a first prediction residual associated with the current tree node( PtnResidual[nodeIdx][k]) may be extracted as follows. Here, k represents x, y, z coordinates.

for (k = 0; k < 3; k++)

$$\text{PtnResidual[nodeIdx][k]} = (2 \times \text{ptn_residual_sign_flag} - 1) \times (\text{ptn_residual_abs_gt0_flag[k]} + ((1 << \text{ptn_residual_abs_log2[k]}) >> 1) + \text{ptn_residual_abs_remaining[k]})$$

The ptn_sec_residual_abs_gt0_flag[ k ] field, the ptn_sec_residual_sign_flag[ k ] field, the ptn_sec_residual_abs_gt1_flag[ k ] field, and the ptn_sec_residual_abs_minus2[ k ] field included when a value of the geometry_angular_enabled_flag field is 1 together represent second prediction residual information of a k-th geometry position component. For example, when a value of the ptn_sec_residual_sign_flag[ k ] field is 1, a sign of a residual component is positive, and when the value is 0, the sign is negative.

According to embodiments, second prediction residual information associated with the current tree node( PtnResidual[nodeIdx][k]) may be extracted as follows. Here, k represents x, y, z coordinates.

for (k = 0; k < 3; k++)

$$PtnSecResidual[nodeIdx][k] = (2 \times ptn_sec_residual_sign_flag - 1) \times (ptn_sec_residual_abs_gt0_flag[k] + ptn_sec_residual_abs_gt1_flag[k] + ptn_sec_residual_abs_minus2[k])$$

According to embodiments, a geometry_predtree_node(PtnNodeIdx) may include a repetitive statement repeated as many times as a value of the ptn_child_cnt[ nodeIdx ] field. The repetitive statement may include geometry_predtree_node(++PtnNodeIdx ). That is, geometry_predtree_node(PtnNodeIdx) incremented by 1 may be included.

FIG. 29 is a diagram showing an example of a syntax structure of predtree_inter_prediction () according to embodiments.

According to embodiments, the predtree_inter_prediction () may be included in geometry_predtree_node(PtnNodeIdx).

According to an embodiment, the predtree_inter_prediction () of FIG. 29 signals information related to inter-frame prediction included in prediction-based geometry compression information.

According to embodiments, the information related to inter-frame prediction, that is, predtree_inter_prediction () may include a ref_frame_id field, a motion_vector[i] field, a predictor_bbox[i] field, a predictor_coordinate_type field, a predictor_predtree_generation_type field, a correlated_point_index field, an interMode field, and a coeff field.

The ref_frame_id field represents an index of a reference frame used in prediction of the current PU.

The motion_vector[i] field represents a motion vector (MV) of a k-th component of (x, y, z) coordinates of a predictor based on the current PU. The motion_vector[i] field may indicate a motion vector (MV) in each axis direction of the predictor.

The predictor_bbox[i] field represents a size of a bounding box of the k-th component of the (x, y, z) coordinates of the predictor based on the current PU. That is, the predictor_bbox[i] field may indicate a size of a bounding box of a predictor in each axis.

The predictor_predtree_generation_type field indictes a method of generating a predictive tree of a predictor. For example, when a value of the predictor_predtree_generation_type field is 0, this indicates a sorting method in order of Morton code, when the value is 1, this indicates a sorting method in ascending order for z after fixing the xy plane, when the value is 2, this indicates a sorting method in ascending order for y after fixing the xz plane, and when the value is 3, this indicates a sorting method in ascending order for z after fixing the yz plane.

The predictor_coordinate_type field may signal a coordinate space in which a predictor is defined. When a value of the predictor_coordinate_type field is 0, this indicates the Cartesian coordinate, when the value is 1, this indicates the spherical coordinate, when the value is 2, this indicates the radius, phi, laser id coordinate space, and when the value is 3, this indicates that the radius, angular id, laser id coordinate space. If not defined, coordinates used in predictive geometry coding may be used without change.

The correlated_point_index field may inform an index as a method for specifying a point related to a point of the current PU with respect to a predictor defined in a reference frame.

The interMode field may represent an inter-prediction mode when inter-frame prediction-based geometry compression is used. For example, inter-prediction modes for inter-frame prediction may be defined as follows. For each inter-prediction mode, refer to the description of Equation 9 above.

$$\text{InterMode 0 : } p'(n) = w0*c(n)$$

$$\text{InterMode 1 : } p'(n) = w1*c(n) + w2*p(n-1)$$

$$\text{InterMode 2 : } p'(n) = w3*c(n) + w4*c(n-1)$$

$$\text{InterMode 3 : } p'(n) = w5*c(n) + w6*c(n-1) + w7*c(n+1)$$

According to embodiments, prediction coefficient w0...w7 according to inter-prediction mode (interMode) may be transferred through a coeff field as necessary.

FIG. 30 is a diagram showing another example of a point cloud data reception device according to embodiments. Elements of the point cloud data reception device shown in FIG. 30 may be implemented by hardware, software, processor, and/or a combination thereof.

According to embodiments, the point cloud data reception device may include a reception processor 61001, a signaling processor 61002, the geometry decoder 61003, an attribute decoder 61004, and a post-processor 61005.

The reception processor 61001 according to embodiments may receive one bitstream or may receive each of a geometry bitstream, an attribute bitstream, and a signaling bitstream. When receiving a file and/or a segment, the reception processor 61001 according to embodiments may decapsulate the received file and/or segment and output the decapsulated file and/or segment in a bitstream.

When receiving (or decapsulating) one bitstream, the reception processor 61001 according to embodiments may demultiplex a geometry bitstream, an attribute bitstream, and/or a signaling bitstream from one bitstream, output the demultiplexed signaling bitstream to the signaling processor 61002, output the geometry bitstream to the geometry decoder 61003, and output the attribute bitstream to the attribute decoder 61004.

When receiving (or decapsulating) a geometry bitstream, an attribute bitstream, and/or a signaling bitstream, the reception processor 61001 according embodiments may transfer the signaling bitstream to the signaling processor 61002, transfer the geometry bitstream to the geometry decoder 61003, and transfer the attribute bitstream to the attribute decoder 61004.

The signaling processor 61002 may parse and process information included in signaling information, e.g., SPS, GPS, APS, TPS, and metadata from the input signaling bitstream and provide the parsed and processed information to the geometry decoder 61003, the attribute decoder 61004, and the post-processor 61005. According to another embodiment, signaling information included in the geometry data unit header and/or the attribute data unit header may also be preparsed by the signaling processor 61002 prior to decoding of corresponding slice data.

According to embodiments, the signaling processor 61002 may also parse and process signaling information (e.g., prediction-based geometry compression information) signaled to the geometry data unit and provide the parsed and processed information to the geometry decoder 61003.

According to embodiments, the geometry decoder 61003 may perform a reverse process of the geometry encoder 51003 of FIG. 16 based on signaling information on the compressed geometry bitstream to restore geometry. The geometry information restored (or reconstructed) by the geometry decoder 61003 is provided to the attribute decoder 61004. The attribute decoder 61004 may restore an attribute by performing a reverse process of the attribute encoder 51004 of FIG. 16 based on signaling information and reconstructed geometry information for the compressed attribute bitstream.

According to embodiments, the post-processor 61005 may reconstruct point cloud data by matching geometry information (i.e., positions) restored and output from the geometry decoder 61003 with attribute information restored and output from the attribute decoder 61004 and display/render the matched information.

FIG. 31 is a detailed block diagram showing an example of the geometry decoder 61003 according to embodiments. Elements of the geometry decoder shown in FIG. 31 may be implemented by hardware, software, a processor, and/or a combination thereof.

According to embodiments, the geometry decoder 61003 may include an entropy decoding unit 61031, a mode detection unit 61032, an intra-frame prediction unit 61033, a motion compensation unit 61034, a correlated point detection unit 61035, an inter-frame prediction unit 61036, and a reconstruction unit 61037. The execution order of each block may be changed, some blocks may be omitted, and some blocks may be newly added.

According to embodiments, the geometry decoder 61003 restores geometry information by performing a reverse process of the geometry encoder of the transmitting device. That is, the entropy decoding unit 61031 entropy-decodes residual information (i.e., prediction error) and prediction mode information for points of each slice included in the bitstream input through the reception processor 61001.

The mode detection unit 61032 checks whether the prediction mode information entropy-decoded by the entropy decoding unit 61031 is inter-prediction mode information or intra prediction mode information. According to embodiments, whether the prediction mode information is an intra prediction mode or an inter-prediction mode may be detected using the inter_prediction_enabled_flag field included in the prediction-based geometry compression information (i.e., geometry_predtree_node(PtnNodeIdx)) included in the geometry data unit. In this case, inter prediction or intra prediction such as frame/data unit/slice/predictive tree/prediction unit/point may be used according to a unit in which the inter_prediction_enabled_flag field is transferred.

When the mode detection unit 61032 performs detection in an inter-prediction mode, the motion compensation unit 61034 may generate a predictor by performing motion compensation based on inter-frame prediction-related information (i.e., predtree_inter_prediction ()) included in the prediction-based geometry compression information (i.e., geometry_predtree_node(PtnNodeIdx)). According to an embodiment, the motion compensation unit 61034 may receive a reference frame specified by reference frame index information (ref_frame_id field) included in the inter-frame prediction-related information (i.e., predtree_inter_prediction ()) and generate a predictor within the reference frame by performing motion compensation based on motion vector (MV) information (motion_voctor field) and bounding box information (predictor_bbox field) of the predictor. That is, the receiving device is not capable of estimating a bounding box of a PU, and thus a predictor may be generated using bounding box information, motion vector (MV) information, and reference frame index information of the predictor included in the inter-frame prediction-related information.

The correlated point detection unit 61035 may specify a point used in decoding for the predictor generated by the motion compensation unit 61034 through the correlated point index information (correlated_point_index field) included in the inter-frame prediction-related information. In addition, to recognize a position according to a point index within the predictor, a predictive tree of the predictor may be generated and a correlated point may be found through a relationship between an index and a point using a method specified in a predictive tree generating method (predictor_predtree_generation_type field) of the predictor included in the inter-frame prediction-related information.

The inter-frame prediction unit 61036 generates a prediction value (also referred to as predicted information) by performing inter-frame prediction (i.e., inter-frame prediction) using the correlated point and an inter-frame prediction method specified in the inter-prediction mode information(interModefield) included in the inter-frame prediction-related information.

The reconstruction unit 61037 restores a final point by adding predicted information of a point to be decoded, generated by the inter-frame prediction unit 61036, and residual information (also referred to as prediction residual information) received with the inter-prediction mode information (interModefield). That is, the reconstruction unit 61037 reconstructs (or restores) geometry information (i.e., position of final point) using information precited through inter-frame prediction and residual information at this time. In this case, when coordinate conversion is used (i.e., when coding coordinates and output coordinates are different), two types of prediction residual information (residual) may be included in geometry_predtree_node(nodeIdx) and may be transferred. In this case, a prediction error may be corrected based on first prediction residual information, and an error generated in a coordinate conversion process may be corrected based on second prediction residual information for the corrected value.

When the mode detection unit 61032 performs detection in an intra prediction mode, the intra-frame prediction unit 61033 generates a prediction value (also referred to as predicted information) by performing intra-frame prediction (i.e., intra-frame prediction) using intra prediction mode information included in the prediction-based geometry information.

The reconstruction unit 61037 restores a final point by adding predicted information of a point to be generated, generated by the intra-frame prediction unit 61033, and residual information (also referred to as prediction residual information) received with the intra prediction mode information and restored through decoding. That is, the reconstruction unit 61037 reconstructs (or restores) geometry information (i.e., position of final point) using information predicted through intra-frame prediction and residual information at this time.

For the prediction-based geometry compression information described in FIG. 31 and inter-frame prediction-related information included in the prediction-based geometry compression information, refer to the descriptions of FIGS. 25 to 29.

FIG. 32 is a flowchart showing an example of a geometry decoding method for restoring compressed geometry based on prediction according to embodiments. That is, whether the received prediction mode is an intra prediction mode or an inter-prediction mode is determined using the inter_prediction_enabled_flag field included in the prediction-based geometry compression information that is signaling information (operation 61051). For example, when a value of the inter_prediction_enabled_flag field is 0 (i.e., No), the prediction mode may be determined as an intra prediction mode, and when the value is 1 (i.e., Yes), the prediction mode may be determined as an inter-prediction mode.

In operation 61051, when the inter-prediction mode is checked, a reference frame is selected using the ref_frame_id field (operation 61052). For the selected reference frame, motion compensation is performed based on the motion_vector field (operation 61053), and a predictor to be used in prediction within the reference frame is generated. In this case, a range of the predictor may be configured using the predictor_bbox field (operation 61054). A predictive tree of the predictor is generated based on the predictor_predtree_generation_type field (operation 61055), and a point to be used in prediction in the predictive tree of the predictor (also referred to as a prediction point) is detected based on the correlated_point_index field (operation 61056). In this case, when coordinates of a point used in motion estimation are received through the predictor_coordinate_type field, the coordinates of the reference frame may be changed. When there is no separate signaling, the coding coordinate system may be followed. In an embodiment of the present disclosure, a node (i.e., point) in the predictor used for prediction of a node (i.e., point) of the current frame is transferred through the correlated_point_index field, and in this case, an index indicates a relative order/position by a predictive tree for a point inside the predictor. Thus, to select the point to be used in prediction within the predictor, the predictive tree may be configured using the predictor_predtree_generation_type field, and then a point designated by the correlated_point_index field may be used as a prediction point.

When a prediction point is detected in operation 61056, prediction information is generated by performing inter-frame prediction on the prediction point based on an inter-prediction mode specified in the interMode field (operation 61057). In this case, the used coefficient (e.g., weights of each inter-prediction mode) may be received through a coeff field.

When the intra prediction mode is checked in operation 61051 (i.e., Inter_predicion enabled flag field=0), prediction information is generated by performing prediction based on an intra-frame prediction method (operation 61059).

The final point is restored using prediction information (operation 61057 or operation 61059) generated based on an inter-frame related point or an intra-frame related point and residual information (or residual value) restored through decoding (operation 61058). In this case, when coordinate conversion is used, such as when coding coordinates and output coordinates are different, two types of residual information may be included in signaling information and received. In this case, a prediction error may be corrected using first residual information, and an error occurring in coordinate conversion process may be corrected by applying second residual information to the corrected value.

For fields described in FIG. 32, refer to the description of FIGS. 25 to 29.

FIG. 33 is a flowchart of a point cloud data transmission method according to embodiments.

The point cloud data transmission method according to embodiments may include acquiring point cloud data (71001), encoding the point cloud data (71002), and transmitting the encoded point cloud data and signaling information (71003). In this case, a bitstream including the encoded point cloud data and the signaling information may be encapsulated in a file and transmitted.

In the acquiring of the point cloud data 71001, some or all of the operations of the point cloud video acquisition unit 10001 of FIG. 1 may be performed, or some or all of the operations of the data input unit 12000 of FIG. 12 may be performed.

In the encoding of the point cloud data (71002), to encode the geometry information, some or all of the operations of the point cloud video encoder 10002 of FIG. 1, the encoding 20001 of FIG. 2, the point cloud video encoder of FIG. 4, the point cloud video encoder of FIG. 12, the geometry encoder of FIG. 16, the geometry encoder of FIG. 17, or the geometry encoding process of FIG. 23.

In the encoding of the point cloud data according to embodiment (71002), the aforementioned inter-frame prediction and/or intra-frame prediction may be performed to compress geometry information.

In the present disclosure, for execution of the inter-frame prediction and/or the intra-frame prediction, refer to the above description of FIGS. 15 to 29, and a detailed description of execution of the inter-frame prediction and/or the intra-frame prediction is omitted herein. Through the aforementioned inter-frame prediction and/or intra-frame prediction, a prediction mode applied to each point and residual information are entropy-encoded and then output in the form of a geometry bitstream.

According to embodiments, in the encoding of the point cloud data (71002), attribute information is compressed based on a position at which geometry encoding is not performed and/or reconstructed geometry information. According to an embodiment, the attribute information may be coded by combining one or more of RAHT coding, LOD-based prediction coding, and lifting conversion coding. According to another embodiment, predictive tree-based encoding may be performed on the attribute information similarly to the aforementioned encoding of the geometry information. For the predictive tree-based attribute encoding, refer to the aforementioned encoding of geometry information.

In the specification, the signaling information may include prediction-based geometry compression information, and the prediction-based geometry compression information may include inter-frame prediction-related information. According to an embodiment, the prediction-based geometry compression information may be included in a geometry data unit. According to another embodiment, the prediction-based geometry compression information may be signaled to SPS, GPS, APS, or TPS. A detailed description of the prediction-based geometry compression information is given above, and thus is omitted herein.

FIG. 34 is a flowchart of a point cloud data reception method according to embodiments.

The point cloud data reception method according to embodiments may include receiving encoded point cloud data and signaling information (81001), decoding the point cloud data based on the signaling information (81002), and rendering the decoded point cloud data (81003).

The receiving of the point cloud data and the signaling information according to embodiments (81001) may be performed by the receiver 10005 of FIG. 1, the transmitting 20002 or the decoding 20003 of FIG. 2, and the receiver 13000 or the reception processor 13001 of FIG. 13.

In the decoding of the point cloud data according to embodiments (81002), to decode the geometry information, some or all of the operations of the point cloud video decoder 10006 of FIG. 1, the decoding 20003 of FIG. 2, the point cloud video decoder of FIG. 11, the point cloud video decoder of FIG. 13, the geometry decoder of FIG. 30, the geometry decoder of FIG. 31, or the geometry decoding process of FIG. 31 may be performed.

In the decoding of the point cloud data according to embodiments (81002), geometry information may be decoded (i.e., restored) by performing inter-frame prediction and/or intra-frame prediction based on the prediction-based geometry compression information included in the signaling information. For a detailed description, refer to the description of FIGS. 30 to 32.

In the decoding of the point cloud data according to embodiments (81002), the attribute information is decoded (i.e., decompressed) based on the restored geometry information. According to an embodiment, the attribute information may be decoded by combining one or more of RAHT coding, LOD-based prediction conversion coding, and lifting conversion coding. According to another embodiment, predictive tree-based decoding may be performed on the attribute information similarly to the aforementioned decoding of the geometry information. For the predictive tree-based attribute decoding, refer to the aforementioned decoding of the geometry information.

In the rendering according to embodiments (81003), the point cloud data may be restored based on the restored (or reconstructed) geometry information and attribute information and may be rendered using various rendering methods. For example, points of point cloud content may be rendered as a vertex with a certain thickness, a cube with a specific minimum size with a position of the vertex position as the center, or a circle with the position of the vertex as the center. All or part of the rendered point cloud content is provided to a user through a display (e.g., VR/AR display and general display). The rendering of the point cloud data according to embodiments (81003) may be performed by the renderer 10007 of FIG. 1, the rendering 20004 of FIG. 2, or the renderer 13011 of FIG. 13.

As such, prediction-based coding is performed based on neighbor (periphery) point information for point cloud data. In addition, since step-by-step scanning of all points is not performed in the prediction-based coding, there is no need to wait for all point cloud data to be captured, and progressively captured point cloud data may be encoded, which is suitable for point cloud data content that requires low-latency processing. That is, prediction-based coding has an advantage of high coding speed.

In particular, when the point cloud data is configured with consecutive frames, redundant information may be removed based on an inter-frame correlation, thereby increasing a compression efficiency of the geometry information.

The aforementioned operation according to embodiments may be performed through components of the point cloud transmitting and receiving device/method including a memory and/or a processor. The memory may store programs for processing/controlling operations according to embodiments. Each component of the point cloud transmitting and receiving device/method according to embodiments may correspond to hardware, software, a processor, and/or a combination thereof. The processor may control the various operations described in the present disclosure. The processor may be referred to as a controller or the like. The operations according to embodiments may be performed by firmware, software, and/or a combination thereof and firmware, software, and/or a combination thereof may be stored in the processor or stored in the memory. In the present embodiment, the method of compressing geometry information of point cloud data has been described, but the methods described in the specification may be applied to attribute information compression and other compression methods.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/reception device including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

Additionally, the operations according to the embodiments described in this document may be performed by transmitting and receiving devices, each of which includes a memory and/or processor, depending on the embodiments. The memory may store programs for processing and controlling the operations according to the embodiments, and the processor may control various operations described in this document. The processor may be referred to as a controller or the like. The operations according to the embodiments may be implemented by firmware, software, and/or combinations thereof, and the firmware, software, and/or combinations thereof may be stored in the processor or memory.

## MODE

The details have been specifically described in the best mode for the disclosure.

## INDUSTRIAL APPLICABILITY

It is evident to those skilled in the art that various modifications and variations are possible within the scope of the embodiments without departing from the spirit or scope of the embodiments. Therefore, the embodiments are intended to encompass the modifications and variations of the embodiments provided within the appended claims and their equivalents.

## Claims

1. A point cloud data transmission method comprising:
encoding geometry data of point cloud data;

    encoding attribute data of the point cloud data based on the geometry data; and
    transmitting the encoded geometry data, the encoded attribute data, and signaling information,
    wherein the encoding of the geometry data includes:

        generating a predictive tree based on the geometry data;
        dividing the predictive tree into a plurality of prediction units;
        generating a predictor as a set of points having characteristics similar to points of a current prediction unit within the reference frame by performing motion estimation and motion compensation on a reference frame, for each prediction unit;
        generating a predictive tree in the predictor; and
        acquiring residual information by performing inter-frame prediction based on the predictive tree of the predictor and inter-prediction mode information.

2. The point cloud data transmission method of claim 1, wherein the performing of the inter-frame prediction further includes performing the inter-frame prediction by selecting a point similar to a point to be encoded of the current prediction unit from the predictor.

3. The point cloud data transmission method of claim 1, wherein the encoding of the geometry data further includes acquiring residual information by performing intra-frame prediction based on the predictive tree and intra prediction mode information.

4. The point cloud data transmission method of claim 3, wherein the encoding of the geometry data includes:

    selecting final prediction mode information by comparing inter-prediction mode information applied to the inter-frame prediction with intra prediction mode information applied to the intra-frame prediction; and
    entropy-coding residual information acquired based on information for identifying the selected prediction mode information and the selected prediction mode information and transmitting the entropy-coded information.

5. The point cloud data transmission method of claim 2, wherein the signaling information includes prediction-based geometry compression information; and
wherein the prediction-based geometry compression information includes at least one of information for identifying the reference frame, motion vector (MV) information acquired through the motion estimation, bounding box size information of the predictor, information for identifying the point selected from the predictor, or the inter-prediction mode information.

6. A point cloud data transmission device comprising:

    a geometry encoder configured to encode geometry data of point cloud data;
    an attribute encoder configured to encode attribute data of the point cloud data based on the geometry data; and
    a transmitter configured to transmit the encoded geometry data, the encoded attribute data, and signaling information,
    wherein the geometry encoder includes:

        a first predictive tree generation unit configured to generate a predictive tree based on the geometry data,
        a prediction unit generation unit configured to divide the predictive tree into a plurality of prediction units;
        a predictor generation unit configured to generate a predictor as a set of points having characteristics similar to points of a current prediction unit within the reference frame by performing motion estimation and motion compensation on a reference frame, for each prediction unit;
        a second predictive tree generation unit configured to generate a predictive tree in the predictor; and
        an inter-frame prediction unit configured to acquire residual information by performing inter-frame prediction based on the predictive tree of the predictor and inter-prediction mode information.

7. The point cloud data transmission device of claim 6, wherein the inter-frame prediction unit performs the inter-frame prediction by selecting a point similar to a point to be encoded of the current prediction unit from the predictor.

**8.** The point cloud data transmission device of claim 6, wherein the geometry encoder further includes an intra-frame prediction unit configured to acquire residual information by performing intra-frame prediction based on a point to be encoded of the predictive tree and intra prediction mode information.

**9.** The point cloud data transmission device of claim 8, wherein the geometry encoder further includes:

a mode selection unit configured to select final prediction mode information by comparing inter-prediction mode information applied to the inter-frame prediction with intra prediction mode information applied to the intra-frame prediction; and
an entropy coder configured to entropy-code residual information acquired based on information for identifying the selected prediction mode information and the selected prediction mode information and transmitting the entropy-coded information.

**10.** The point cloud data transmission device of claim 7, wherein the signaling information includes prediction-based geometry compression information; and
wherein the prediction-based geometry compression information includes at least one of information for identifying the reference frame, motion vector (MV) information acquired through the motion estimation, bounding box size information of the predictor, information for identifying the point selected from the predictor, or the inter-prediction mode information.

**11.** A point cloud data reception method comprising:

receiving geometry data, attribute data, and signaling information;
decoding the geometry data based on the signaling information;
decoding the attribute data based on the signaling information and the decoded geometry data; and
rendering point cloud data restored from the decoded geometry data and the decoded attribute data based on the signaling information,
wherein the decoding of the geometry data includes:

generating a predictor within the reference frame by performing motion compensation on a reference frame based on the signaling information;
generating a predictive tree from the predictor based on the signaling information;
generating prediction information by performing inter-frame prediction based on prediction mode information included in the signaling information and the predictive tree of the predictor; and
restoring the geometry data based on the prediction information and the received and decoded residual information.

**12.** The point cloud data reception method of claim 11, wherein the performing of the inter-frame prediction further includes selecting a point to be used in the inter-frame prediction from the predictor based on the signaling information.

**13.** The point cloud data reception method of claim 11, wherein the decoding of the geometry data further includes determining whether the prediction mode information included in the signaling information is inter-prediction mode information or intra prediction mode information.

**14.** The point cloud data reception method of claim 12, wherein the signaling information includes prediction-based geometry compression information; and
wherein the prediction-based geometry compression information includes at least one of information for identifying the reference frame, motion vector (MV) information for the motion compensation, bounding box size information of the predictor, information for selecting a point from the predictor, or the inter-prediction mode information.

**15.** The point cloud data reception method of claim 11, wherein the decoding of the geometry data further includes, based on coordinate conversion being performed by a transmitting side, correcting a prediction error of the geometry data based on first residual information included in the signaling information and correcting an error occurring during a process of the coordinate conversion by applying second residual information included in the signaling information to the corrected geometry data.

FIG. 1

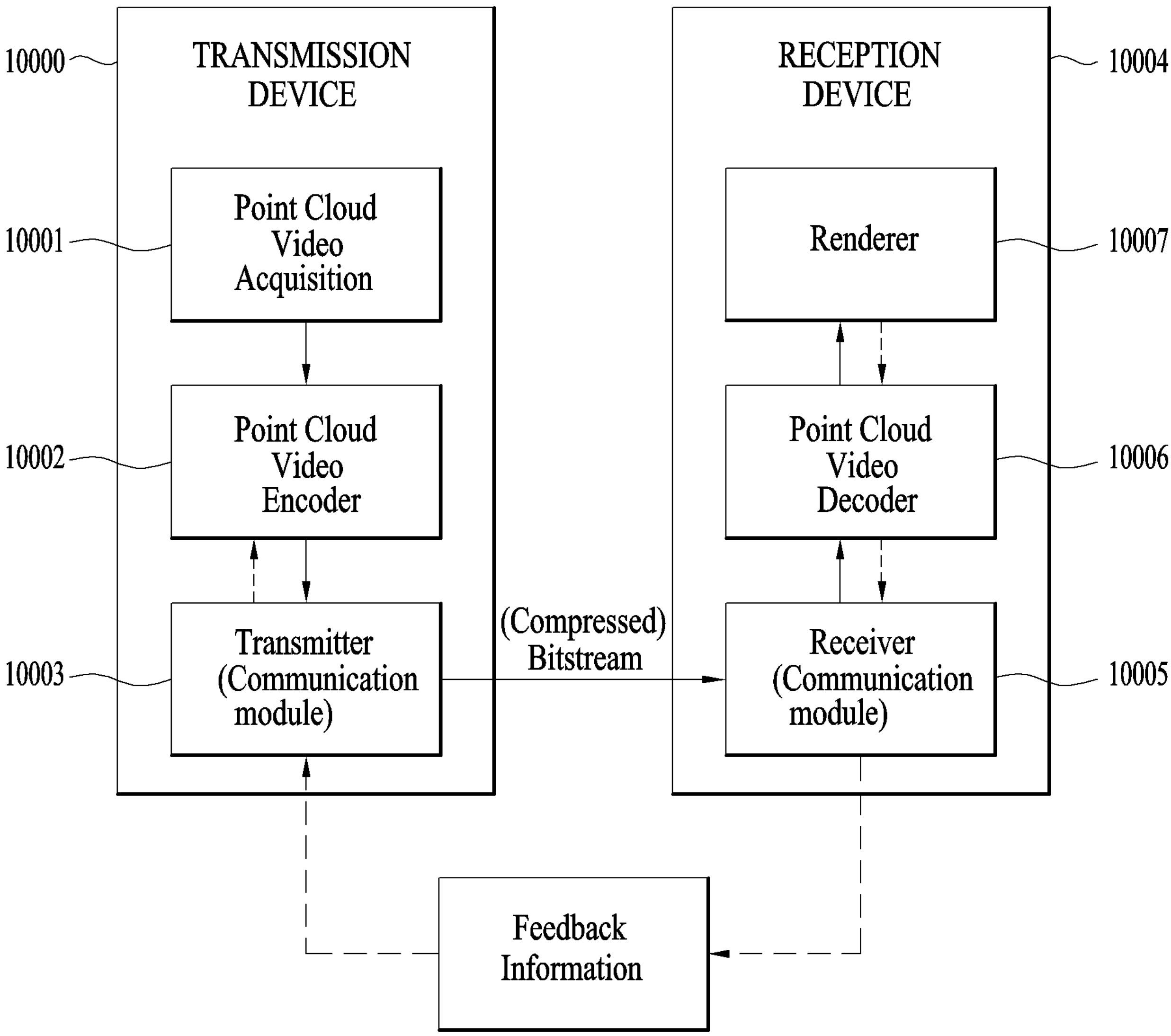
10000
TRANSMISSION DEVICE
10001
Point Cloud Video Acquisition
10002
Point Cloud Video Encoder
10003
Transmitter (Communication module)
(Compressed) Bitstream
10004
RECEPTION DEVICE
10007
Renderer
10006
Point Cloud Video Decoder
10005
Receiver (Communication module)
Feedback Information

FIG. 2

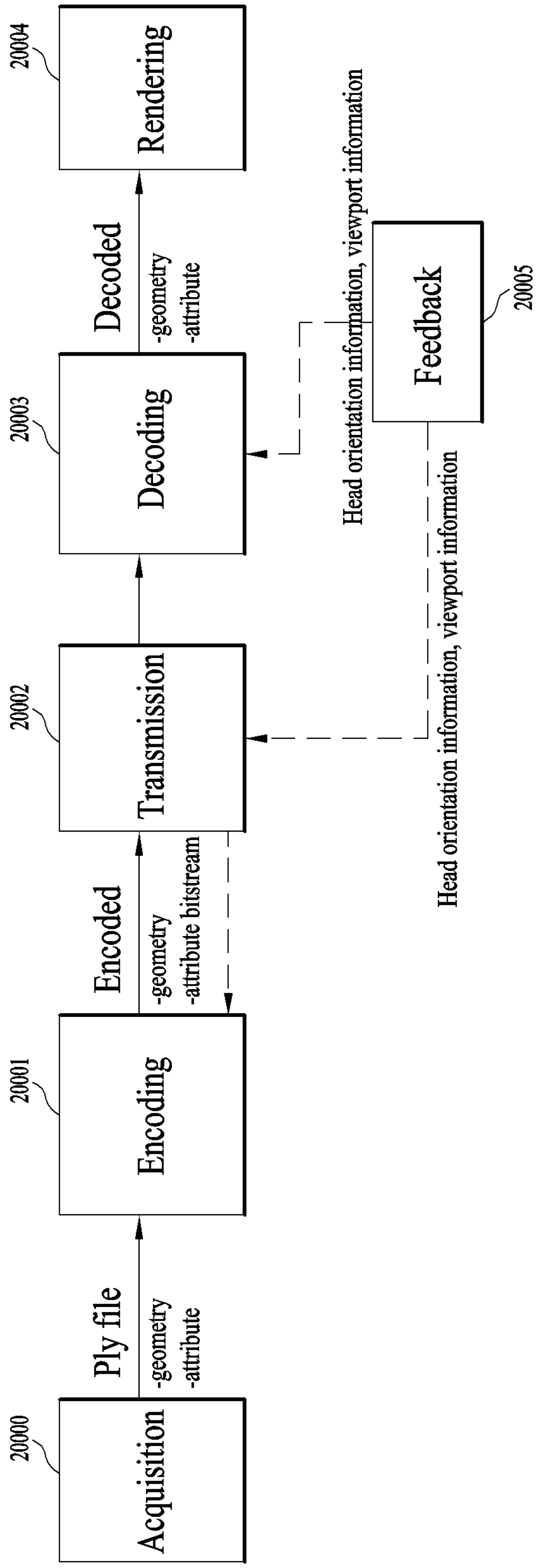
20000
Acquisition
Ply file
-geometry
-attribute
20001
Encoding
Encoded
-geometry
-attribute bitstream
20002
Transmission
20003
Decoding
Decoded
-geometry
-attribute
20004
Rendering
20005
Feedback
Head orientation information, viewport information
Head orientation information, viewport information

FIG. 3

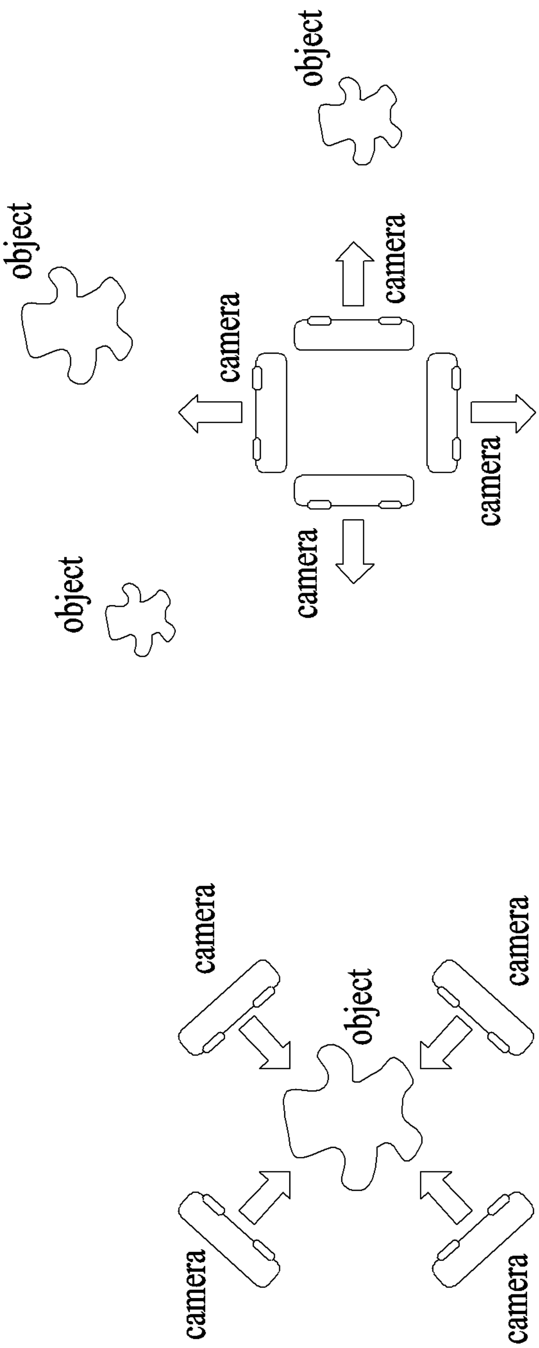
object
object
object
camera
camera
camera
camera
object
camera
camera
camera
camera

FIG. 4

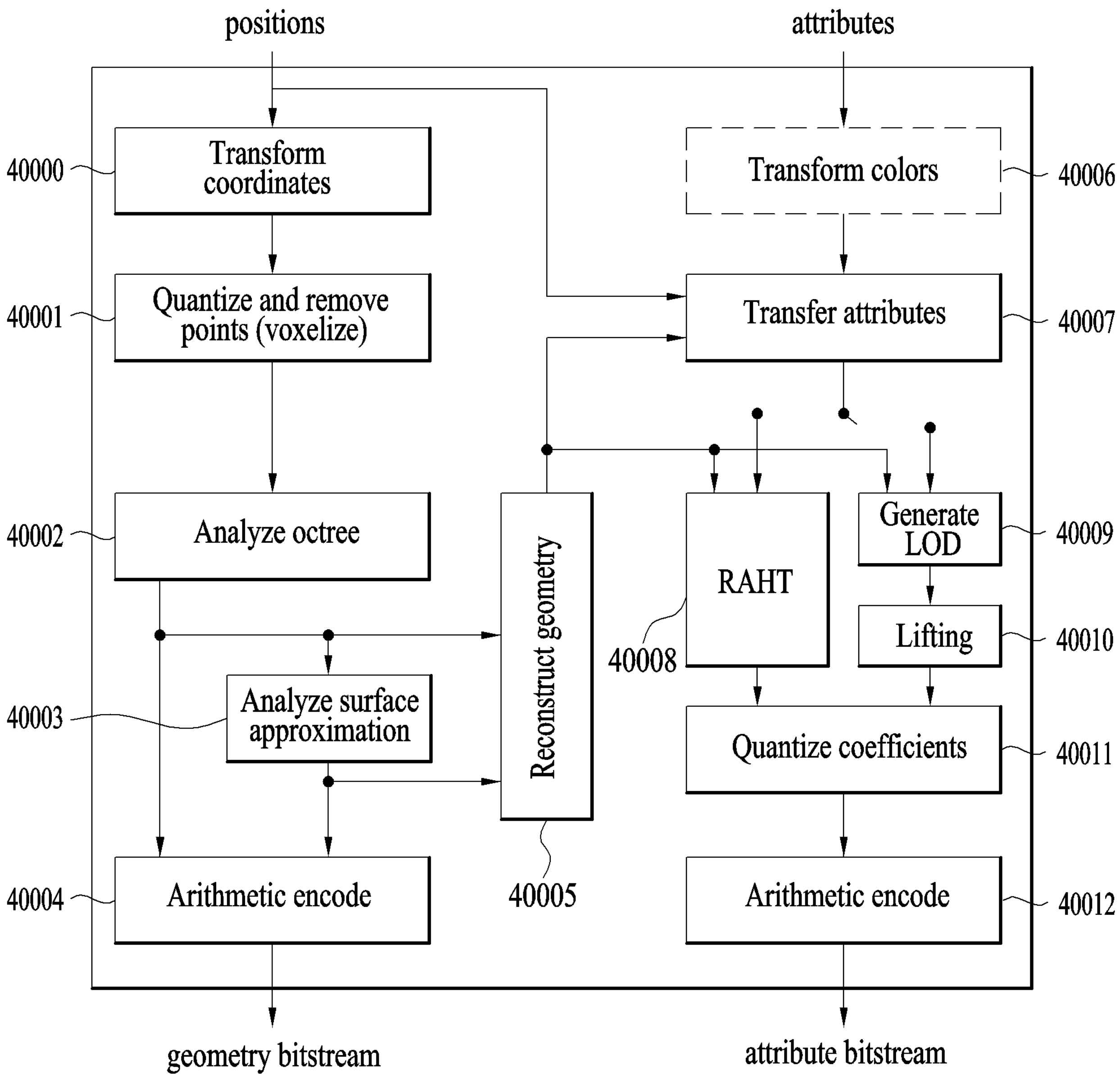
positions
attributes
Transform coordinates
40000
Transform colors
40006
Quantize and remove points (voxelize)
40001
Transfer attributes
40007
Analyze octree
40002
Reconstruct geometry
RAHT
Generate LOD
40009
40008
Lifting
40010
Analyze surface approximation
40003
Quantize coefficients
40011
Arithmetic encode
40004
40005
Arithmetic encode
40012
geometry bitstream
attribute bitstream

FIG. 5

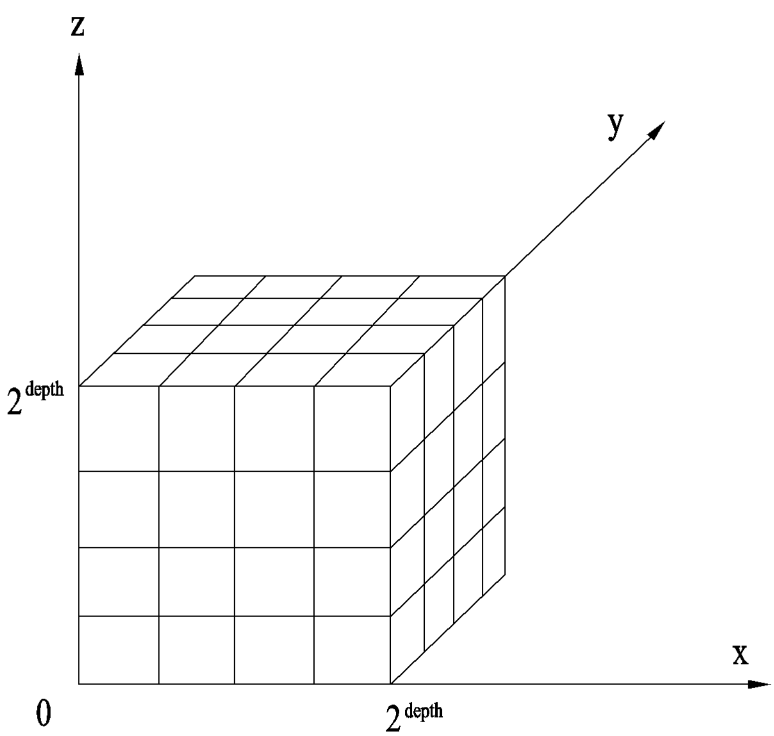

FIG. 6

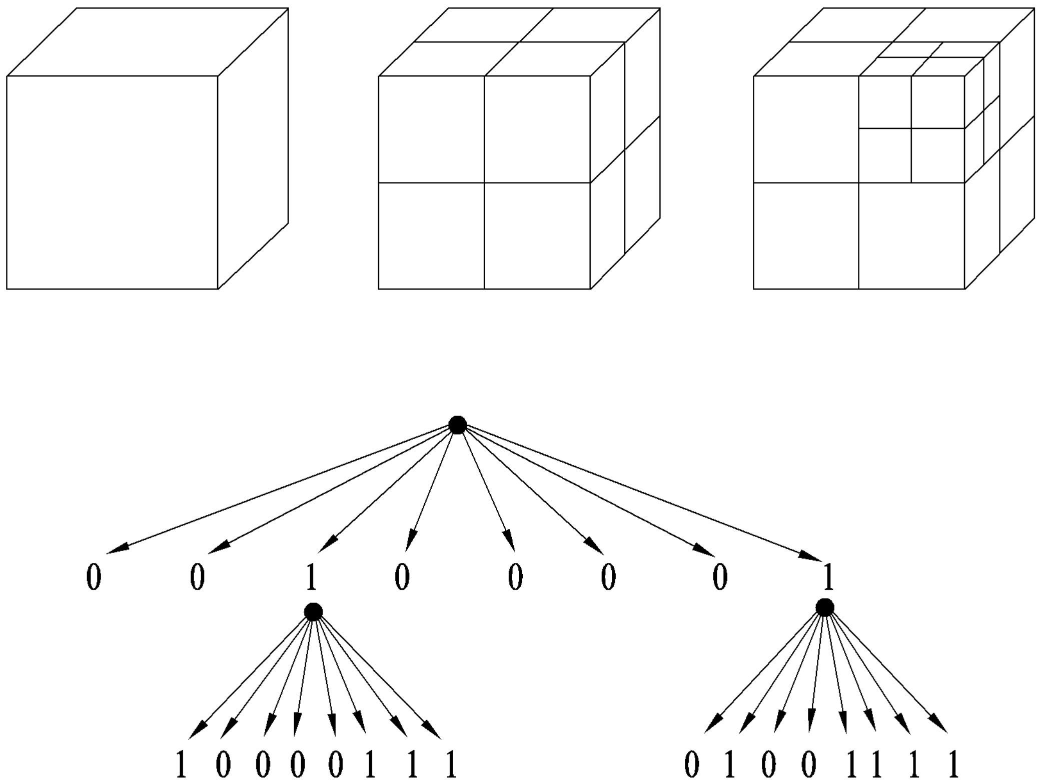

FIG. 7

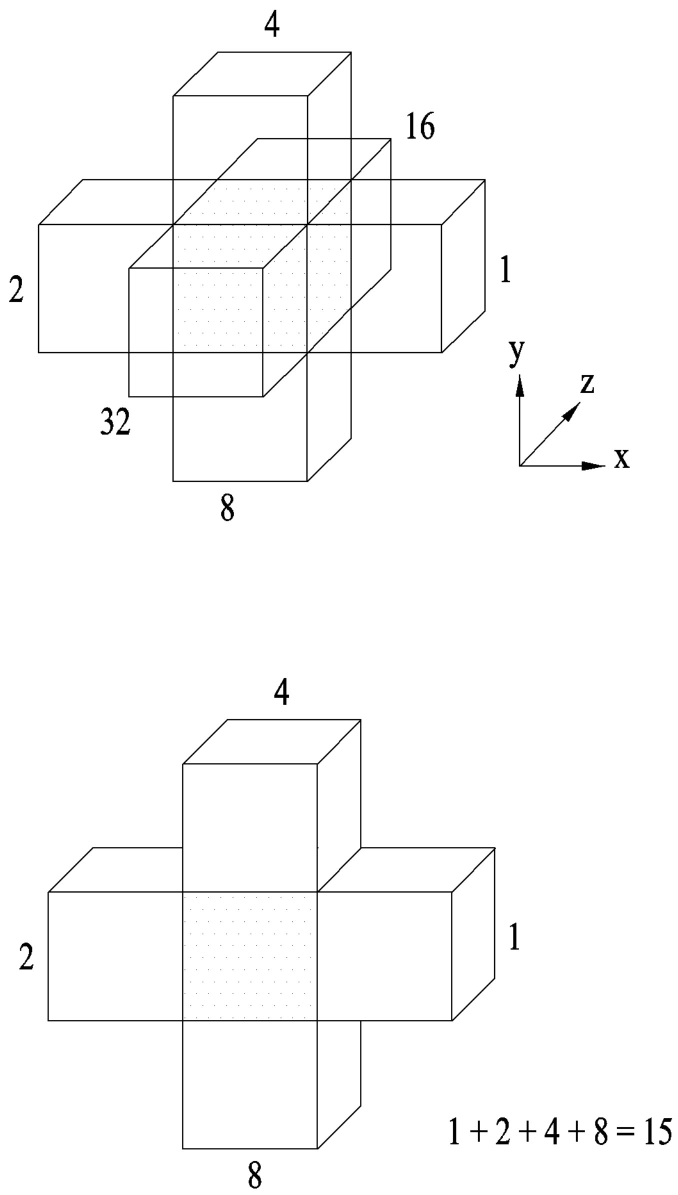

FIG. 8

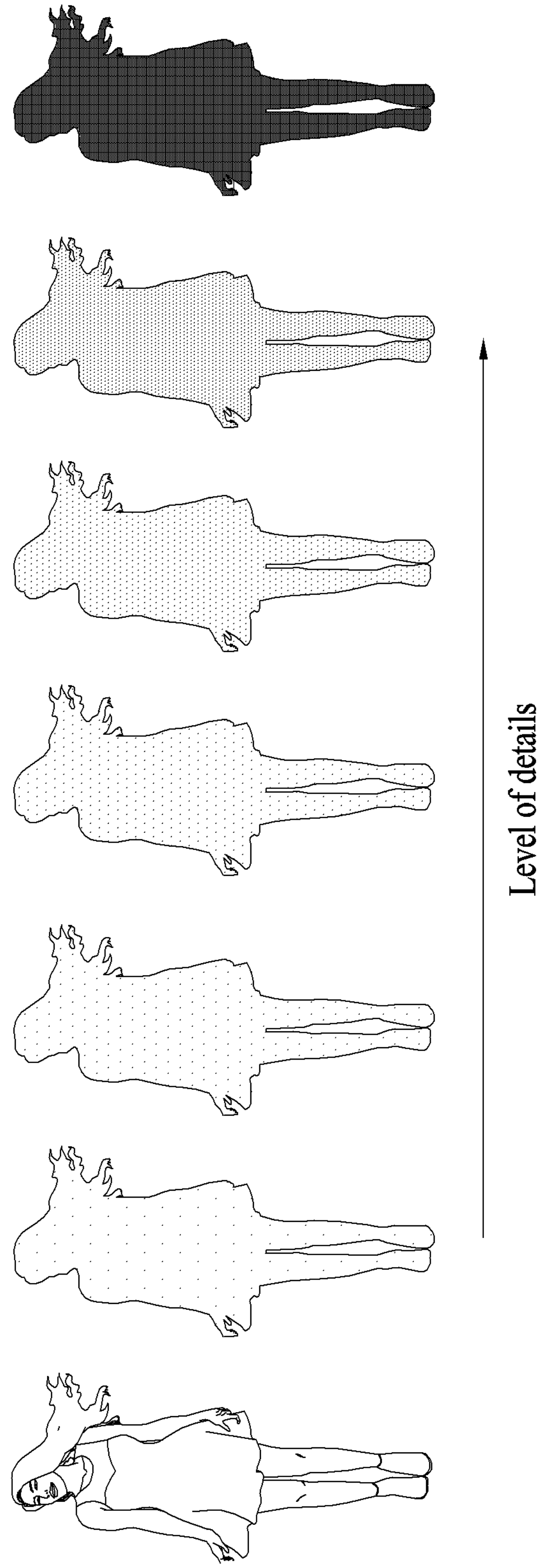

FIG. 9

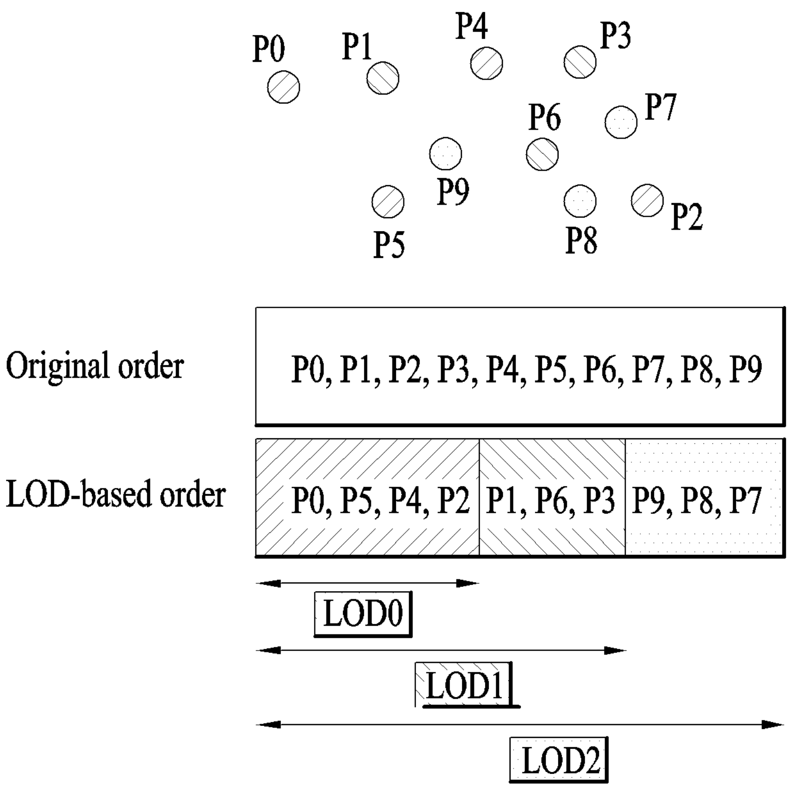
P0
P1
P4
P3
P6
P7
P9
P5
P8
P2
Original order
P0, P1, P2, P3, P4, P5, P6, P7, P8, P9
LOD-based order
P0, P5, P4, P2
P1, P6, P3
P9, P8, P7
LOD0
LOD1
LOD2

FIG. 10

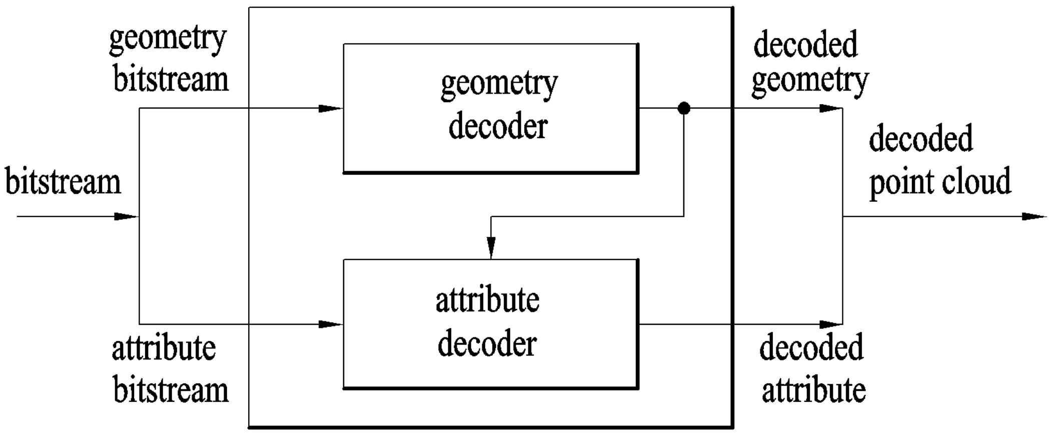
geometry
bitstream
bitstream
attribute
bitstream
geometry
decoder
attribute
decoder
decoded
geometry
decoded
point cloud
decoded
attribute

FIG. 11

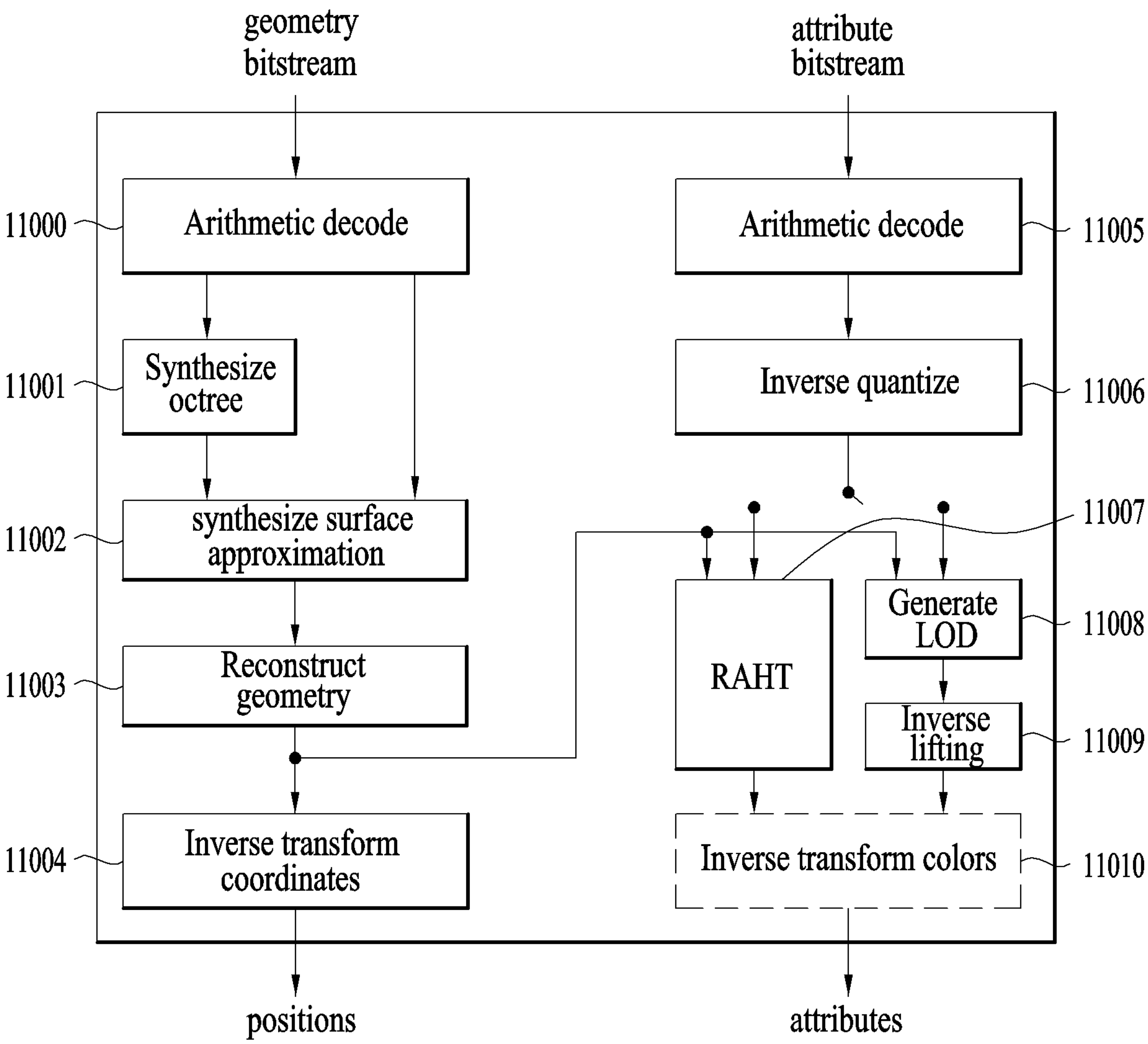
geometry bitstream
attribute bitstream
11000
Arithmetic decode
Arithmetic decode
11005
11001
Synthesize octree
Inverse quantize
11006
11007
11002
synthesize surface approximation
Generate LOD
11008
RAHT
11003
Reconstruct geometry
Inverse lifting
11009
11004
Inverse transform coordinates
Inverse transform colors
11010
positions
attributes

FIG. 12

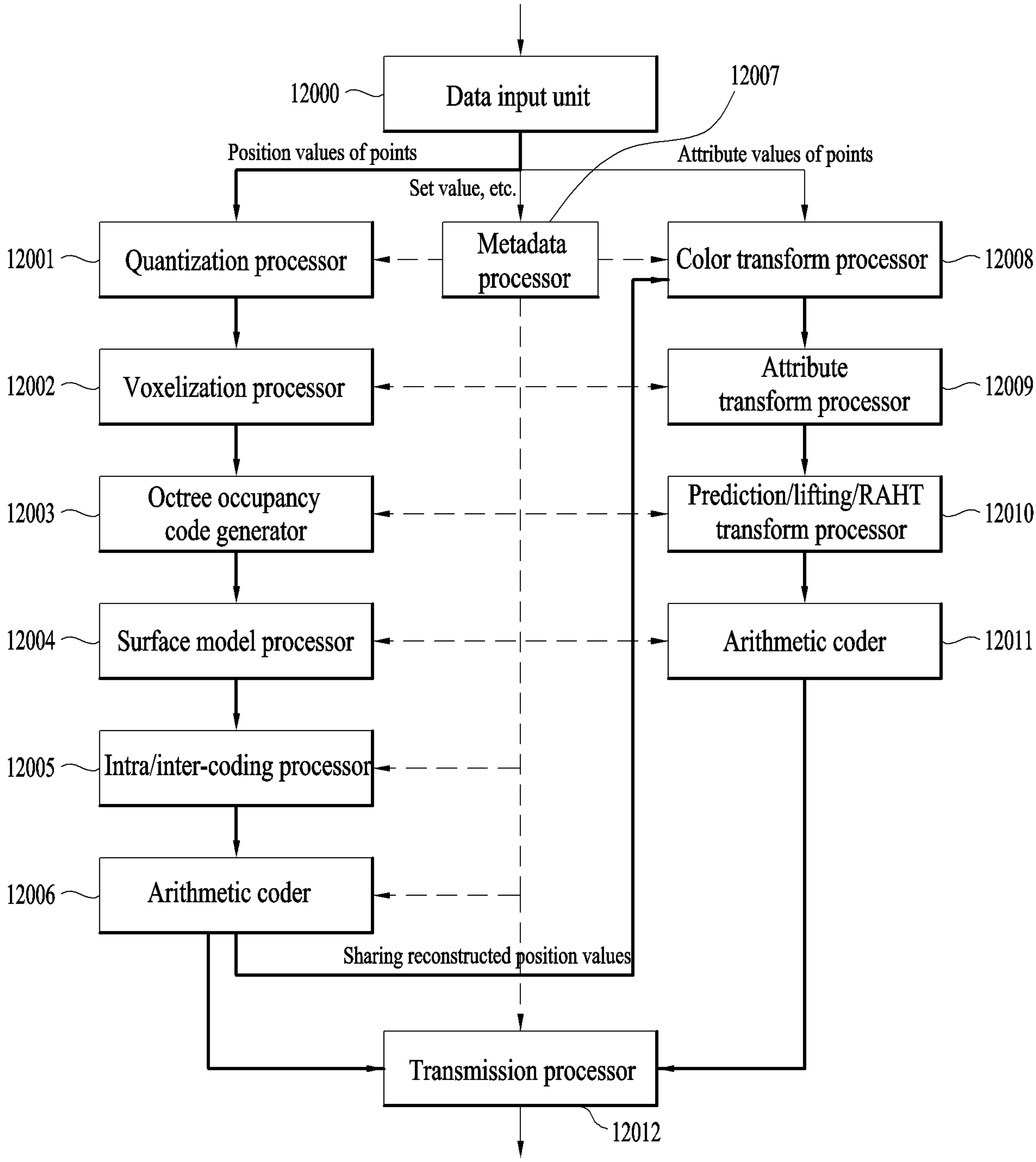
12000
Data input unit
12007
Position values of points
Attribute values of points
Set value, etc.
12001
Quantization processor
Metadata processor
Color transform processor
12008
12002
Voxelization processor
Attribute transform processor
12009
12003
Octree occupancy code generator
Prediction/lifting/RAHT transform processor
12010
12004
Surface model processor
Arithmetic coder
12011
12005
Intra/inter-coding processor
12006
Arithmetic coder
Sharing reconstructed position values
Transmission processor
12012

FIG. 13

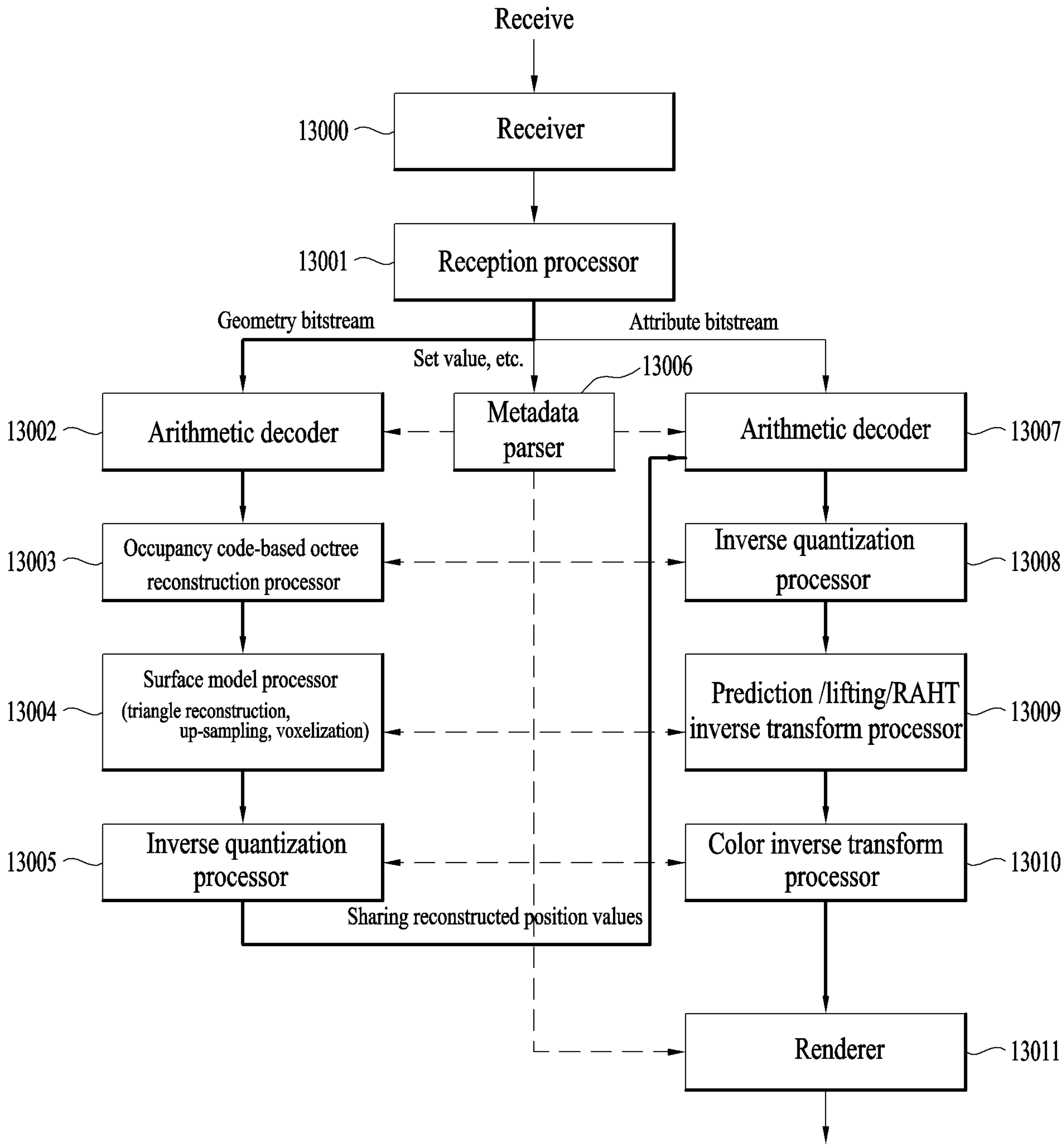
Receive
13000
Receiver
13001
Reception processor
Geometry bitstream
Attribute bitstream
Set value, etc.
13006
13002
Arithmetic decoder
Metadata parser
Arithmetic decoder
13007
13003
Occupancy code-based octree reconstruction processor
Inverse quantization processor
13008
13004
Surface model processor (triangle reconstruction, up-sampling, voxelization)
Prediction /lifting/RAHT inverse transform processor
13009
13005
Inverse quantization processor
Color inverse transform processor
13010
Sharing reconstructed position values
Renderer
13011

FIG. 14

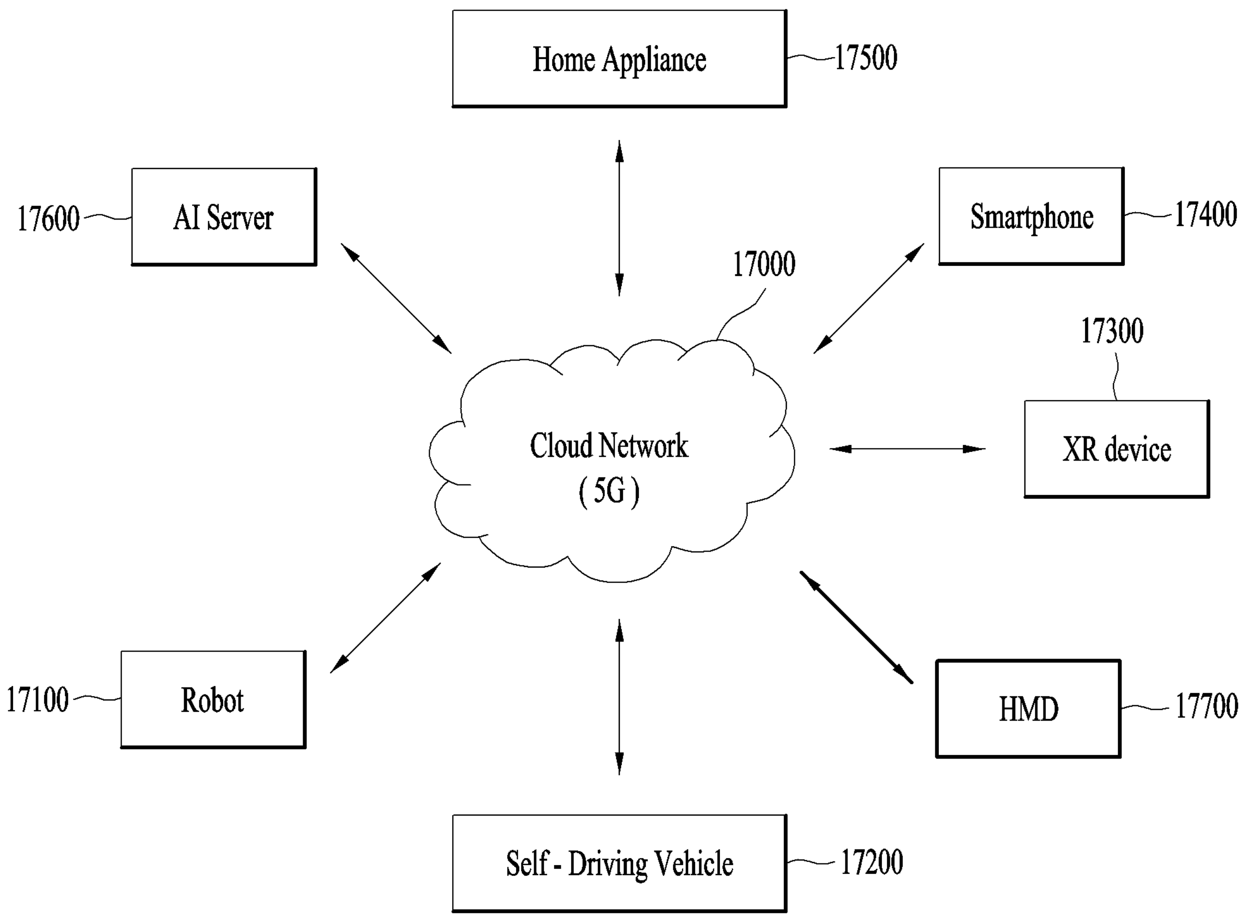
Home Appliance
17500
17600
AI Server
Smartphone
17400
17000
17300
Cloud Network
( 5G )
XR device
17100
Robot
HMD
17700
Self - Driving Vehicle
17200

FIG. 15

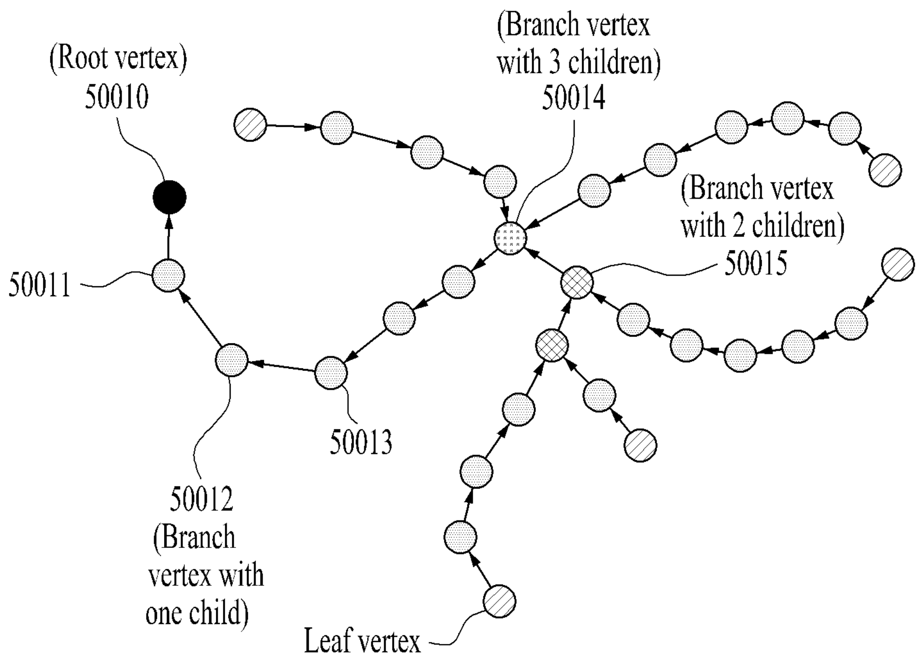
(Root vertex)
50010
(Branch vertex
with 3 children)
50014
(Branch vertex
with 2 children)
50015
50011
50013
50012
(Branch
vertex with
one child)
Leaf vertex

FIG. 16

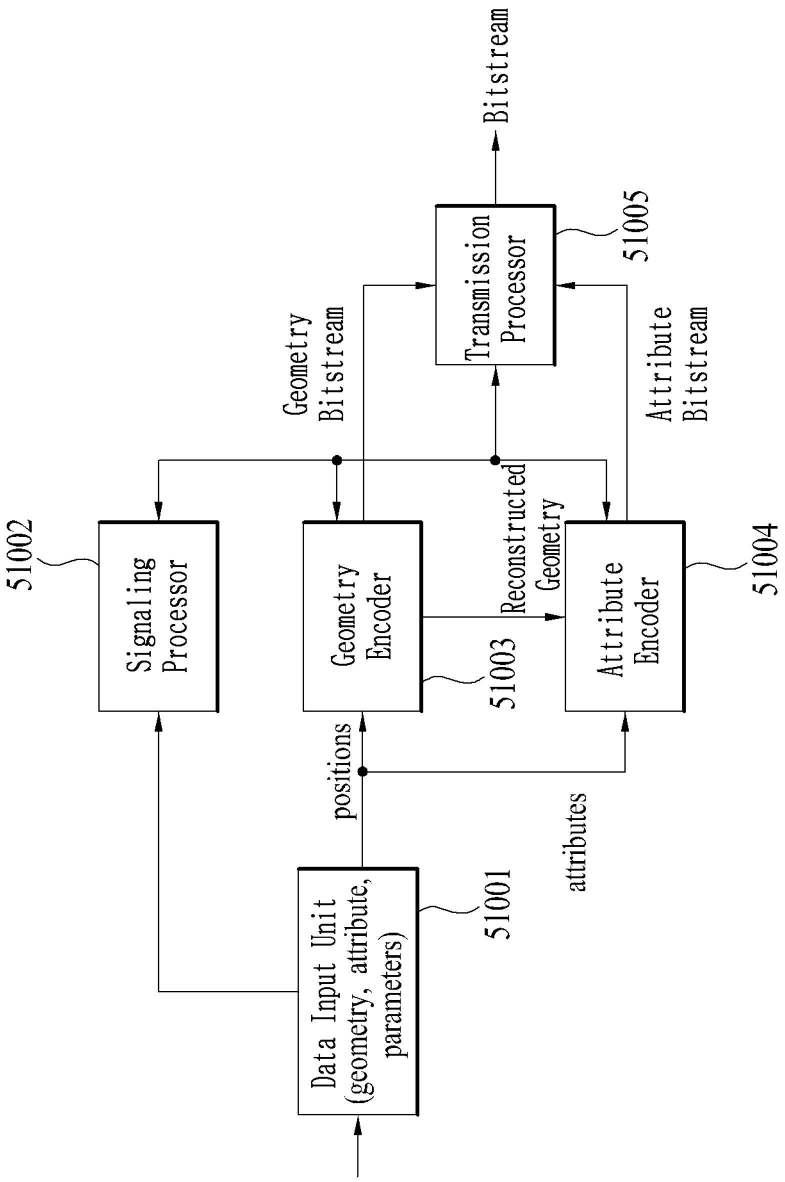
Data Input Unit (geometry, attribute, parameters)
51001
positions
attributes
Signaling Processor
51002
Geometry Encoder
51003
Attribute Encoder
51004
Reconstructed Geometry
Geometry Bitstream
Attribute Bitstream
Transmission Processor
51005
Bitstream

FIG. 17

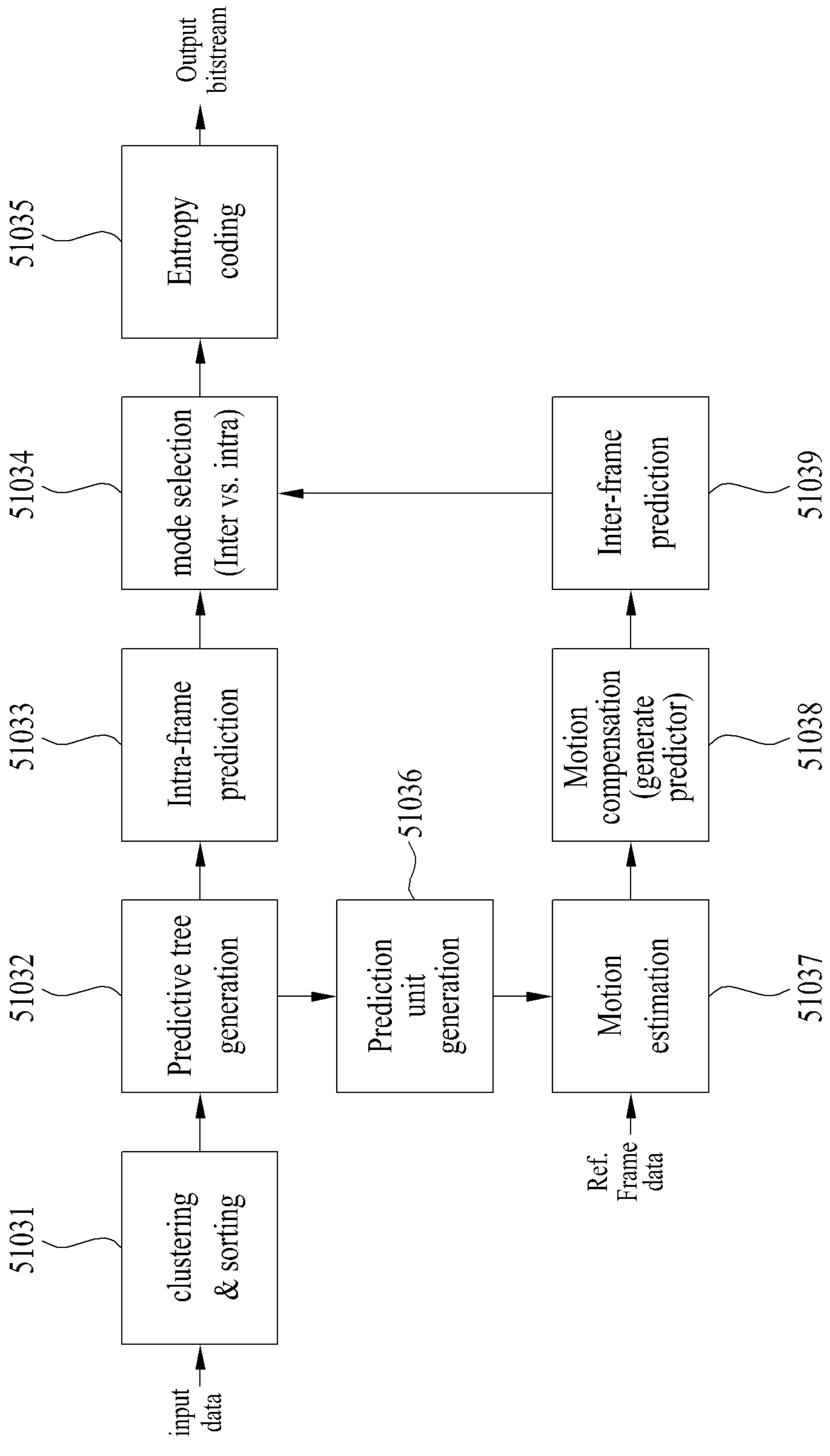
input data
clustering & sorting
51031
Predictive tree generation
51032
Intra-frame prediction
51033
mode selection (Inter vs. intra)
51034
Entropy coding
51035
Output bitstream
Prediction unit generation
51036
Ref. Frame data
Motion estimation
51037
Motion compensation (generate predictor)
51038
Inter-frame prediction
51039

FIG. 18

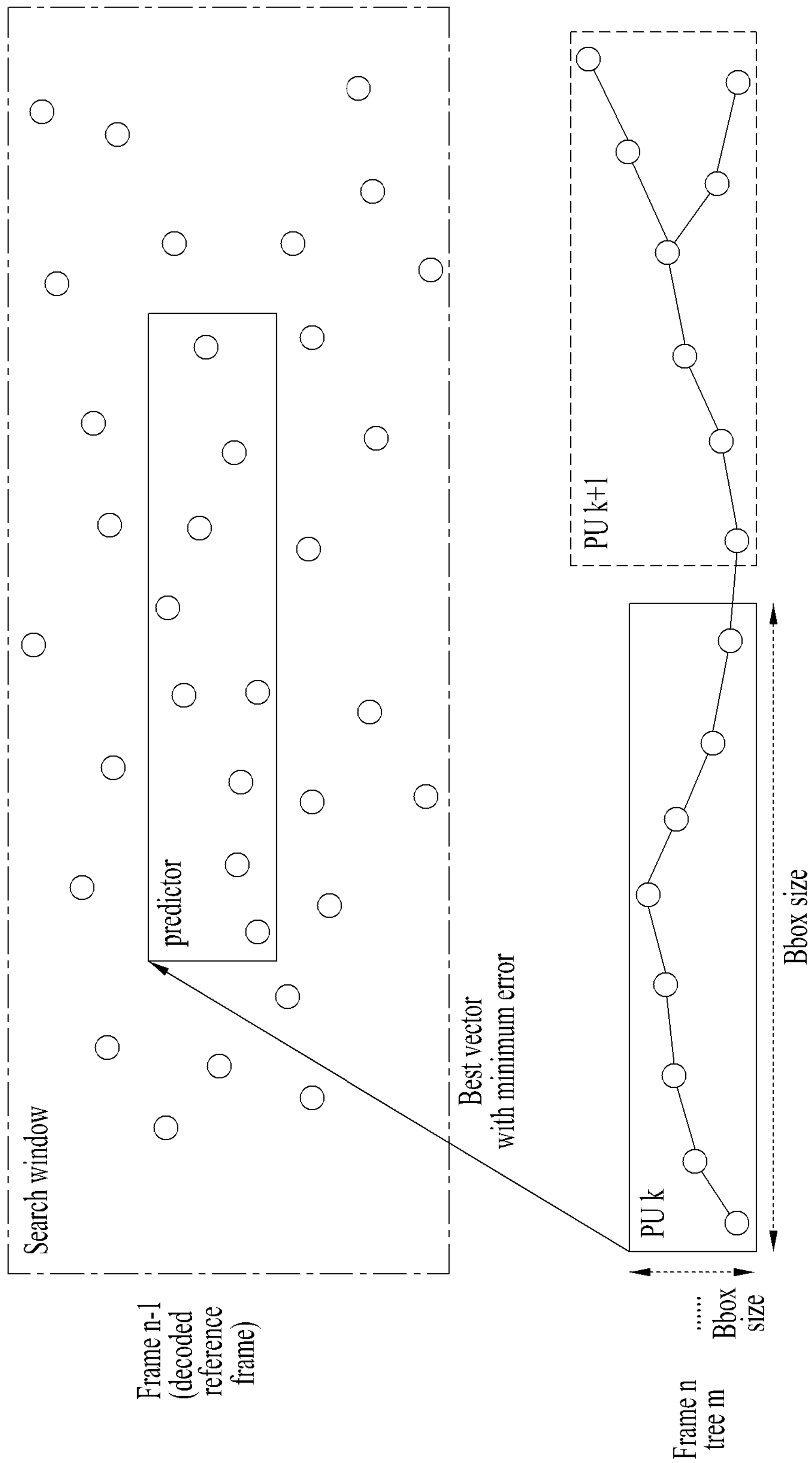
Search window
predictor
PU k+1
PU k
Best vector
with minimum error
Bbox size
Frame n-1
(decoded
reference
frame)
Frame n
tree m
......
Bbox
size

FIG. 19

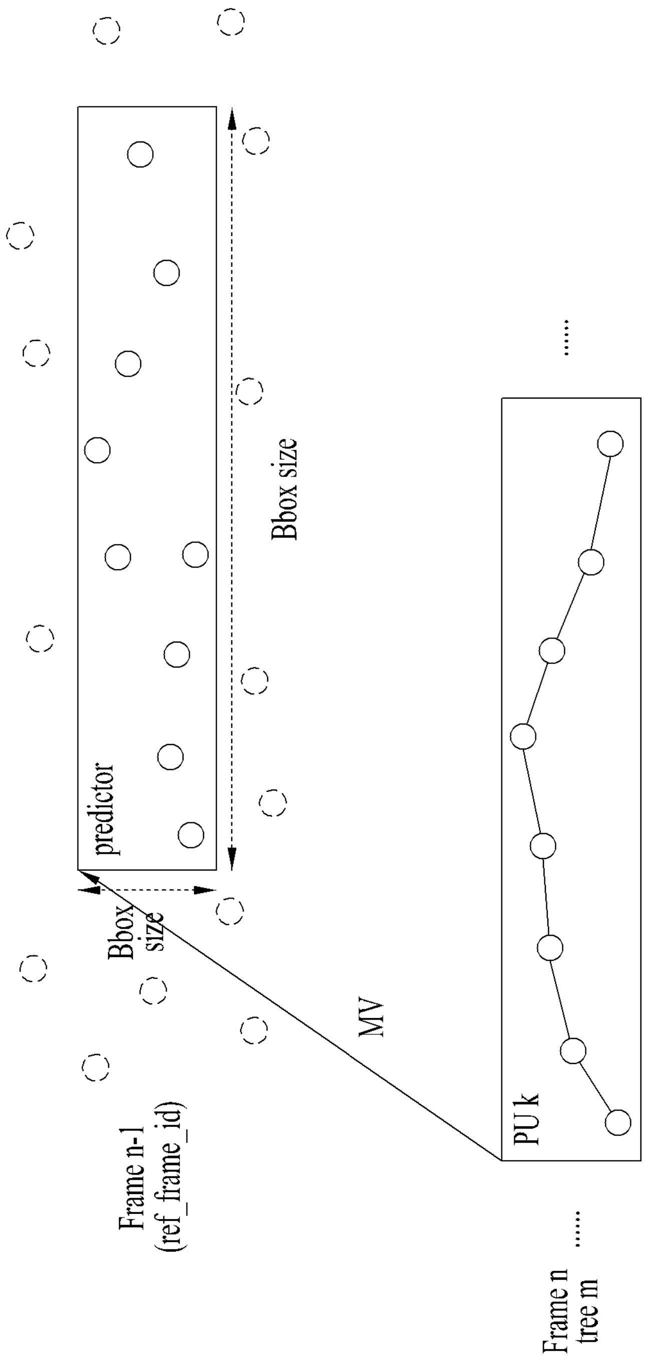

predictor
Bbox size
Bbox size
MV
PU k
Frame n-1 (ref_frame_id)
Frame n tree m
......
......

FIG. 20

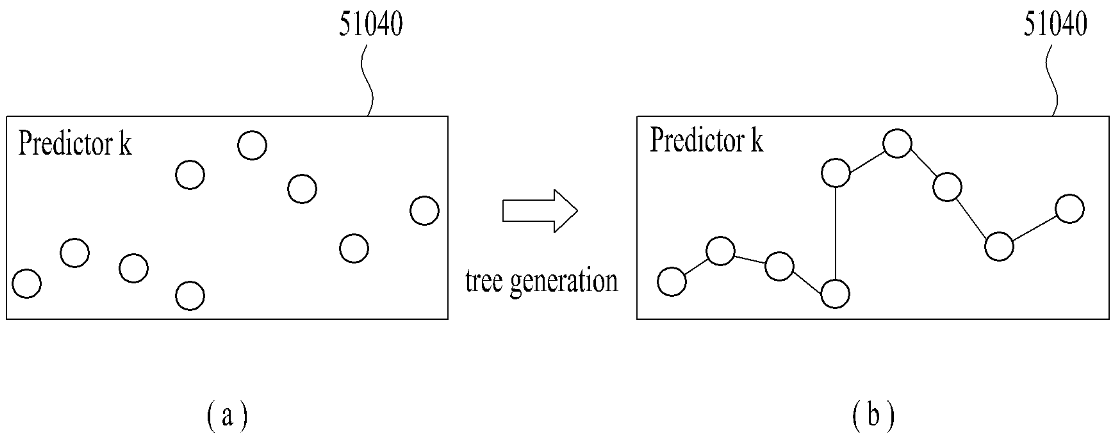

FIG. 21

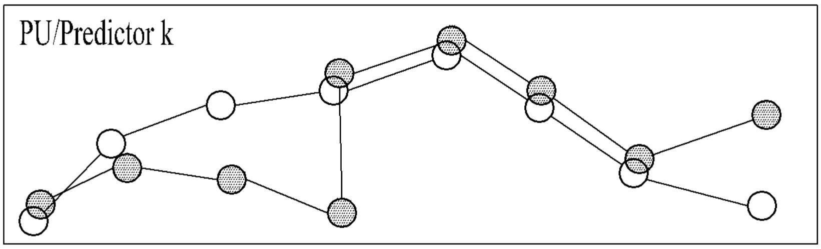

FIG. 22

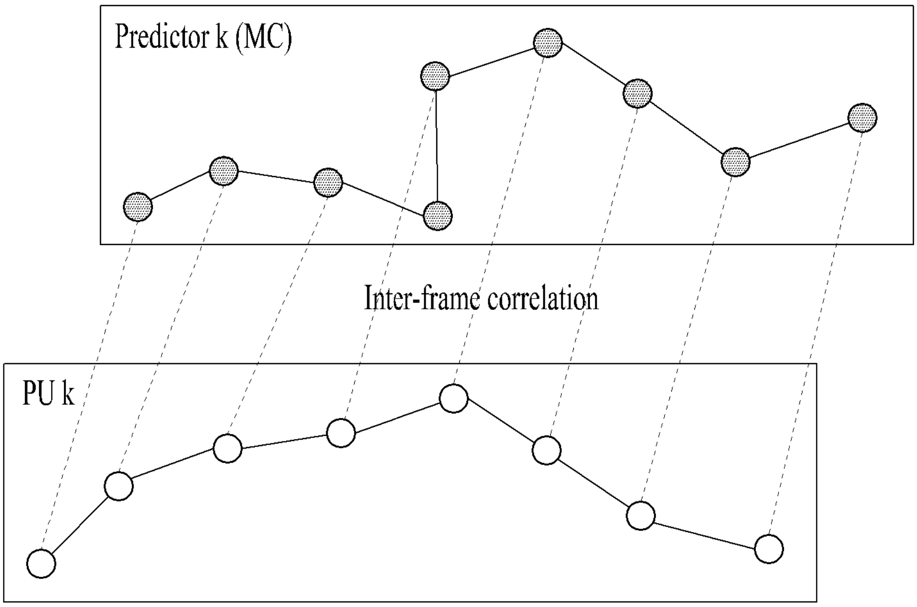

FIG. 23

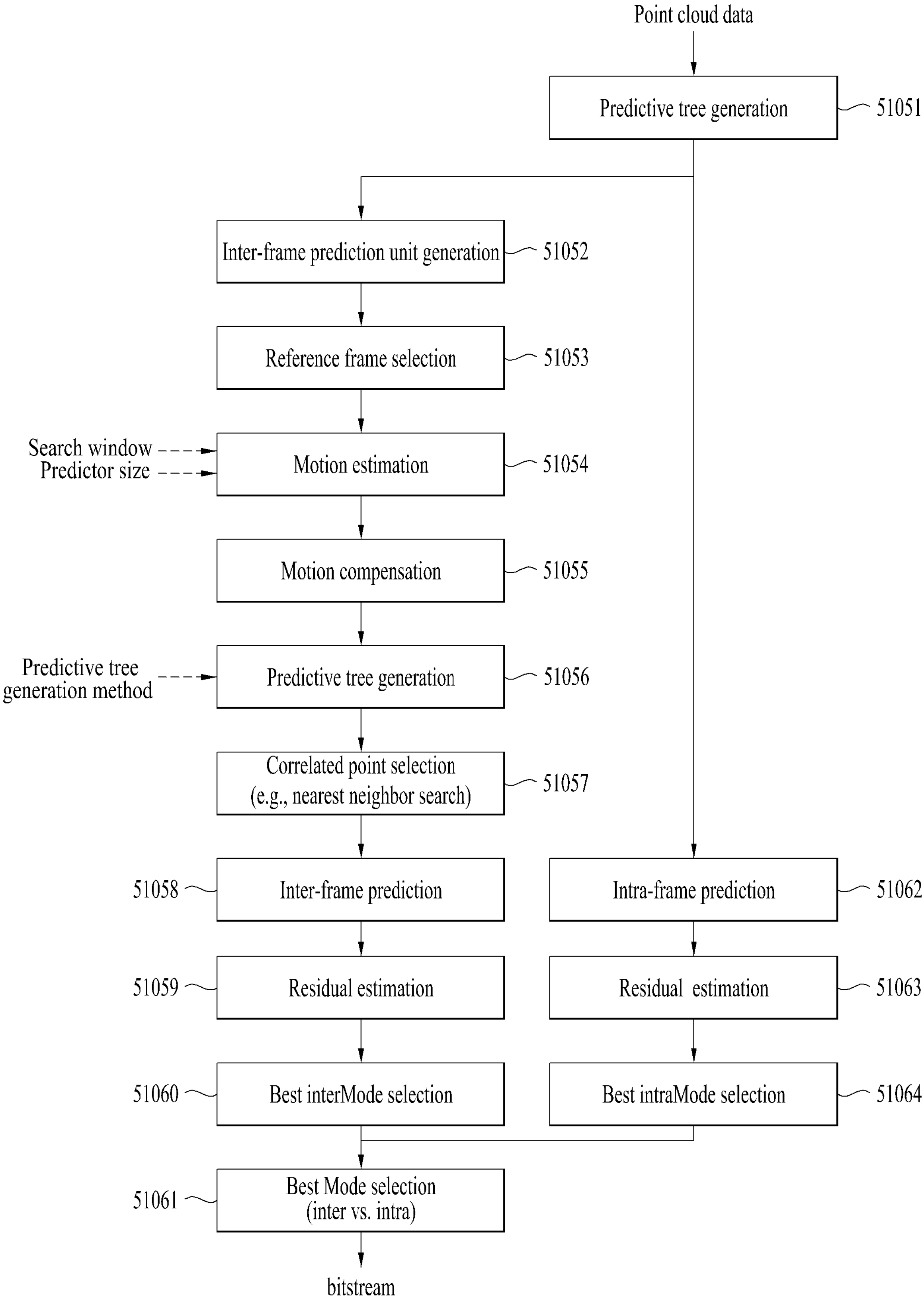
Point cloud data
Predictive tree generation
51051
Inter-frame prediction unit generation
51052
Reference frame selection
51053
Search window
Predictor size
Motion estimation
51054
Motion compensation
51055
Predictive tree generation method
Predictive tree generation
51056
Correlated point selection (e.g., nearest neighbor search)
51057
51058
Inter-frame prediction
Intra-frame prediction
51062
51059
Residual estimation
Residual estimation
51063
51060
Best interMode selection
Best intraMode selection
51064
51061
Best Mode selection (inter vs. intra)
bitstream

FIG. 24

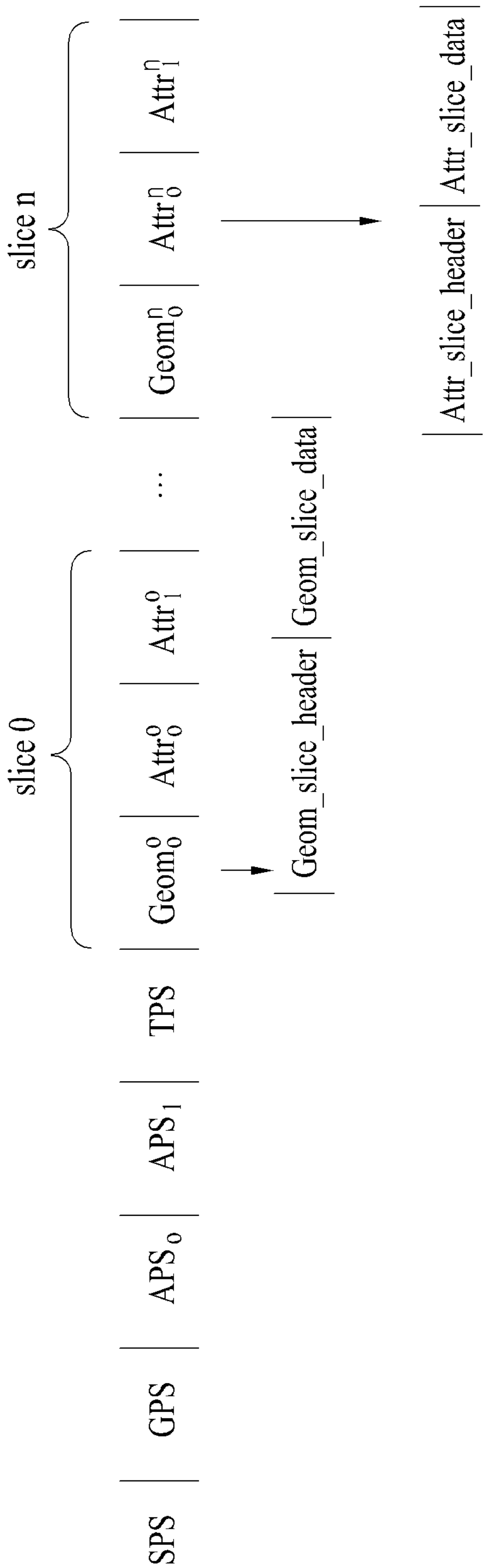
SPS
GPS
$APS_0$
$APS_1$
TPS
slice 0
$Geom^0_0$
$Attr^0_0$
$Attr^0_1$
...
slice n
$Geom^n_0$
$Attr^n_0$
$Attr^n_1$
Geom_slice_header
Geom_slice_data
Attr_slice_header
Attr_slice_data

FIG. 25

| geometry_data_unit ( ) { | Descriptor |
|---|---|
| geometry_data_unit_header( ) | |
| if( geom_tree_type == 0 ) { | |
| geometry_octree( ) | |
| } else /* geom_tree_type == 1 */ | |
| geometry_predtree_data( ) | |
| byte_alignment( ) | |
| geometry_data_unit_footer( ) | |
| } | |

FIG. 26

| geometry_data_unit_header( ) { | Descriptor |
|---|---|
| gsh_geometry_parameter_set_id | u(4) |
| gsh_reserved_zero_3bits | u(3) |
| gsh_slice_id | ue(v) |
| slice_tag | u(v) |
| frame_ctr_lsb | u(v) |
| if( !entropy_continuation_enabled_flag ) { | |
| gsh_entropy_continuation_flag | u(1) |
| if( gsh_entropy_continuation_flag ) | |
| gsh_prev_slice_id | ue(v) |
| } | |
| if( gps_gsh_box_log2_scale_present_flag ) | |
| gsh_box_log2_scale | ue(v) |
| gsh_box_origin_bits_minus1 | ue(v) |
| for( k = 0; k < 3; k++ ) | |
| gsh_box_origin_xyz[ k ] | u(v) |
| if( geom_slice_angular_origin_present_flag ) { | |
| gsh_angular_origin_bits_minus1 | ue(v) |
| for( k =0; k < 3; k++ ) | |
| gsh_angular_origin_xyz[ k ] | s(v) |
| } | |
| if( geom_tree_type = = 0 ) { | |
| geom_tree_depth_minus1 | ue(v) |
| if( geom_tree_coded_axis_list_present_flag ) | |
| for( lvl = 0; lvl <= geom_tree_depth_minus1; lvl++ ) | |
| for( k = 0; k < 3; k++ ) | |
| geom_tree_coded_axis_flag[ lvl ][ k ] | u(1) |
| gsh_entropy_stream_cnt_minus1 | ue(v) |
| } | |
| if( geom_scaling_enabled_flag ) { | |
| geom_slice_qp_offset | se(v) |
| if( geom_tree_type = = 1 ) | |
| geom_qp_offset_intvl_log2_delta | se(v) |
| } | |
| if( geom_tree_type = = 1 ) { | |
| for( k = 0; k < 3; k++ ) | |
| ptn_residual_abs_log2_bits[ k ] | u(3) |
| if( geometry_angular_enabled_flag ) | |
| ptn_radius_min_value | ue(v) |
| } | |
| byte_alignment( ) | |
| } | |

FIG. 27

| geometry_predtree_data( ) {<br>[Ed: add curDepth as parameter to move conformance to semantics?] | Descriptor |
|---|---|
| PtnNodeIdx = 0 | |
| do { | |
| geometry_predtree_node( PtnNodeIdx ) | |
| gpt_end_of_trees_flag | ae(v) |
| } while( !gpt_end_of_trees_flag ) | |
| } | |

# FIG. 28

| geometry_predtree_node( nodeIdx ) { | Descriptor |
|---|---|
| if( geom_scaling_enabled_flag && !( nodeIdx % PtnQpInterval ) ) { | |
| ptn_qp_offset_abs_gt0_flag | ae(v) |
| if( ptn_qp_offset_abs_gt0_flag ) { | |
| ptn_qp_offset_sign_flag | ae(v) |
| ptn_qp_offset_abs_minus1 | ae(v) |
| } | |
| } | |
| if( duplicate_points_enabled_flag ) { | |
| ptn_point_cnt_gt1_flag [Ed, dup points?] | ae(v) |
| if( ptn_point_cnt_gt1_flag ) | |
| ptn_point_cnt_minus2 | ae(v) |
| } | |
| ptn_child_cnt[ nodeIdx ] | ae(v) |
| inter_prediction_enabled_flag | u(1) |
| if ( inter_prediction_enabled_flag ) | |
| predtree_inter_prediction () | |
| else | |
| ptn_pred_mode[ nodeIdx ] | ae(v) |
| if( geometry_angular_enabled_flag ) { | |
| ptn_phi_mult_abs_gt0_flag | ae(v) |
| if( ptn_phi_mult_abs_gt0_flag ) { | |
| ptn_phi_mult_sign_flag | ae(v) |
| ptn_phi_mult_abs_gt1_flag | ae(v) |
| if( ptn_phi_mult_abs_gt1_flag ) | |
| ptn_phi_mult_abs_minus2 | ae(v) |
| if( ptn_phi_mult_abs_minus2 = = 7 ) | |
| ptn_phi_mult_abs_minus9 | ae(v) |
| } | |
| } | |

| | |
|---|---|
| numComp = geometry_angular_enabled_flag && !number_lasers_minus1 ? 2 : 3 | |
| for( k = 0; k < numComp; k++ ) { | |
| ptn_residual_abs_gt0_flag[ k ] | ae(v) |
| if( ptn_residual_abs_gt0_flag[ k ] ) { | |
| if( k \|\| ptn_pred_mode[ nodeIdx ] ) | |
| ptn_residual_sign_flag[ k ] | ae(v) |
| ptn_residual_abs_log2[ k ] | ae(v) |
| ptn_residual_abs_remaining[ k ] | ae(v) |
| } | |
| } | |
| if( geometry_angular_enabled_flag ) | |
| for( k = 0; k < 3; k++ ) { | |
| ptn_sec_residual_abs_gt0_flag[ k ] | ae(v) |
| if( ptn_sec_residual_abs_gt0_flag[ k ] ) { | |
| ptn_sec_residual_sign_flag[ k ] | ae(v) |
| ptn_sec_residual_abs_gt1_flag[ k ] | ae(v) |
| if( ptn_sec_residual_abs_gt1_flag[ k ] ) | |
| ptn_sec_residual_abs_minus2[ k ] | ae(v) |
| } | |
| } | |
| for( i = 0; i < ptn_child_cnt[ nodeIdx ]; i++) | |
| geometry_predtree_node( ++PtnNodeIdx ) | |
| } | |

FIG. 29

| predtree_inter_prediction ( ) { | Descriptor |
|---|---|
| ref_frame_id | u(8) |
| for( i = 0; i < 3; i++ ) { | |
| motion_vector[i] | u(8) |
| predictor_bbox[i] | u(8) |
| } | |
| predictor_coordinate_type | u(8) |
| predictor_predtree_generation_type | u(8) |
| correlated_point_index | u(8) |
| interMode | u(8) |
| coeff | u(8) |
| } | |

FIG. 30

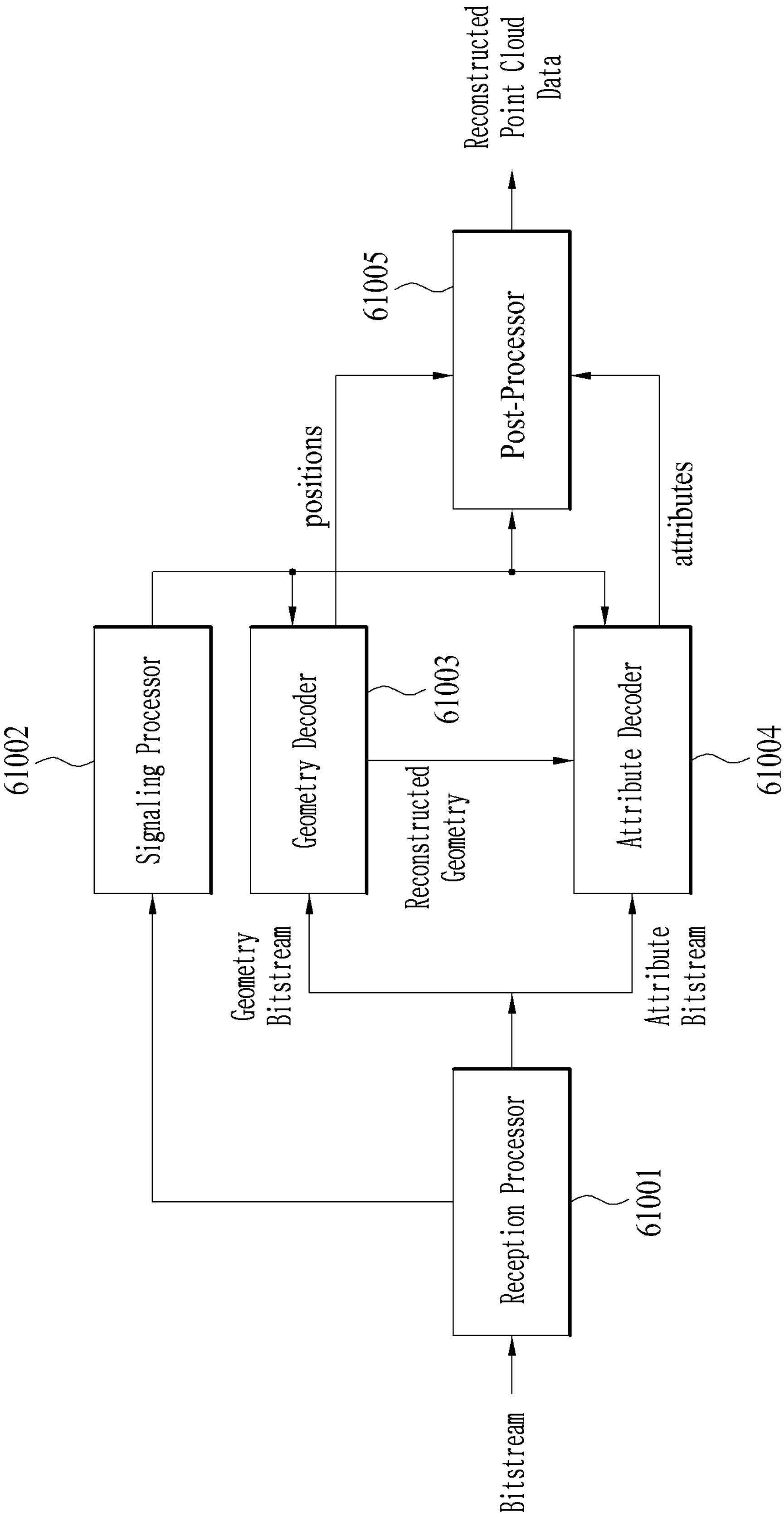
Bitstream
Reception Processor
61001
Geometry Bitstream
Attribute Bitstream
Signaling Processor
61002
Geometry Decoder
61003
Reconstructed Geometry
Attribute Decoder
61004
positions
attributes
Post-Processor
61005
Reconstructed Point Cloud Data

FIG. 31

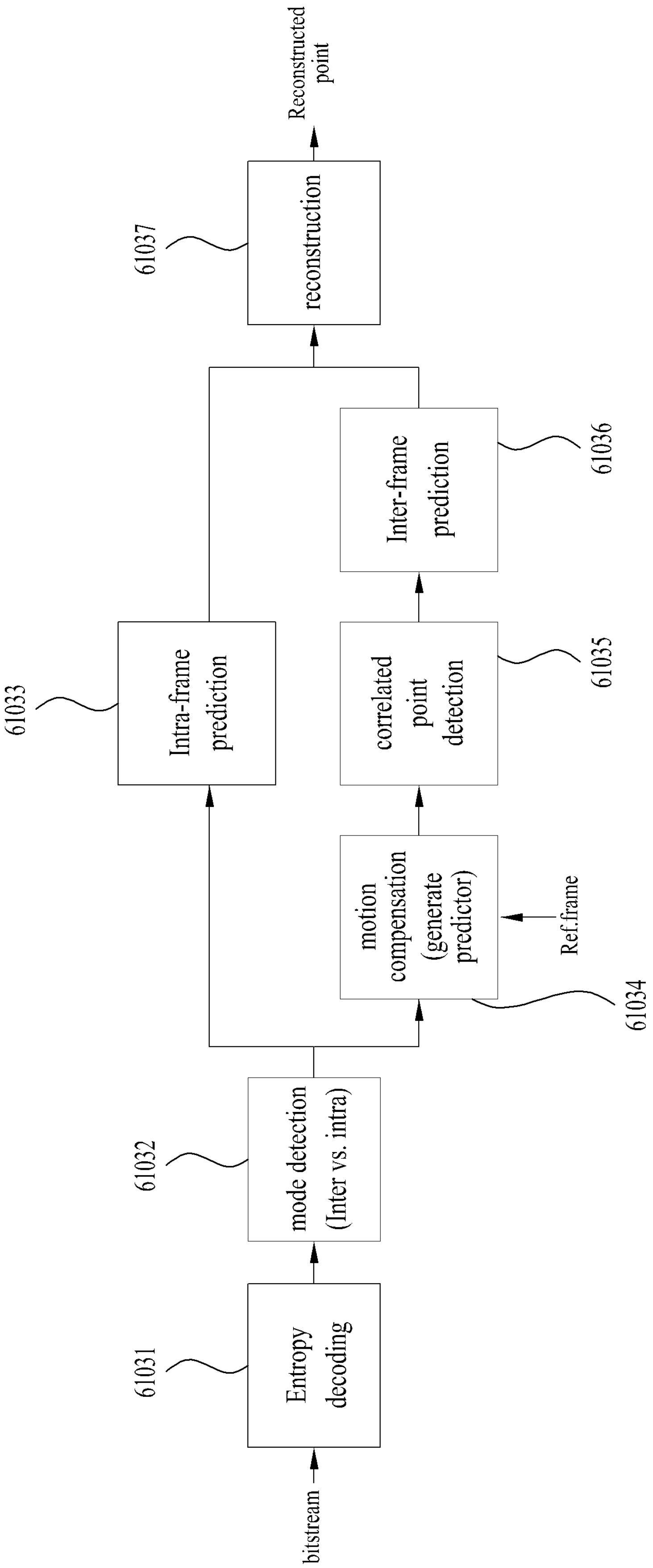
bitstream
Entropy decoding
61031
mode detection (Inter vs. intra)
61032
Intra-frame prediction
61033
motion compensation (generate predictor)
61034
Ref.frame
correlated point detection
61035
Inter-frame prediction
61036
reconstruction
61037
Reconstructed point

FIG. 32

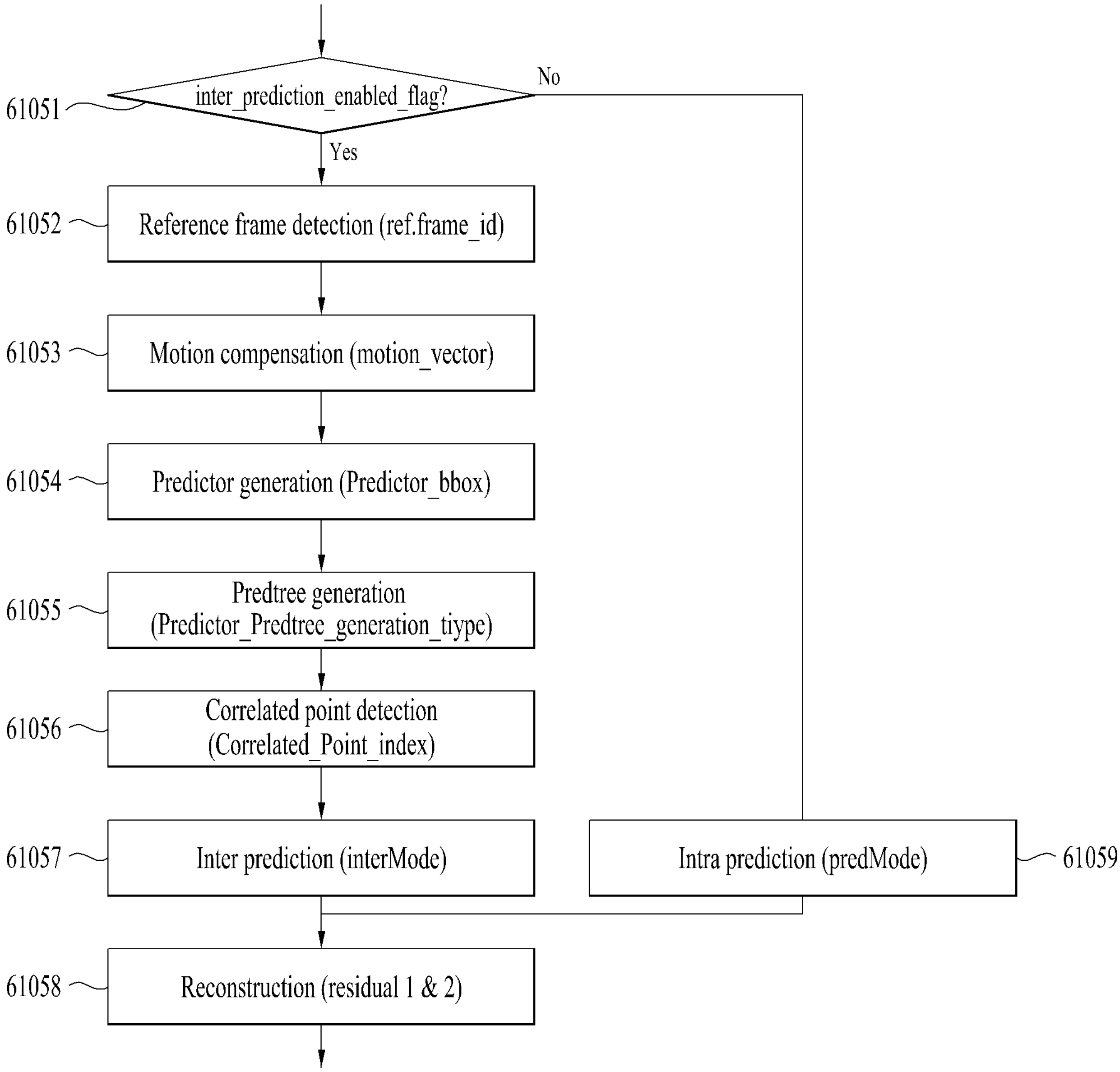
inter_prediction_enabled_flag?
No
Yes
61051
Reference frame detection (ref.frame_id)
61052
Motion compensation (motion_vector)
61053
Predictor generation (Predictor_bbox)
61054
Predtree generation
(Predictor_Predtree_generation_tiype)
61055
Correlated point detection
(Correlated_Point_index)
61056
Inter prediction (interMode)
61057
Intra prediction (predMode)
61059
Reconstruction (residual 1 & 2)
61058

FIG. 33

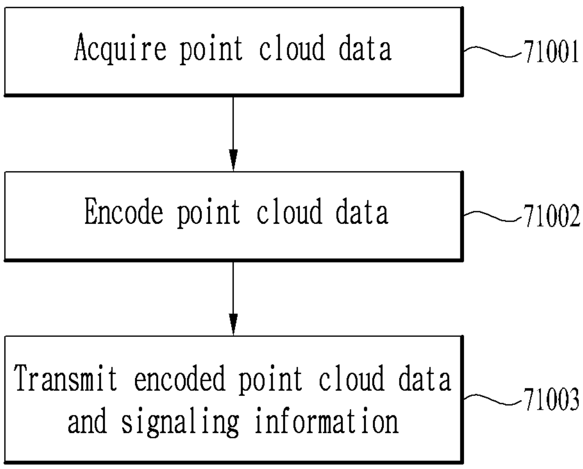
Acquire point cloud data
71001
Encode point cloud data
71002
Transmit encoded point cloud data and signaling information
71003

FIG. 34

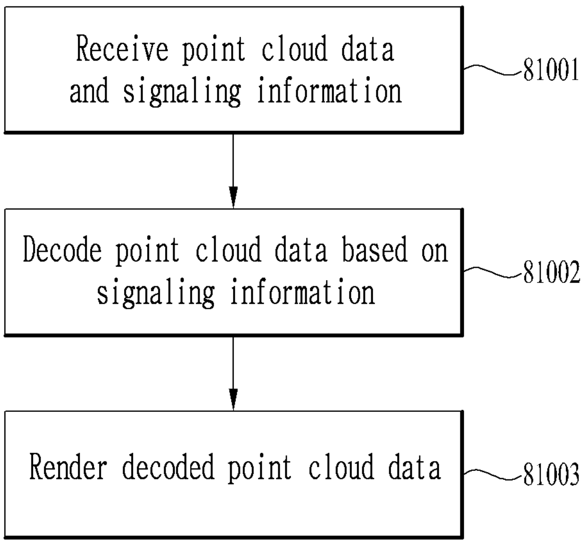
Receive point cloud data and signaling information
81001
Decode point cloud data based on signaling information
81002
Render decoded point cloud data
81003

**INTERNATIONAL SEARCH REPORT**

International application No. **PCT/KR2022/003206**

**A. CLASSIFICATION OF SUBJECT MATTER**

**H04N 19/597**(2014.01)i; **H04N 19/513**(2014.01)i; **H04N 19/139**(2014.01)i; **H04N 19/96**(2014.01)i; **G06T 9/40**(2006.01)i

According to International Patent Classification (IPC) or to both national classification and IPC

**B. FIELDS SEARCHED**

Minimum documentation searched (classification system followed by classification symbols)

H04N 19/597(2014.01); G06T 3/00(2006.01); G06T 9/00(2006.01); G06T 9/40(2006.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 지오메트리(geometry), 어트리뷰트(attribute), 시그널링(signaling), 예측 트리(predictive tree), 참조 프레임(reference frame), 움직임(motion), 인터(inter), 잔여(residual)

**C. DOCUMENTS CONSIDERED TO BE RELEVANT**

| Category* | Citation of document, with indication, where appropriate, of the relevant passages | Relevant to claim No. |
|---|---|---|
| A | G-PCC codec description v9. INTERNATIONAL ORGANIZATION FOR STANDARDIZATION ISO/IEC JTC1/SC9/WG7, N0011. 31 December 2020 [Retrieved on 18 May 2022]. Retrieved from <URL: https://www.mpeg.org/wp-content/uploads/mpeg_meetings/132_OnLine/w19620.zip>. See sections 2, 3.4-3.4.1 and 3.15.8; and figures 1 and 67. | 1-15 |
| A | US 2020-0258262 A1 (INTERDIGITAL VC HOLDINGS, INC.) 13 August 2020 (2020-08-13) See paragraphs [0015]-[0029] and [0061]; claims 23-27; and figure 2. | 1-15 |
| A | WO 2020-190093 A1 (LG ELECTRONICS INC.) 24 September 2020 (2020-09-24) See paragraphs [0009]-[0028]; and claims 1-6. | 1-15 |
| A | WO 2020-146341 A1 (FUTUREWEI TECHNOLOGIES, INC.) 16 July 2020 (2020-07-16) See paragraphs [0004]-[0033]; and claims 1-10. | 1-15 |
| A | WO 2020-189895 A1 (LG ELECTRONICS INC.) 24 September 2020 (2020-09-24) See paragraphs [0007]-[0008]; and claims 1-5. | 1-15 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 June 2022** | **17 June 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2022/003206**

| Patent document cited in search report | Publication date (day/month/year) | Patent family member(s) | Publication date (day/month/year) |
|---|---|---|---|
| US 2020-0258262 A1 | 13 August 2020 | CN 111386551 A | 07 July 2020 |
| | | EP 3474231 A1 | 24 April 2019 |
| | | EP 3474232 A1 | 24 April 2019 |
| | | EP 3698328 A1 | 26 August 2020 |
| | | WO 2019-079093 A1 | 25 April 2019 |
| WO 2020-190093 A1 | 24 September 2020 | CN 113615204 A | 05 November 2021 |
| | | EP 3944625 A1 | 26 January 2022 |
| | | KR 10-2021-0134049 A | 08 November 2021 |
| WO 2020-146341 A1 | 16 July 2020 | None | |
| WO 2020-189895 A1 | 24 September 2020 | CN 113615207 A | 05 November 2021 |
| | | EP 3926960 A1 | 22 December 2021 |
| | | KR 10-2021-0135325 A | 12 November 2021 |

Form PCT/ISA/210 (patent family annex) (July 2019)